# EUROPÄISCHE PATENTSCHRIFT

(11) **EP 0 386 214 B1**
(45) Veröffentlichungstag und Bekanntmachung des Hinweises auf die Patenterteilung: **24.03.1993**
(21) Anmeldenummer: 89910071.3
(22) Anmeldetag: 09.09.1989
(51) Int. Cl.: F16H 47/04

(54) **STUFENLOSES HYDROSTATISCH-MECHANISCHES VERZWEIGUNGSGETRIEBE, INSBESONDERE FÜR KRAFTFAHRZEUGE**
HYDROMECHANICALLY INFINITELY VARIABLE TRANSMISSION WITH POWER SPLITTING, IN PARTICULAR FOR MOTOR VEHICLES
TRANSMISSION HYDROMECANIQUE A VARIATION CONTINUE AVEC REPARTITION DE PUISSANCE, NOTAMMENT POUR VEHICULES A MOTEUR

(30) Priorität: 10.09.1988 DE 3830846; 02.09.1989 DE 3929209
(43) Veröffentlichungstag der Anmeldung: 12.09.1990
(73) Patentinhaber: Meyerle, Michael, D-88074 Meckenbeuren (DE)
(72) Erfinder: Meyerle, Michael, D-88074 Meckenbeuren (DE)
(86) Internationale Anmeldenummer: DE8900586
(87) Internationale Veröffentlichungsnummer: WO9002893

(56) Entgegenhaltungen:
- WO-A-89/09899
- DE-A- 3 342 047
- DE-A- 3 609 907
- DE-A- 3 700 813
- DE-A- 3 709 191
- FR-A- 2 412 760
- FR-A- 2 412 761
- US-A- 4 164 155

## Beschreibung

Die Erfindung bezieht sich auf ein stufenloses hydrostatischmechanisches Verzweigungsgetriebe,insbesondere für Kraftfahrzeuge nach dem Oberbegriff der Ansprüche 1 bis 5.

Aus den deutschen Patentanmeldungen DE-A-37 09 191 und DE-A-33 42 047 sind hydrostatisch-mechanische Verzweigungsgetriebe mit vier und mehr Vorwärtsfahrbereichen bekannt. Diese Getriebe sind jedoch nicht voll-stufenlos, d.h. daß im Anfahrbereich bis zum Erreichen einer bestimmten Mindestgeschwindigkeit ein Übersetzungsloch besteht, das durch eine Reibkupplung überbrückt werden muß und besitzen nicht die alternative Lösung zur wahlweisen Ausbildung zum voll-stufenlosen Getriebe. Ein weiteres hydrostatisch-mecanisches Verzweigungsgetriebe ist aus der US-Patentschrift US-A-4,164,155 bekannt, das zwar vier Vorwärtsfahrbereiche besitzt, aber eine sehr begrenzte Ausnutzungsfähigkeit der Hydrostatelemente sowie eine ungenügende Anpassungsfähigkeit der Bereichsgrößen an spezifische Fahrzeugforderungen besitzt. Die Hydrostatverstellung ist bei diesem Getriebe nur bis zu 67 % im negativen Verstellbereich ausnutzbar. Der vierte Fahrbereich ist außerdem zu kurz, um die eigentliche Aufgabe eines vierten Fahrbereiches, nämlich die Größe der Hydrostateinheiten in ausreichendem Maße zu reduzieren sowie den vierten Fahrbereich als Over-drive-Bereich möglichst umfangreich zu nutzen, zu erfüllen.

Der Erfindung liegt die Aufgabe zugrunde, ein hydrostatischmechanisches Verzweigungsgetriebe nach dem Oberbegriff der Ansprüche 1 bis 6, 12 und 41 zu schaffen, das gegenüber den bekannten Systemen voll-stufenlos ausführbar ist und keine separate Anfahrkupplung erfordert oder/und alternativ anwendungsbezogen zu einem nicht voll-stufenlosen Getriebe abwandelbar ist. Das Getriebe soll mit sehr kleinen Hydrostateinheiten auskommen. Desweiteren soll eine weitgehende Anpaßbarkeit an verschiedene fahrzeugspezifische Bedingungen möglich sein, wobei auch unterschiedliche Vorwärts- und Rückwärtsbedingungen auf kosten- und bauraumgünstige Weise erfüllbar sind.

Die Aufgabe wird durch die in den Hauptansprüchen 1 bis 5 aufgeführten Merkmale gelöst. Weitere vorteilhafte Ausgestaltungen der Erfindung gehen aus den Unteransprüchen und der nachfolgenden Beschreibung hervor.

Die Erfindung wird in Ausführungsbeispielen anhand von Schema-Zeichnungen erläutert. Es zeigen:
- Figur 1: ein erstes Ausführungsbeispiel mit vier Vorwärtsfahrbereichen und einem Rückwärtsbereich;
- Figur 2: ein weiteres Ausführungsbeispiel mit vier Vorwärtsfahrbereichen und einem Rückwärtsbereich;
- Figur 3: eine Ausführung mit fünf Vorwärtsfahrbereichen und drei Rückwärtsfahrbereichen;
- Figur 3a: eine Ausführung mit vier hydrostatisch-mechanischen Vorwärts- und zwei hydrostatisch-mechanischen Rückwärtsbereichen;
- Figur 4: eine Ausführung mit fünf hydrostatisch-mechanischen Voräwrtsfahrbereichen;
- Figur 5: eine Ausführung mit fünf hydrostatisch-mechanischen Vorwärtsfahrbereichen und drei hydrostatisch-mechanischen Rückwärtsfahrbereichen;
- Figur 6: eine Getriebe-Ausführung mit vier hydrostatisch-mechanischen Vorwärtsfahrbereichen;
- Figur 7: eine Getriebe-Ausführung mit vier hydrostatisch-mechanischen Vorwärtsfahrbereichen und drei hydrostatisch-mechanischen Rückwärtsfahrbereichen;
- Figur 8: ein Ausführungsbeispiel des dritten Planetengetriebes 206;
- Figur 9 und 9a: ein Ausführungsbeispiel mit vier Vorwärtsfahrbereichen und zwei Rückwärtsfahrbereichen bestehend aus einem fünfwelligen Summierungsplanetengetriebe;
- Figur 10: ein weiteres Ausführungsbeispiel mit vier Vorwärtsfahrbereichen und zwei Rückwärtsfahrbereichen;
- Figur 11: eine Getriebeausführung mit zwei Summierungsplanetengetriebe-Einheiten;
- Figur 12: eine Getriebe-Ausführung mit fünf Vorwärtsfahrbereichen und zwei separat schaltbaren rein-hydrostatischen Rückfahrbereichen;
- Figur 13: eine Getriebeausführung mit fünf Vorwärtsfahrbereichen;
- Figur 14: ein Summierungsplanetengetriebe bestehend aus zwei Planetengetriebestufen;
- Figur 15: eine zweistufige Planetengetriebeeinheit 305;
- Figur 16, 16a, 16b: drei Ausführungsbeispiele des fünfwelligen Summierungsplanetengetriebes;
- Figur 17: eine dritte Planetengetriebeeinheit bestehend aus einer Planetengetriebestufe und mehreren Kupplungen zum Schalten von Voräwrts- und Rückwärtsfahrbetrieb als Alternative zu den Planetengetriebeeinheiten 106 und 206;
- Figur 18: eine Getriebeausführung mit vier Vorwärts- und zwei Rückwärtsbereichen;
- Figur 19: eine Getriebeausführung mit fünf Vorwärts- und drei Rückwärtsfahrbereichen.

Im Hinblick auf eine hohe Gesamtwirtschaftlichkeit für ein derartiges Produkt ist es wichtig, ein Getriebe-System zu schaffen, mit dem mehrere unterschiedliche Fahrzeugforderungen abgedeckt werden können. Die Grundbaueinheiten - Hydrostatpaket, Summierungsplanetengetriebeeinheit, Kupplungspaket und weitere Baugruppen - sollen als Grundbaueinheiten ausgebildet werden können, die für ein breites Anwendungsspektrum in verschiedenen Getriebekombinationen geeignet sind. Außerdem ist es wichtig, zwei bis drei Rückwärtsbereiche, z.B. für die Anwendung im Arbeitsmaschinenbereich im System integrieren zu können, um ein zusätzliches Wendegetriebe einzusparen.

Die Erfindung zeichnet sich dadurch aus, daß wenigstens vier Fahrbereiche schaltbar sind oder daß im Hinblick auf bestimmte Fahrzeugforderungen auf einfache Art ein Getriebe mit drei Vorwärtsfahrbereichen und vorzugsweise zwei Rückwärtsbereichen ausführbar ist. Dies wird gemäß der Erfindung damit erreicht, daß einem Summierungsplanetengetriebe mit wenigstens vier Wellen eine weitere oder mehrere Getriebeeinheiten zugeordnet sind, wobei die erste Welle und die zweite Welle des Summierungsplanetengetriebes Eingangswellen sind und die erste Welle mit der ersten Hydrostateinheit A verstellbaren Volumens und die zweite Welle mit der zweiten Hydrostateinheit B vorzugsweise konstanten Volumens verbunden ist und die dritte, vierte und gegebenenfalls fünfte Welle des Summierungsplanetengetriebes abwechselnd mit einer oder mehreren der zugeordneten Planetengetriebeeinheiten innerhalb der unteren Schaltbereiche über eine Zwischenwelle bzw. Kupplungswelle wechselweise verbindbar sind und daß eine oder mehrere, die aufsummierte Leistung führende Ausgangswelle des Summierungsplanetengetriebes in den höheren Schaltbereichen direkt mit der Abtriebswelle verbindbar sind. Die Bereichsschaltungen finden jeweils bei Synchronlauf bzw. im Synchronlaufbereich der zu schaltenden Kupplungselemente statt. Bei einigen der Ausführungsbeispiele wird der erste Fahrbereich rein-hydrostatisch übertragen, wobei das Summierungsplanetengetriebe unbelastet bleibt und die Leistung über ein oder mehrere zugeordnete Planetengetriebeeinheiten fließt. Das Drehzahlniveau aller Getriebeglieder ist relativ niedrig. Eine Drehzahlanpassungsstufe an der Getriebeausgangswelle ist nicht erforderlich, so daß die üblichen Achsübersetzungen der nachgeordneten Triebachse verwendbar sind. Die einzelnen Getriebeausführungen ermöglichen einen sehr hohen Over-drive-Bereich im Hinblick auf eine optimale Ausnutzbarkeit der Verbrauchsbestwerte des Antriebsmotors.

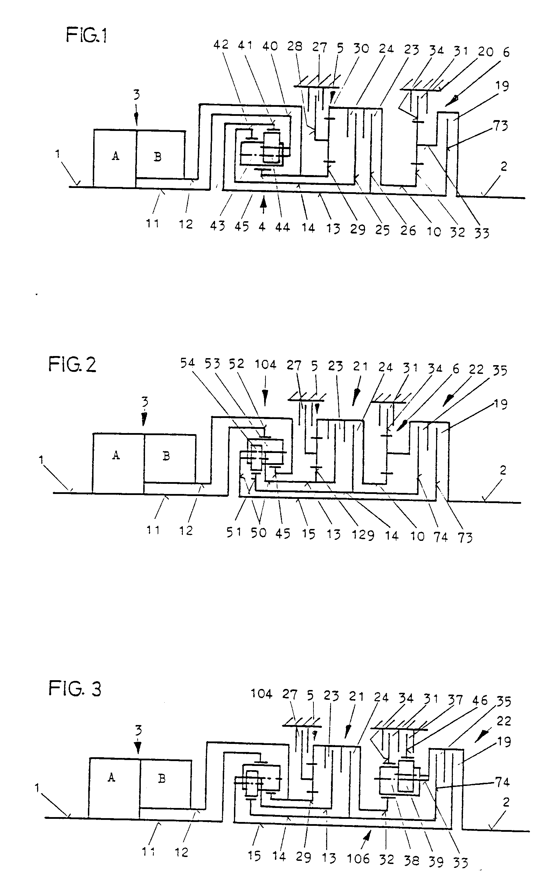

Die Ausführung nach Figur 1 bsitzt vier Vorwärtsfahrbereiche und einen Rückwärtsbereich, wobei der erste Vorwärtsfahrbereich und der Rückwärtsbereich rein-hydrostatisch und die anderen Fahrbereiche hydrostatisch-mechanisch arbeiten. Innerhalb der drei Vorwärtsfahrbereiche und dem Rückwärtsbereich ist das Hohlrad 34 eines dritten Planetengetriebes 6; 106; 206; 306 mit dem Gehäuse durch Schließen einer Kupplung bzw. Bremse 31 verbunden. Im ersten Vorwärtsfahrbereich und Rückwärtsbereich fließt die Leistung rein-hydrostatisch bei geschlossener erster Bereichskupplung 27 und damit feststehendem Steg 28 über die Glieder - Sonnenrad 29 und Hohlrad 30 des zweiten Planetengetriebes 5 auf die Kupplungswelle 10 und das Sonnenrad 32 über dem Steg 33 des dritten Planetengetriebes 6 auf die Abtriebswelle 2. Im zweiten Vorwärtsfahrbereich fließt die aufsummierte hydraulisch-mechanische Leistung über die dritte Welle 13 des Summierungsplanetengetriebes 4, das Kupplungsglied 26 und über die geschlossene Kupplung 23 auf das gemeinsame Kupplungsglied bzw. die Kupplungswelle 10, den dritten Planetentrieb 6 auf die Abtriebswelle 2. Im dritten Schaltbereich wird die aufsummierte hydraulische und mechanische Leistung über die vierte Welle 14 des Summierungsplanetengetriebes 4 bei geschlossener Kupplung 24 über das dritte Planetengetriebe 6 auf die Abtriebswelle 2 übertragen. Im vierten Schaltbereich erfolgt die hydraulischmechanische Leistungsübertragung über die dritte Welle 13 des Summierungsplanetengetriebes, die über die geschlossene Kupplung 19 direkt mit der Abtriebswelle 2 verbunden ist.

Wie bei allen Ausführungsbeispielen wird die hydraulische Leistung u. die mechanische Leistung im Summierungsplanetengetriebe 4; 104; 204; 304; 404; 504; 101; 604; 704 aufsummiert und in den entsprechenden Fahrbereichen über jeweils eine Welle 13, 14; 13, 14, 15; 66, 55, 14, 15; 83, 84, 85; 141, 113, 114 zum Abtrieb weitergeleitet. Über das dritte Planetengetriebe 6; 106; 206; 306 wird die Möglichkeit eines bzw. zweier zusätzlicher Schaltbereiche geschaffen trotz niedrigem Drehzahlniveau aller Getriebeglieder.

Die Ausführung nach Figur 2 besitzt vier Vorwärtsfahrbereiche und einen Rückwärtsfahrbereich, die alle mit Leistungsverzweigung arbeiten. Im ersten Vorwärtsfahrbereich und im Rückwärtsbereich ist eine Übersetzungsspreizung enthalten, wobei im jeweiligen Anfahrzustand der erste Übersetzungsbereich von Fahrgeschwindigkeit "Null" bis zu einem gewissen Übersetzungspunkt "X" durch eine Anfahreinrichtung überbrückt wird. Diese Anfahreinrichtung kann eine im Getriebe ohnehin vorhandene Kupplung sein, die als Reibkupplung ausgebildet ist oder ein zwischen die beiden Hydrostateinheiten A und B geschaltetes Bypaßventil, wie dies bereits durch die deutsche Patentanmeldung DE-A-36 09 907 bekannt ist. Bei dieser Getriebeausführung nach Figur 2 ist es zweckmäßig, die Kupplung bzw. Bremse 31 zum Abbremsen des Getriebegliedes 34 des dritten Planetengetriebes 6 als Anfahreinrichtung mit entsprechenden Reibgliedern auszubilden. Alle Bereichskupplungen 27, 23, 24, 19 und 35 sind im Synchron-Zu-stand schaltbar und können daher als form- plus lastschlüssig schaltbare Kupplungen, wie in der deutschen Patentanmeldung DE-A-37 00 813 beschrieben, ausgebildet werden.

Mit Ausnahme der Getriebeausführung nach Figur 2 sind alle dargestellten Getriebeausführungen voll-stufenlos bis Fahrgeschwindigkeit "Null", d. h. daß zusätzliche Anfahreinrichtungen entfallen können.

Die Getriebeausführung nach Figur 3 besitzt fünf Vorwärtsfahrbereiche und drei Rückwärtsfahrbereiche sowie einen zusätzlichen Sonder-Rückwärtsbereich für spezielle Einsatzfälle. Das Getriebe ist mit Ausnahme des entsprechenden fünften Fahrbereiches und des angepaßten Summierungsplanetengetriebes 104 identisch mit der Ausführung nach Figur 1. Im fünften Vorwärtsfahrbereich wird die aufsummierte hydraulische und mechanische Leistung über die dritte Welle 50 des Summierungsplanetengetriebes 104 durch eine entsprechende innenliegende Welle 15 bei geschlossener Kupplung 19 auf die Abtriebswelle 2 übertragen. Das dritte Planetengetriebe 106 ist hier vierwellig ausgebildet, wobei zum Schalten des Rückwärtsbetriebes ein Hohlrad 46 durch Schließen der Kupplung 37 mit dem Gehäuse verbunden wird und dadurch die Drehrichtung der Abtriebswelle 2 umgekehrt wird. Hierbei ist die Leistungsübertragung innerhalbeinem ersten, zweiten und dritten Fahrbereich bei den jeweils wechselweise geschlossenen Kupplungen 27, 23 und 24 in Rückfahrrichtung gegeben.

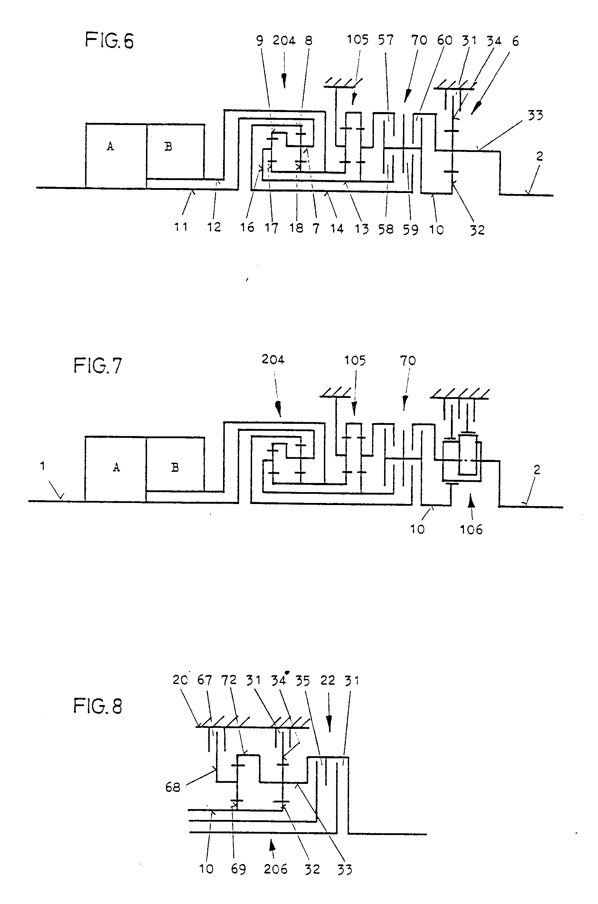

Das vierwellige dritte Planetengetriebe 106 ist in Figur 3 mit zwei ineinandergreifenden Planetenrädern 38 und 39 ausgebildet, die auf dem Steg 33 der mit der Abtriebswelle 2 verbunden ist, gelagert sind, wobei das Hohlrad 34 in erste Planetenräder 38 und das Hohlrad 46 in zweite Planetenräder 39 eingreift. Anstelle dieses dritten Planetengetriebes 106 ist auch eine Ausführungsform 206 nach Figur 8 vorteilhaft, wobei die Sonnenräder 32 und 69 zweier Planetenstufen mit dem gemeinsamen Kupplungsglied 10 verbunden sind und der Steg 68 der ersten Stufe mit dem Gehäuse über eine Kupplung 67 verbindbar ist zum Schalten der Rückwärtsfahrbereiche und das Hohlrad 72 der ersten Stufe sowohl mit dem Steg 33 der zweiten Stufe, als auch mit der Abtriebswelle 3 verbunden ist und das Hohlrad 34 der zweiten Stufe über eine Kupplung bzw. Bremse 31 mit dem Gehäuse verbindbar ist.

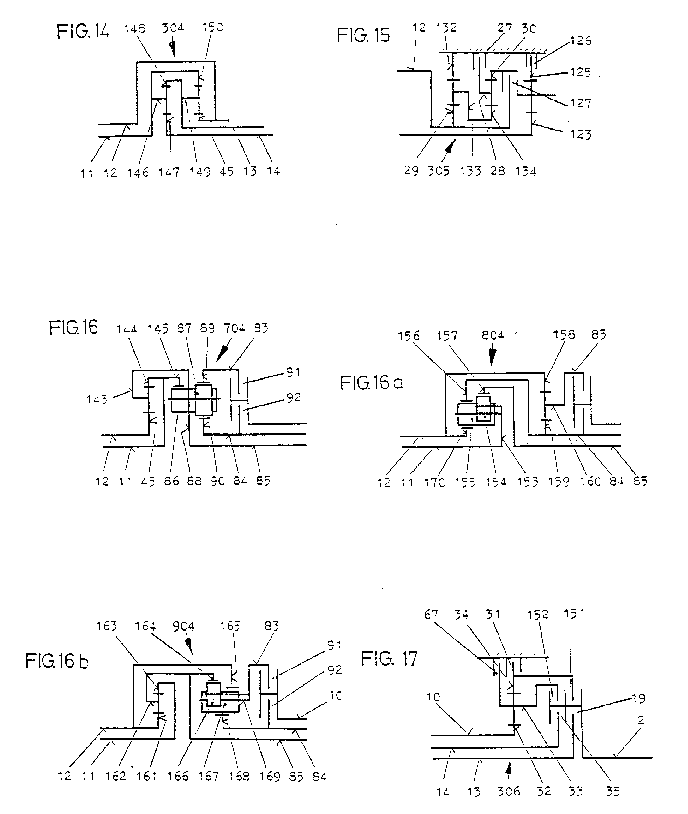

Eine Getriebeausführung nach Figur 3a ist ähnlich aufgebaut wie die Ausführung nach Figur 3, jedoch mit dem Unterschied, daß das sogenannte zweite Planetengetriebe 5, das in der Ausführung nach Figur 3 zur Übertragung der rein-hydrostatischen Leistung innerhalb des ersten Vorwärtsfahrbereiches und des ersten Rückwärtsfahrbereiches dient, entfällt. Der erste Vorwärts- und Rückwärtsbereich wird bei diesem Getriebe über eine spezielle Anfahreinrichtung, wie bei Ausführung nach Figur 2, überbrückt, wobei dieser überbrückte Bereich als Bereichsspreizung bzw. Übersetzungsspreizung "X", wie bereits unter Figur 2 beschrieben, bezeichnet wird. Das Getriebe besitzt vier hydrostatisch-mechanische Vorwärtsfahrbereiche und zwei hydrostatisch-mechanische Rückwärtsfahrbereiche, wobei der Getriebeaufbau und die Funktion bzw. Funktionsabläufe mit dem zweiten und dritten Vorwärts- und Rückwärtsbereich der Ausführung nach Figur 3 identisch sind. Als Anfahreinrichtung werden hier zweckmäßigerweise die beiden Fahrrichtungskupplungen, die Kupplungen 31 und 37 bzw. 67 des vierwelligen Planetengetriebes 106; 206 bzw. des dreiwelligen Planetengetriebes 306 verwendet, die in diesem Fall als Reibkupplungen ausgebildet sind. Das vierwellige nachgeordnete Planetengetriebe 106; 206 kann auch durch das vorerwähnte dreiwellige Planetengetriebe 306, Figur 17 ersetzt werden, bei dem die Abtriebswelle 2 bei Vorwärtsfahrbetrieb mit der Stegwelle 33 und im Rückwärtsfahrbetrieb mit dem Hohlrad 34 verbunden ist.

Diese Getriebeausführung ist relativ einfach aufgebaut und kommt aufgrund der vier Vorwärtsfahrbereiche und der Bereichsspreizung mit besonders kleinen Hydrostateinheiten aus.

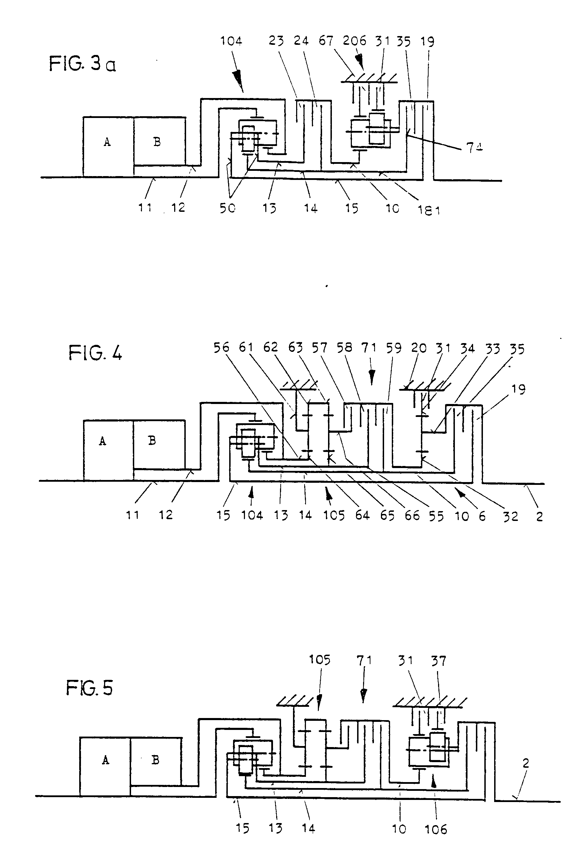

Die Getriebeausführungen nach Figur 4, 5, 6 und 7 sind vollstufenlos, wobei die Leistung in allen Fahrbereichen hydrostatisch-mechanisch übertragen wird. Das Summierungsplanetengetriebe besteht aus zwei Planetengetriebeeinheiten, wobei die erste Planetengetriebeeinheit 104; 204; 304; 4 vierwellig ist, das über zwei Wellen 56 und 13 mit der zweiten Planetengetriebeeinheit 105 ständig verbunden ist. Die zweite Planetengetriebeeinheit 105 besteht aus zwei Planetengetriebestufen, wobei die erste Planetengetriebestufe mit seinem Sonnenrad 65 mit der zweiten Welle 56 bzw. 12 des Summierungsplanetengetriebes verbunden ist, dessen Steg 61 mit dem Gehäuse fest in Verbindung steht, das Hohlrad 62 mit dem Hohlrad 63 der zweiten Planetengetriebestufe gekoppelt ist und das Sonnenrad 65 der zweiten Planetengetriebestufe mit der dritten Welle 13 des Summierungsplanetengetriebes in Verbindung steht und der Steg 66 der zweiten Planetengetriebestufe über eine Kupplung 57 im ersten Schaltbereich verbindbar ist. Alternativ kann die Stegwelle 66 des zweiten Planetengetriebes 105 mit der Kupplungswelle ständig verbunden sein, wobei die andere Stegwelle 61 der ersten Planetengetriebestufe mit dem Gehäuse 20 über eine Kupplung koppelbar ist. Die erste Welle des Summierungsplanetengetriebes ist mit der ersten Hydrostateinheit A verstellbaren Volumens und der Antriebswelle 1 verbunden und die zweite Welle 12 mit der zweiten Hydrostateinheit B, die dritte Welle 13 ist zusätzlich über ein Zwischenglied 55 und eine Kupplung 58 mit dem gemeinsamen Kupplungsglied 10 verbindbar, sowie über eine weitere Welle 15 und eine Kupplung 19 mit der Abtriebswelle 2 direkt verbindbar. Die vierte Welle 14 des Summierungsplanetengetriebes ist über eine Kupplung 59 mit dem gemeinsamen Kupplungsglied 10 und über ein weiteres Kupplungsglied über die Kupplung 35 mit der Abtriebswelle 2 verbindbar. Dem Kupplungspaket 71 mit dem gemeinsamen Kupplungsglied 10 ist das dritte Planetengetriebe 6; 106; 206; 306 nachgeordnet, dessen erste Welle, Sonnenrad 32 mit dem gemeinsamen Kupplungsglied 10 verbunden ist und eine zweite Welle als Steg 33 ständig mit der Abtriebswelle 2 in Verbindung steht und die dritte Welle als Hohlrad 34 über eine Kuppöung 31 mit dem Gehäuse 20 verbindbar ist. die Ausführungen nach Figur 4 bis 7 besitzen fünf hydrostatisch-mechanische Vorwärtsfahrbereiche. Bei Anwendung eines dritten Planetengetriebes 106; 206; 306 mit Einrichtung für Rückwärtsfahrt ist durch Schließen der Kupplung bzw. Bremse 37; 67 und gleichzeitigem Verbinden eines Hohlrades 46; 34 mit dem Gehäuse ein Rückfahrbetrieb über drei Schaltbereiche möglich, indem innerhalb der wechselweise geschalteten Kupplungen 57, 58 und 59 die Drehrichtung der Abtriebswelle 2 gegenüber der Kupplungswelle 10 umgekehrt wird.
Die Getriebeausführung nach Figur 6 ist weitgehend identisch mit Ausführung nach Figur 4 jedoch mit dem Unterschied, daß im vierten Vorwärtsfahrbereich die Abtriebswelle 2 direkt mit dem gemeinsamen Kupplungsglied 10 gekoppelt und gleichzeitig durch Schließen der Kupplung 58 die dritte Welle 13, die in diesem Betriebszustand die aufsummierte hydraulisch-mechanische Leistung führt, mit der Abtriebswelle 2 verbunden wird. Alle rotierenden Kupplungen für alle vier Schaltbereiche sind hier zu einem Kupplungspaket 70 zusammengefaßt.

Die Ausführung nach Figur 7 entspricht der Ausführung nach Figur 6 jedoch mit dem Unterschied, daß das dritte Planetengetriebe 106 vierwellig ausgebildet ist, wodurch die Drehrichtung auf der Abtriebswelle 2 bei geschaltetem Rückwärtsbetrieb innerhalb der ersten drei Schaltbereiche umgekehrt wird, wie bei Ausführung Figur 5 und 3 bereits beschrieben.

Das Summierungsplanetengetriebe 4 nach Figur 1 besitzt ineinandergreifende erste Planetenräder 43 und zweite Planetenräder 44, die auf einem gemeinsamen Steg 40 gelagert und mit der ersten Welle 11 verbunden sind. Ein Sonnenrad 45 steht in Triebverbindung mit der zweiten Welle 12 sowie den ersten Planetenrädern 43. Ein Hohlrad 41 greift in zweite Planetenräder 44 ein und ist mit der dritten Welle 13 verbunden und ein zweites Hohlrad 42 kämmt mit den ersten Planetenrädern 43, das mit der vierten Welle 14 des Summierungsplanetengetriebes in Triebverbindung steht.

Das Summierungsplanetengetriebe 104 besitzt ein Hohlrad, zwei Sonnenräder sowie ineinandergreifende erste und zweite Planetenräder, die auf einem gemeinsamen Steg gelagert sind. Das Hohlrad 52 ist mit der ersten Welle 11 und das Sonnenrad 45 mit der zweiten Welle 12 verbunden, die beide in erste Planetenräder 53 eingreifen und das andere Sonnenrad 51 steht in Verbindung mit der vierten Welle 14, das mit den zweiten Planetenrädern 54 kämmt. Der Steg 50, auf dem alle Planetenräder 53 und 54 gelagert sind, bildet die dritte Welle des Summierungsplanetengetriebes und ist alternativ mit zwei Ausgangswellen 13 und 15 verbunden.

Das Summierungsplanetengetriebe 204 nach Figur 6 und 7 besteht aus zwei Planetenstufen, wobei die erste Welle 11 mit dem Hohlrad 9 der ersten Stufe und dem Steg 7 der zweiten Stufe in Verbindung steht, die zweite Welle 12 mit den Sonnenrädern 17 und 18, die dritte Welle 13 bildet den Steg 16 der ersten Planetengetriebestufe und das Hohlrad 8 der zweiten Stufe die vierte Welle 14.

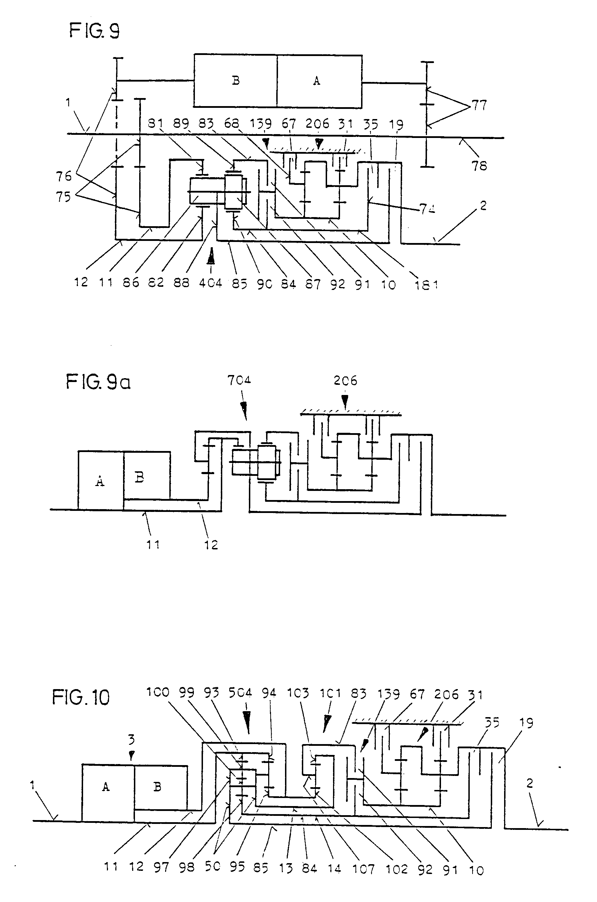

Die Getriebeausführung nach Figur 9 zeichnet sich dadurch aus, daß das Summierungsplanetengetriebe 404 fünfwellig ausgebildet ist, wobei die erste Welle 11 als erste Eingangswelle mit der ersten Hydrostateinheit A und der Antriebswelle 1 verbunden ist. Die zweite Welle 12 als zweite Eingangswelle ist mit der zweiten Hydrostateinheit B verbunden. Das Summierungsplanetengetriebe 404 besitzt drei Ausgangswellen, wobei die erste Ausgangswelle 83 die dritte Welle des Summierungsplanetengetriebes, die zweite Ausgangswelle 84 die vierte Welle und die dritte Ausgangswelle 85 die fünfte Welle des Summierungsplanetengetriebes bildet. Dem Summierungsplanetengetriebe ist ein weiteres Planetengetriebe 206 zugeordnet, das über eine Zwischenwelle bzw. Kupplungswelle 10 mit zwei Ausgangswellen 83 und der vierten Ausgangswelle 84 wechselweise verbindbar ist. Die dritte Ausgangswelle 85 ist direkt mit der Abtriebswelle 2 über eine Kupplung 19 verbindbar. Im ersten Schaltbereich ist die erste Ausgangswelle 83 des Summierungsplanetengetriebes über eine Kupplung 91 mit der Kupplungswelle 10 verbunden, wobei bei einer geschlossenen Kupplung 31 für den Vorwärtsfahrbetrieb die Leistung, wie bei den voranbeschriebenen Getriebeausführungen, über Getriebeglieder 32, 33, 34 des nachgeordneten Planetengetriebes 206; 106; 306 auf die Abtriebswelle 2 übertragen wird. Im zweiten Schaltbereich ist die zweite Ausgangswelle 84 des Summierungsplanetengetriebes mit einer zweiten Kupplung 92 mit der Kupplungswelle 10 verbunden, wobei die Leistung ebenfalls wie im ersten Fahrbereich über das nachgeschaltete Planetengetriebe 206 auf die Abtriebswelle 2 übertragen wird. Im dritten Schaltbereich ist die dritte Ausgangswelle 85 mit der Abtriebswelle 2 über eine Kupplung 19 koppelbar. Für einen möglichen vierten Schaltbereich ist die zweite Ausgangswelle 84 über eine Kupplung 35 mit der Abtriebswelle verbindbar. Das Getriebe ermöglicht zwei hydrostatisch-mechanische Rückwärtsbereiche, wobei über dieselbe Zwischen- bzw. Kupplungswelle 10 der erste und zweite Rückwärtsbereich, wie bei Vorwärtsbetrieb, geschaltet wird. Die Drehzahlumkehr erfolgt wie bei voranbeschriebenen Ausführungen Figur 3 bis 7 im nachgeordneten Getriebe bzw. Planetengetriebe 106; 206; 306.

Die Getriebeausführung nach Figur 10 ist mit der Ausführung Figur 9 weitgehend identisch jedoch mit dem Unterschied, daß die Summierungsplanetengetriebeeinheit aus zwei Planetengetriebestufen 504 und 101 besteht. Das Summierungsplanetengetriebeeinheiten 504 u. 101 besteht. Das Summierungsplanetengeist funktionsgleich mit den bereits beschriebenen Planetengetriebeeinheiten 4, 104, 204, 304. Das zweite Summierungsplanetengetriebe 101 besteht aus einer Planetengetriebestufe, dessen Sonnenrad 102 mit dem Sonnenrad 95 des ersten Summierungsplanetengetriebes 504 und der zweiten Hydrostateinheit B verbunden ist. Der Steg 14 des zweiten Planetengetriebes 101 bildet die erste Abtriebswelle 83, das Hohlrad 103 ist mit einer Welle des vierwelligen ersten Summierungsplanetengetriebes verbunden. Die zweite Ausgangswelle 84 und die dritte Ausgangswelle 85 der gesamten Summierungsplanetengetriebeeinheit sind direkte Ausgangswellen des ersten Summierungsplanetengetriebes 504.

Anstelle der Summierungsplanetengetriebeeinheiten 404 bzw. 504, 103 ist eine weitere Ausführungsform des Summierungsplanetengetriebes 704 nach Figur 16 funktionsgleich anwendbar. Bei Ausführung 404 ist die erste Welle 11 über der zweiten Welle 12 angeordnet. Bei den Ausführungen 504, 103 bzw. 704 ist die zweite Eingangswelle 12 des Summierungsplanetengetriebes über der ersten Welle 11 angeordnet.

Das fünfwellige Summierungsplanetengetriebe 404 ist erfindungsgemäß relativ einfach mit nur einem Planetenträger 88 ausgebildet, auf dem ineinandergreifende erste Planetenräder 86 und zweite Planetenräder 87 angeordnet sind, wobei die zweite Welle 12 mit seinem Sonnenrad 82 in erste Planetenräder 86, die erste Welle 11 mit seinem Hohlrad 81 ebenfalls in erste Planetenräder 86 eingreift, die dritte Welle 83 über ein verbundenes Hohlrad 89 in zweite Planetenräder 87 greift, die dritte Welle 84 über ein Sonnenrad 90 ebenfalls in zweite Planetenräder eingreift und die fünfte Welle 85 als gemeinsame Stegwelle mit dem Planetenträger 88 verbunden ist. (Figur 9)

Das Summierungsplanetengetriebe 504, das eine gemeinsame fünfwellige Summierungsplanetengetriebeeinheit mit der Planetengetriebestufe 101 bildet, besteht aus zwei Planetengetriebestufen, wobei in die erste Planetengetriebestufe ineinandergreifende erste Planetenräder 99 und zweite Planetenräder 100 besitzt. Die erste Welle 11 des Summierungsplanetengetriebes ist mit den beiden Hohlrädern 93 und 94 beider Planetengetriebestufen verbunden. Die zweite Welle 12 ist mit dem Sonnenrad 95 der zweiten Planetengetriebestufe, die dritte Welle 84 mit dem Sonnenrad 98 der ersten Planetengetriebestufe und die fünfte Welle 85 bildet die gemeinsame Stegwelle 97 für beide Planetengetriebestufen. Das Summierungsplanetengetriebe 504 ist funktionsgleich mit den Summierungsplanetengetrieben 4, 104, 204, 304.

Das fünfwellige Summierungsplanetengetriebe 704 nach Figur 16 besitzt zwei Planetengetriebestufen, wobei die zweite Planetengetriebestufe ineinandergreifende erste Planetenräder 86 und zweite Planetenräder 87 besitzt und die erste Eingangswelle 11 des Summierungsplanetengetriebes mit einem Hohlrad 144 der ersten Planetengetriebestufe und einem weiteren Hohlrad 145 der zweiten Planetengetriebestufe das in erste ineinandergreifende Planetenräder 86 eingreift verbunden ist. Die zweite Welle 12 ist mit einem Sonnenrad 45 der ersten Planetengetriebestufe verbunden, die erste Abtriebswelle 83 greift mit einem Hohlrad 89 in zweite Planetenräder 87 ein, die zweite Ausgangswelle 84 kämmt mit seinem Sonnenrad 90 ebenfalls mit den zweiten Planetenrädern 87, die dritte Ausgangswelle 85 bildet die gemeinsame Stegwelle 88 und 143 für beide Planetengetriebestufen.

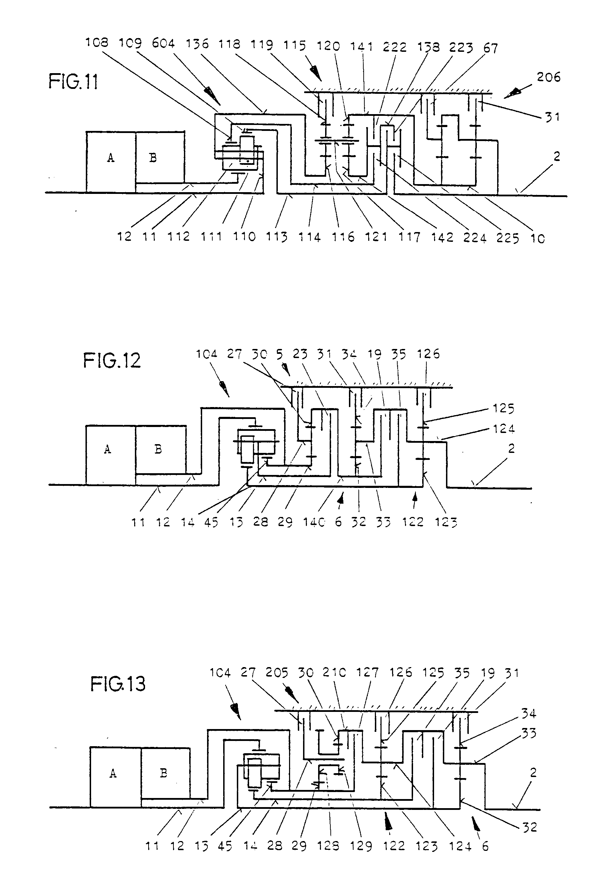

Die Getriebeausführung nach Figur 11 besteht ebenfalls aus einem ersten Summierungsplanetengetriebe 604 und einem zweiten Summierungsplanetengetriebe 115, wobei beide Planetengetriebe mit der ersten Eingangswelle 11 über Zwischenglieder 36 miteinander verbunden sind. Die gesamte Summierungsplanetengetriebeeinheit 604; 115 ist mindestens fünfwellig, wobei die erste Welle 11 mit der ersten Hydrostateinheit A, die zweite Welle 12 mit der zweiten Hydrostateinheit B, die dritte Welle eine erste Ausgangswelle 141, die vierte Welle eine zweite Ausgangswelle 114 und die fünfte Welle eine dritte Ausgangswelle 113 darstellt. Die zweite Ausgangswelle 114 ist mit einer Welle 142 des zweiten Summierungsplanetengetriebes 115 über eine Kupplung 224 verbindbar. Das zweite Summierungsplanetengetriebe ist dreiwellig oder vierwellig ausführbar, wobei die erste Welle mit der ersten Eingangswelle 11 verbunden ist, eine zweite Welle 141 die erste Ausgangswelle des Gesamt-Summierungsplanetengetriebes bildet und die dritte Welle 142 die zweite Ausgangswelle der Summierungsplanetengetriebeeinheit bildet. Bei vierwelliger Ausbildung des zweiten Summierungsplanetengetriebes ist vorzugsweise ein Glied, Hohlrad 118 über eine Kupplung 119 mit dem Gehäuse verbindbar. Anstelle der dargestellen Planetengetriebestufe 116, 121, 118 ist eine Triebverbindung über eine Vorgelegewelle und entsprechenden Stirnradstufen zwischen einem Glied der ersten Eingangswelle 11 und einem Glied 121 des zweiten Summierungsplanetengetriebes ausführbar. Diese Lösung ist in den Zeichnungen nicht dargestellt. Je nach den Forderungen der Aufteilung der Bereichsgröße sind verschiedene Ausführungsformen des ersten und des zweiten Summierungsplanetengetriebes ausführbar bzw. vorzuziehen. Der Summierungsplanetengetriebeeinheit 604; 115 ist ein weiteres Planetengetriebe 206 nachgeordnet, das über eine Zwischen- bzw. Kupplungswelle 10 mit einer der Ausgangswellen 141, 114, 113 wechselweise über Kupplungen 119, 222, 224, 223 verbindbar ist.

Die Getriebeausführung nach Figur 12 besitzt, ähnlich wie die Ausführungen nach Figur 1 bis 3, eine vierwellige Summierungsplanetengetriebeeinheit 104, der eine zweite, dritte und vierte Planetengetriebeeinheit 5, 6, 122 zugeordnet ist. Das zweite Planetengetriebe 5 ist dreiwellig ausgebildet und mit seinem Sonnenrad 29 mit der zweiten Hydrostateinheit B und einem Glied 45 mit dem Summierungsplanetengetriebe 104 verbunden. Der Steg 28 ist mit dem Gehäuse über eine Kupplung 27 verbindbar. Das Hohlrad 30 ist über eine Zwischenwelle bzw. Kupplungswelle 140 mit dem Sonnenrad 32 des ebenfalls dreiwellig ausgebildeten dritten Planetengetriebes 6 verbunden. Das dritte Planetengetriebe 6 ist mit seinem Steg 33 direkt mit der Abtriebswelle 2 und mit seinem Hohlrad 34 über eine Kupplung 31 mit dem Gehäuse verbindbar. Das vierte Planetengetriebe 122 ist mit seinem Sonnenrad 123 direkt mit der vierten Welle 14 des Summierungsplanetengetriebes verbunden. Die dritte Welle 13 des Summierungsplanetengetriebes ist über eine Kupplung 23 mit der Zwischenwelle bzw. Kupplungswelle 140 und damit mit dem Sonnenrad 32 des dritten Planetengetriebes 6 koppelbar.

Im ersten Schaltbereich wird bei dieser Getriebeausführung die Leistung rein-hydrostatisch übertragen, wobei bei geschlossener Kupplung 27 und geschlossener Kupplung 31 die Leistung über die dritte und vierte Planetengetriebeeinheit 5 und 6 auf die Abtriebswelle 2 übertragen wird. Im zweiten Schaltbereich ist die Kupplung 23 und Kupplung 31 geschlossen. Hierbei fließt die im Summierungsplanetengetriebe aufsummierte hydraulische und mechanische Leistung über die dritte Welle 13 des Summierungsplanetengetriebes über das dritte Planetengetriebe 6 auf die Abtriebswelle 2. Im dritten Schaltbereich wird die im Summierungsplanetengetriebe aufsummierte Leistung über die vierte Welle 14 auf das vierte Planetengetriebe 122 übertragen, wobei die Kupplung 126 geschlossen ist. Im vierten Fahrbereich sind die zweite, dritte und vierte Planetengetriebeeinheit 5, 6 und 122 lastlos, wobei bei geschlossener Kupplung 23 und 19 eine direkte Verbindung der dritten Welle 13 des Summierungsplanetengetriebes mit der Abtriebswelle 2 hergestellt ist. Im vierten Fahrbereich ist die vierte Welle des Summierungsplanetengetriebes über die Kupplung 35 direkt mit der Abtriebswelle 2 verbunden.

Die Getriebeausführung nach Figur 13 ist mit der Ausführung nach Figur 12 weitgehend identisch jedoch mit dem Unterschied, daß das zweite Planetengetriebe 205 bzw. 305 mit einer sehr großen Übersetzung ausgebildet ist und mit einem Glied, Hohlrad 30 direkt mit der Abtriebswelle 2 verbunden ist. Das zweite Planetengetriebe 205 besitzt Doppelplanetenräder mit zwei verschiedengroßen miteinander verbundenen Einzelplanetenrädern 128 und 129, die auf der Stegwelle 28 gelagert sind und ein Planetenrad 128 mit einem mit der zweiten Hydrostateinheit B verbundenen Sonnenrad 29 eingreift und mit seinem zweiten Planetengetriebe 129 in das mit der Abtriebswelle 2 verbundene Hohlrad 30 eingreift. Das dritte und vierte Planetengetriebe 6 und 122 sind lagemäßig vertauscht, so daß das dritte Planetengetriebe 6 ausgangsseitig angeordnet ist. Auch die dritte und vierte Welle 13 und 14 des Summierungsplanetengetriebes sind gegenüber der Ausführung Figur 12 anordnungsmäßig vertauscht, so daß die vierte Welle 14 über der dritten Welle 13 gelagert ist. Der Funktionsablauf ist mit der Ausführung nach Figur 3 identisch, wobei im ersten Fahrbereich bei geschlossener Kupplung 27 die rein-hydrostatische Leistung über das zweite Planetengetriebe 205 direkt auf die Abtriebswelle 2 übertragen wird. Im zweiten Schaltbereich wird die aufsummierte hydraulische und mechanische Leistung über die dritte Welle 13 des Summierungsplanetengetriebes auf das Planetengetriebe 6 bei geschlossener Kupplung 31 direkt auf die Abtriebswelle 2 übertragen. Im dritten, vierten und fünften Schaltbereich ist der Schaltablauf bzw. sind die Schaltfunktionen genau identisch mit der Ausführung nach Figur 12.

Anstelle des zweiten Planetengetriebes 205 ist eine weitere Ausführungsform 305 nach Figur 15 anwendbar, wobei das zweite Planetengetriebe 305 aus zwei Planetengetriebestufen besteht und die erste Planetengetriebestufe mit seinem Sonnenrad 29 mit der zweiten Welle des Summierungsplanetengetriebes und der Hydrostateinheit B verbunden ist, der Steg 133 der ersten Planetengetriebestufe mit dem Sonnenrad 134 der zweiten Planetengetriebestufe, das Hohlrad 132 mit dem Gehäuse verbunden bzw. verbindbar ist, der Steg 28 der zweiten Planetengetriebestufe mit dem Gehäuse verbunden bzw. über eine Kupplung 27 verbindbar ist und das Hohlrad 30 der zweiten Planetengetriebestufe mit der Abtriebswelle 2 verbunden oder über eine Kupplung verbindbar ist. Es ist in den Funktionen gleichgültig, welches Glied der Planetengetriebeeinheit 305 bzw. 205 als Kupplungsglied verwendet wird. Es empfiehlt sich jedoch, bei der Ausführung 205 die Stegwelle 28 sowie bei der Ausführung 305 ebenfalls die Stegwelle der zweiten Planetengetriebestufe mit dem Gehäuse über eine Kupplung zu verbinden, um überhöhte Drehzahlen im lastlosen Zustand zu vermeiden. (Figur 15)

Das Planetengetriebe 306 nach Figur 17 bildet einen Ersatz für die dritte Planetengetriebeeinheit 106 und 206, wobei nur eine Planetengetriebestufe für die Schaltung des Vorwärtsbereiches und des Rückwärtsbereiches ausreichend ist. Hierbei ist, wie bei den Ausführungen 106, 206, das Sonnenrad 32 mit der Zwischenwelle bzw. Kupplungswelle 10 verbunden. Zum Schalten des Vorwärtsfahrbereiches ist die Stegwelle 33 über eine Kupplung 152 mit der Abtriebswelle 2 und das Hohlrad 34 über eine Kupplung 31 mit dem Gehäuse 20 verbunden. Bei Schaltung des Rückwärtsbereiches ist die Steg-welle 33 mit dem Gehäuse 20 über eine Kupplung 67 und das Hohlrad 34 über eine Kupplung 151 mit der Abtriebswelle 2 gekoppelt.
Die Anwendung dieses Planetengetriebes 306 kann sinnvoll sein zum Beispiel in Verbindung mit der Anwendung kosten- und bauraumgünstiger formschlüssiger bzw. form- plus kraftschlüssiger Kupplungen, wie z.B. aus der DE-A-3903010 bekannt, da der Kupplungsmehraufwand geringer sein kann als eine zweite Planetengetriebestufe.
Das Summierungsplanetengetriebe 304 nach Figur 14 ist vierwellig ausgebildet u. ist identisch mit den Ausführungen 104, 204 und 504. Es besteht aus zwei Planetengetriebestufen, wobei die erste Welle 11 mit dem Steg 46 der ersten Planetengetriebestufe und mit einem Hohlrad 150 der zweiten Planetengetriebestufe verbunden ist, die zweite Welle 12 mit einem Sonnenrad 45 der zweiten Planetengetriebestufe, die dritte Welle 13 mit dem Steg 49 der zweiten Planetengetriebestufe und dem Hohlrad 148 der ersten Planetengetriebestufe und die vierte Welle 14 mit dem Sonnenrad 147 der ersten Planetengetriebestufe verbunden ist.

Das Summierungsplanetengetriebe 804 nach Figur 16a ist fünfwellig ausgebildet und besitzt zwei Planetengetriebeeinheiten, wobei die erste Planetengetriebeeinheit ineinandergreifende erste Planetenräder 155 und zweite Planetenräder 154 besitzt, die auf einem gemeinsamen Steg 153 gelagert sind. Die erste Eingangswelle 11 ist mit dem gemeinsamen Steg 153 der ersten Planetengetriebeeinheit, die zweite Eingangswelle 12 mit dem in erste Planetenräder 155 eingreifenden Sonnenrad 170 und das Hohlrad 158 der zweiten Planetengetriebeeinheit verbunden. Die erste Ausgangswelle 83 des Summierungsplanetengetriebes ist mit dem Steg 160 der zweiten Planetengetriebeeinheit, die zweite Ausgangswelle 84 mit einem Sonnenrad 159 und mit dem in erste Planetenräder 155 eingreifenden Hohlrad 156 der ersten Planetengetriebeeinheit verbunden. Die dritte Ausgangswelle 185 ist mit dem in zweite Planetenräder 154 eingreifenden Hohlrad 157 verbunden.

Das Summierungsplanetengetriebe 904 nach Figur 16b besteht ebenfalls aus zwei Planetengetriebeeinheiten, wobei die zweite Planetengetriebeeinheit ineinandergreifende erste Planetenräder 166 und zweite Planetenräder 167 besitzt, die auf einem gemeinsamen Steg 169 angeordnet sind. Die erste Welle des Summierungsplanetengetriebes bzw. erste Eingangswelle 11 ist mit dem Hohlrad 163 der ersten Planetengetriebestufe, die zweite Welle 12 des Summierungsplanetengetriebes mit dem Sonnenrad 161 der ersten Planetengetriebestufe und dem in zweite Planetenräder 167 eingreifenden Hohlrad 165 verbunden. Die dritte Welle bzw. erste Ausgangswelle 83 ist an der gemeinsamen Stegwelle 169 angebracht. Die vierte Welle bzw. zweite Ausgangswelle 184 steht in Verbindung mit einem in zweite Planetenräder 167 eingreifendem Sonnenrad 168 und die dritte Ausgangswelle 85 bzw. fünfte Welle des Summierungsplanetengetriebes ist an der Stegwelle 162 der ersten Planetengetriebeeinheit und an dem in erste Planetenräder 166 eingreifendem Hohlrad 164 angeschlossen.

Die Summierungsplanetengetriebeeinheiten 404, 704, 804, 904 sind jeweils fünfwellig ausgebildet und funktionsgleich für die Getriebeausführungen nach Figur 9, 9a, 10 und 18. Je nach den Bedingungen hinsichtlich Getriebebauart und Größe der erforderlichen Bereichsaufteilungen kann eine gezielte Auswahl der jeweils geeignetsten Ausführung getroffen werden.

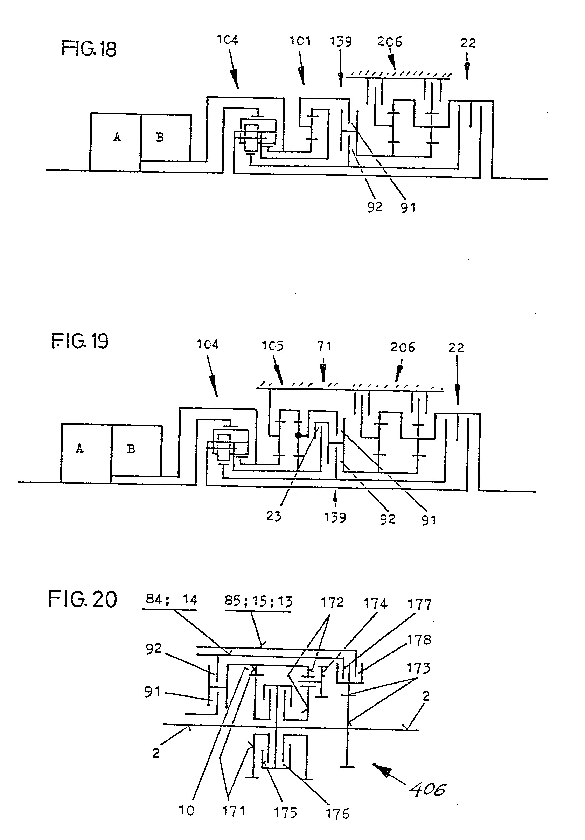

Das mit der Kupplungswelle 10 in Wirkverbindung stehende Planetengetriebe 306 ist in einem oder mehreren Schaltbereichen blockschaltbar, indem zwei Planetengetriebeglieder miteinander verbunden werden z.B. über zwei Kupplungen 151 und 152. Hierdurch ist es möglich, daß eine Kupplung, z.B. Kupplung 35 und das mit der entsprechenden Ausgangswelle 84 des Summierungsplanetengetriebes verbundene Kupplungsglied 74 entfallen kann. In einem der Schaltbereiche, meist dem letzten Schaltbereich, wird bei dieser Ausführungsform die Leistung über eine Bereichskupplung, z.B. Kupplung 92; 24; 59 auf die Kupplungswelle 10 über das blockgeschaltete Planetengetriebe 306 auf die Abtriebswelle übertragen. Die hierbei geschaltete Bereichskupplung dient bei dieser Ausführungsform als Bereichskupplung für zwei Schaltbereiche, z.B. dem Schaltbereich 2 und dem Schaltbereich 4 bei Ausführung nach Figur 9, 9a, 10 und 18. Auch bei den Planetengetriebeausführungen 106 und 206 kann durch Blockschaltung mittels einer nicht dargestellten Kupplung, indem z.B. das Sonnenrad 32 mit dem Steg 33 verbunden wird, die Kupplungswelle 181 zwischen dem Kupplungsglied der Bereichskupplungen 92; 24; 59 und dem Kupplungsglied 74 der Kupplung 35 eingespart werden.
Gegenüber bekannten Getriebe-Systemen dieser Art besteht der weitere Vorteil, daß bei jeder Bereichsschaltung nur eine rotierende Kupplung geschaltet werden muß, wodurch bekannte Schaltschwierigkeiten infolge gleichzeitiger Mehrfach-Schaltungen entfallen.
Als Ersatz für die nachgeordnete Planetengetriebestufe 106, 206, 306 kann auch ein Stirnradgetriebe 406, Figur 20 dienen. Hierbei ist die Zwischenwelle bzw. Kupplungswelle 10 über eine erste STirnradstufe 171 und eine zweite mit einem Zwischenrad 174 verbundenen Sitrnradstufe 172 mit der Abtriebswelle 2 verbindbar. Eine dritte Stirnradstufe 173 ist mit einer oder zwei Ausgangswellen des Summierungsplanetengetriebes über Kupplungen 177, 178 wechselweise verbindbar. Die erste Stirnradstufe dient zur Leistungsübertragung in einem ersten und zweiten hydrostatisch- mechanischen Vorwärtsfahrbereich und gegebenenfalls einem rein hydrostatischen Vorwärtsfahrbereich.Die zweite Stufe 172 ist im Rückwärtsfahrbereich geschaltet zum Übertragen der Leistung innerhalb von zwei hydrostatisch-mechanischen Rückwärtsfahrbereichen und gegebenenfalls einem ersten rein-hydrostatischen Bereich. Mit diesem Getriebe sind, wie bei den Planetengetriebeausführungen 106, 206, 306 zwei bis drei Rückwärtsfahrbereiche möglich. Je nach vorgewählter Fahrtrichtung ist eine der Kupplungen 175; 176 mit einer der Stirnradstufen 171 bzw. 172 und der Abtriebswelle 2 innerhalb der ersten Schaltbereiche verbunden. Diese Getriebeausführung kann sinnvolle Anwendung z.B. bei einem Fahrzeug mit Front- und Heckantrieb oder quereingebauter Triebwerksanlage finden.

Die Hydrostateinheiten A und B sind zu einer gemeinsamen Baueinheit hintereinander koaxial angeordnet und in einer kompakten Baueinheit bzw. dem Hydrostatpaket 3 zusammengefaßt. Die erste und zweite Eingangswelle 11; 12 treiben von der selben Seite in das Summierungsplanetengetriebe ein. Dies hat den Vorteil, daß eine sehr kompakte und bauraumsparende Gesamtbauweise des Getriebes erzielt wird und darüberhinaus ist eine vielfältige Bauweise im Sinne einer Modulbauweise realisierbar, da das Hydrostatpaket 2 beliebig im Getriebe, z.B. koaxial oder achsversetzt, wie in Figur 9 dargestellt, angeordnet werden kann.

Durch die erfindungsgemäße Ausbildung und Kombination des Summierungsplanetengetriebes mit der nachgeordneten bzw. dritten Getriebeeinheit 106, 206, 306, 406 sind in Verbindung mit der Zwischen- bzw. Kupplungswelle 10 der erste, zweite und gegebenenfalls dritte Bereich, je nach Fahrtrichtungswahl für Vorwärtsfahrt oder Rückwärtsfahrt fahrbar bzw. schaltbar. Hierbei sind zum Beispiel einem Getriebe nach Figur 9 mit vier hydrostatisch- mechanischen Vorwärtsfahrbereichen zwei hydrostatisch-mechanische Rückwärtsfahrbereiche zugeordnet. Dieses Getriebe ist zum Beispiel für die Anwendung in einem Ackerschlepper, der im Vorwärtsfahrbereich bis zu 50 km/h und im Rückwärtsbereich bis zu 25 km/h benötigt, optimal geeignet. Das Hydrostatpaket 3 und der mechanische Getriebeteil - Summierungsplanetengetriebe, nachgeordnete Planetengetriebeeinheit mit Kupplungen - sind jeweils zu kleine Kompaktbaueinheiten bzw. Montageeinheiten zusammenfaßbar und nötigenfalls unter geringem Zeitaufwand schnell austauschbar im Sinne einer servicefreundlichen Modulbauweise, wobei Hydrostatpaket und der mechanische Getriebeteil ohne Getriebeausbau aus dem Fahrzeug rasch austauschbar sind.

### Funktionsbeschreibung

Im Anfahrzustand wird bei vorgewählter Fahrtrichtung "Vorwärts" und getretener Bremse, z.B. bei Ausführung nach Figur 1, die erste Bereichskupplung 27 und die Kupplung 31 geschlossen und damit der Steg des ersten Planetengetriebes 5 und gleichzeitig das Hohlrad 34 des zweiten Planetengetriebes 6 mit dem Gehäuse 20 verbunden. Der Hydrostat ist dabei auf Regelstellung "Null" eingestellt, d. h. daß die zweite Welle 12 und alle Glieder des ersten Planetengetriebes 5 stehen. In dieser Schaltstellung ist eine direkte Triebverbindung vom Hydrostat bis zur Abtriebswelle 2 hergestellt, das bedeutet, daß im ersten Fahrbereich eine rein-hydrostatische Leistungsübertragung erfolgt. Zum Anfahren wird nun der Hydrostat verstellt und zwar in Gegendrehrichtung zur Antriebswelle, wodurch die hydrostatische Leistung über die Glieder des zweiten Planetengetriebes 5, das gemeinsame Kupplungsglied bzw. Kupplungswelle 10 und das dritte Planetengetriebe 6 auf die Antriebswelle 2 übertragen. Die Glieder des Summierungsplanetengetriebes 4 werden über die erste Welle 11 und das mit der zweiten Hydrostateinheit B verbundene Sonnenrad 45 lastlos angetrieben, wobei am Ende des ersten Schaltbereiches bei maximaler negativer Regelstellung des Hydrostaten die dritte Welle 13 des Summierungsplanetengetriebes 4 Gleichlauflmit dem gemeinsamen Kupplungsglied 10 erreicht hat. Nun erfolgt die Schaltung in den zweiten Fahrbereich, indem die Kupplung 23 geschlossen und die Kupplung 27 geöffnet wird. Die Leistungsübertragung erfolgt nun hydrostatisch-mechanisch über die dritte Welle 13 des Summierungsplanetengetriebes. Der Hydrostat wird jetzt wiederum zurückgestellt bis auf "Null" und darüberhinaus bis zu seiner maximalen positiven Regelstellung, was dem Endpunkt des zweiten Schaltbereiches entspricht. In diesem Übersetzungspunkt haben die Antriebswelle und die zweite Hydrostateinheit B gleiche Drehzahl in gleicher Drehrichtung, was bedeutet, daß alle Glieder des Summierungsplanetengetriebes sowie alle Kupplungselemente der Kupplungen 23 und 24 Synchronlauf haben. Nun erfolgt die Schaltung in den dritten Schaltbereich durch Schließen der Kupplung 24 und Öffnen der Kupplung 23. Der Hydrostat wird jetzt wieder zurückgestellt und durchfährt seinen gesamten Regelbereich bis zu seiner maximalen negativen Endstellung in der die dritte Welle 13 des Summierungsplanetengetriebes und das mit ihr verbundene Kupplungsglied 73 Synchronlauf mit der Abtriebswelle 2 erreicht hat. Nun erfolgt die Schaltung in den vierten Schaltbereich, indem die dritte Welle 13 mit der Abtriebswelle durch Schließen der Kupplung 19 gekoppelt wird und gleichzeitig die Kupplung 31 geöffnet wird, um das Hohlrad 34 des dritten Planetengetriebes 6 lastlos zu setzen. Die Kupplung 24 bleibt dabei geschlossen. Innerhalb dieses vierten Schaltbereiches wird nun der Hydrostat nochmals in seine Gegenrichtung bis zu seinem maximalen Endregelpunkt verstellt, was dem Endpunkt der Getriebeübersetzung entspricht.

Bei einer Getriebeausführung gemäßt Figur 3, die mit der Ausführung 1 weitgehend identisch ist, ist ein weiterer Bereich als fünfter Schaltbereich vorgesehen derart, daß die vierte Welle 14 des Summierungsplanetengetriebes ein zusätzliches Kupplungsglied 74 besitzt, das am Ende des vierten Schaltbereiches Gleichlauf mit der Abtriebswelle 2 hat. Zum Schalten des fünften Bereiches wird nun die Kupplung 35 geschlossen und die Kupplung 19 geöffnet, wodurch eine direkte Verbindung der vierten Welle 14 des Summierungsplanetengetriebes mit der Abtriebswelle 2 hergestellt ist. Nun wird der Hydrostat zum weiteren Mal über seinen vollen Regelbereich durchfahren bis Erreichen des Endübersetzungspunktes des Getriebes.

Die Getriebeausführung nach Figur 3 besitzt gegenüber der Ausführung nach Figur 1 ein vierwelliges drittes Planetengetriebe 106, wodurch bei Schließen einer Rückwärtskupplung 37 ein Hohlrad 46 dieses Planetengetriebes festgehalten wird, was bewirkt, daß die Drehrichtung des gemeinsamen Kupplungsgliedes 10 innerhalb der ersten drei Schaltbereiche auf der Abtriebswelle 2 umgekehrt wird. Dieses Getriebe besitzt also drei Rückwärtsfahrbereiche, die mit den ersten drei Vorwärtsfahrbereichen identisch schaltbar sind.
Das Getriebe nach Ausführung Figur 2 unterscheidet sich von den Ausführungen nach Figur 1 und 3 dadurch, daß kein hydrostatischer Vorwärts- und Rückwärtsfahrbereich gegeben ist, sondern der Anfahrbereich, wie bereits beschrieben, durch eine Anfahreinrichtung bis zu einem Übersetzungspunkt "X" überbrückt wird.

Die Getriebeausführungen nach Figur 4 bis 7 haben, mit Ausnahme des ersten Schaltbereiches, identischen Funktionsablauf wie die beschriebenen Ausführungen nach Figur 1 und 3. Der erste Bereich arbeitet hierbei nicht rein-hydrostatisch, sondern auch wie bei allen anderen Schaltbereichen mit Leistungsverzweigung. Innerhalb des ersten Schaltbereiches wird die hydraulische Leistung auf zwei Summierungsplanetengetriebe 104 und 105 bzw. 204 und 105 übertragen. Bei vorgewählter Fahrtrichtung "Vorwärts" schließt die erste Bereichskupplung 57 und gleichzeitig die Kupplung 31, die das Hohlrad 34 des dritten Planetengetriebes 6 festhält. Der Hydrostat ist hierbei bei Fahrgeschwindigkeit "Null" auf seine maximale positive Regelstellung eingestellt, was bedeutet, daß die Antriebswelle 1, erste Welle des Summierungsplanetengetriebes 11 und die zweite mit der zweiten Hydrostateinheit B verbundene Welle 12 des Summierungsplanetengetriebes Gleichlauf haben. Alle Glieder des Summierungsplanetengetriebes 104; 204 haben in diesem Betriebszustand Block-Umlauf. Über die Steuer- und Regeleinrichtung wird nun innerhalb des Anfahrvorganges der Hydrostat zurückgeregelt auf "Null" und darüberhinaus bis zu seiner maximalen negativen Endstellung. Innerhalb dieses Regelbereiches wird die aufsummierte hydraulische und mechanische Leistung über den Steg 66, die geschlossene erste Bereichskupplung 57 auf das gemeinsame Kupplungsglied 10 das dritte Planetengetriebe 6 auf die Abtriebswelle 2 übertragen. Am Ende des ersten Schaltbereiches haben die dritte Welle 13 des Summierungsplanetengetriebes und das gemeinsame Kupplungsglied 10 Gleichlauf erreicht, so daß die Kupplung 58 geschlossen werden und die erste Bereichskupplung 57 geöffnet werden kann. Der weitere Funktionsablauf ist mit den bereits beschriebenen Ausführungen nach Figur 1 und 3 identisch.

Die Getriebeausführung nach Figur 6 und 7 unterscheidet sich im Schalt-Funktionsablauf für den vierten Bereich von den bis jetzt beschriebenen Ausführungen. Beim Schalten des vierten Bereiches wird die Abtriebswelle 2 mit der dritten Welle 13 des Summierungsplanetengetriebes gekoppelt derart, daß beim gleichzeitigen Öffnen der Kupplung 31 die Kupplungen 60 und 58 geschlossen werden. Hierbei ist innerhalb des Schaltablaufes das gemeinsame Kupplungsglied 10 mit den beiden synchron-drehenden Wellen 13 und der Abtriebswelle 2 anzusynchronisieren, nachdem die Kupplung 59 geöffnet ist. Dies geschieht zweckmäßigerweise derart, daß gewisse Kupplungsüberschneidungen, wie bei bekannten Stufen-Automat-Getrieben üblich, angesteuert werden. Alle Kupplungen dieser Getriebeausführung, mit Ausnahme der ersten Bereichskupplung 57, sind hier als Reibkupplung auszubilden. Im Hinblick auf eine nahtlose Bereichsschaltung wird hier folgender Schaltablauf gewählt: Bei erreichtem Synchronlauf der Wellen 13 und der Abtriebswelle 2 werden zunächst die beiden Bereichskupplungen 58 und 60 mit geringem Druck beaufschlagt und nach Erreichen einer gewissen Druckgröße die beiden Kupplungen 59 und 31 geöffnet. In dieser Schaltphase wird gleichzeitig das dritte Planetengetriebe 6 block-geschaltet, das innerhalb des vierten Bereiches lastlos umläuft.

Das dritte Planetengetriebe 206 nach Figur 8 ist mit einer ersten Planetengetriebestufe 68, 69, 72 ausgebildet, über die im Rückwärtsbereich bei geschlossener Kupplung 67 und festgehaltenem Steg 68 die Leistung zur Abtriebswelle fließt. Die Rückwärtsgeschwindigkeit kann durch Wahl entsprechender Übersetzung gegenüber der Vorwärtsfahrgeschwindigkeit der betreffenden geschalteten Bereiche angepaßt werden. Hier ist eine beliebige Anpassung an die fahrzeugspezifischen Forderungen möglich, die insbesondere bei Arbeitsmaschinen, wie Schlepper und Baufahrzeuge, von Bedeutung ist. Die Rückfahrgeschwindigkeit kann gegenüber der betreffenden Vorwärtsfahrbereiche größer ausgelegt werden, indem die Anschlüsse Hohlrad und Sonnenrad vertauscht werden, das heißt daß das Hohlrad nicht mit der Abtriebswelle, sondern mit dem gemeinsamen Kupplungsglied 10 verbunden und das Sonnenrad mit der Abtriebswelle 2 verbunden wird, der Steg 68 ist hierbei nach der Gegenseite verlagert. Diese Ausführung ist in den Zeichnungen nicht dargestellt.

Eine weitere Ausführungsform des dritten Planetengetriebes nach der Art, wie in der Patentanmeldung DE-A-37 09 191 unter dem Bezugszeichen 150 beschrieben, ist auch hier anwendbar.

Der Funktionsablauf der Getriebeausführung nach Fig. 9, 9a u. 10 unterscheidet sich von den Ausführungen nach Figur 4 bis 7 im wesentlichen dadurch, daß im Anführzustand die erste mit der Antriebswelle verbundene Welle 11 und die zweite mit der zweiten Hydrostateinheit B verbundene Welle 12 gegensinnige Drehrichtung aufweisen und am Ende des ersten Schaltbereiches und am Ende des dritten Schaltbereiches alle Glieder des Summierungsplanetengetriebes sich im Gleichlauf befinden. Die Abtriebswelle ist somit bei Beginn des vierten Fahrbereiches drehzahlgleich mit der Antriebswelle bzw. der ersten Eingangswelle 11 des Summierungsplanetengetriebes. Dies bedeutet, daß der vierte Bereich sehr vorteilhaft als Over-drive-Bereich ausgenutzt und den Fahrzeugforderungen weitgehend angepaßt werden kann hinsichtlich Optimierung des Kraftstoffverbrauches.

### Funktionsablauf Getriebeausführung Figur 9, 9a und 10

Bei Vorwahl der Vorwärtsfahr-geschwindigkeit wird die erste Bereichskupplung Kupplung 91 sowie die Kupplung 31 geschlossen.

Hierdurch ist eine Triebverbindung der ersten Ausgangswelle 83 des Summierungsplanetengetriebes mit der Abtriebswelle 2 über eine dazwischengeschaltete Planetengetriebestufe gegeben. Die erste Hydrostateinheit A ist dabei auf seine maximale negative Verstellgröße eingestellt. Der Hydrostat wird nur zurückgestellt auf "Null" und darüberhinaus bis zu seiner maximalen positiven Endstellung, wodurch die erste Ausgangswelle 83 des Summierungsplanetengetriebes sowie die damit gekoppelte Kupplungswelle 10 Eingangsdrehzahl erreicht haben.

Alle Glieder des Summierungsplanetengetriebes sowie der Kupplungswelle 10 besitzen in diesem Betriebszustand Gleichlauf, so daß die Schaltung in den zweiten Bereich durch Schließen der Kupplung 92 erfolgen kann. Die Kupplung 91 des ersten Bereiches wird nun geöffnet, so daß über die zweite Ausgangswelle 84 des Summierungsplanetengetriebes die Drehzahl der Kupplungswelle 10 innerhalb des zweiten Schaltbereiches weiter erhöht werden kann, indem die Hydrostatverstellung wieder zurückgeregelt wird bis zur maximalen negativen Endstellung, bei der die dritte Ausgangswelle 85 mit der Abtriebswelle 2 Gleichlauf erreicht hat. Nun erfolgt die Schaltung in den dritten Fahrbereich durch Verbinden der dritten Ausgangswelle 85 mit der Abtriebswelle 2 durch Schließen der Kupplung 19 und Öffnen der Kupplung 31 des nachgeordneten Planetengetriebes 206. Die Kupplung 92 bleibt hierbei geschlossen, so daß die Kupplungswelle 10 eine kontrollierte Drehzahlführung über die zweite Ausgangswelle 84 des Summierungsplanetengetriebes hat. Bei wiederholter Rückregelung des Hydrostaten bis zu seiner positiven Endstellung wird die Drehzahl der Abtriebswelle 2 auf Gleichlauf mit allen Gliedern des Summierungsplanetengetriebes gebracht, so daß die zweite Ausgangswelle 84 des Summierungsplanetengetriebes über die Kupplung 35 mit der Abtriebswelle im Synchronlauf-Zustand kuppelbar ist und die Kupplung 19 geöffnet werden kann. Im vierten Schaltbereich ist nun die zweite Ausgangswelle 84 direkt mit der Abtriebswelle 2 verbunden, die nun innerhalb des vierten Schaltbereiches die Abtriebswelle auf seine Maximaldrehzahl bzw. das Getriebe auf seine Endübersetzung einstellt, indem der Hydrostat wieder über seinen vollen Regelbereich bis zu seiner maximalen negativen Endverstellung geführt wird.

Der Schaltfunktionsablauf innerhalb des Rückfahrbereiches ist mit den ersten und zweiten Vorwärtsfahrbereichen identisch, wobei anstelle der Kupplung 31 des zweiten Planetengetriebes 206 die Kupplung 67 geschaltet wird, wodurch die Drehrichtung der Abtriebswelle innerhalb dieser beiden Schaltbereiche umgekehrt wird.

Der Funktionsablauf des Getriebes nach Figur 9a und 10 ist mit der Getriebeausführung Figur 9 identisch.

### Funktionsablauf Getriebeausführung Figur 11

Bei vorgewählter Fahrtrichtung "Vorwärts" und gleichzeitigem Schalten des ersten Fahrbereiches wird bei Fahrgeschwindigkeit "Null" die Kupplung 31 des nachgeordneten Planetengetriebes 206 die Kupplung 119 sowie 223 geschlossen, wobei bei Fahrgeschwindigkeit "Null" alle Glieder des ersten Summierungsplanetengetriebes 604 und somit die erste und zweite Eingangswelle 11 und 12 Gleichlauf haben. Bei Veränderung der Hydrostatverstellung von maximal positiver Einstellung bis maximaler negativer Einstellung wird der gesamte erste Fahrbereich durchfahren, wobei die hydrostatisch-mechanische Leistung über die erste Ausgangswelle 141 auf die Kupplungswelle 10 und über das geschaltete Planetengetriebe 206 auf die Abtriebswelle 2 übertragen wird. Am Ende des ersten Schaltbereiches hat die Kupplungswelle 10 Gleichlauf mit der dritten Ausgangswelle 113 erreicht, wobei im Synchronzustand der entsprechenden Kupplungsglieder die Kupplung 222 geschlossen und gleichzeitig die Kupplung 223 geöffnet wird. Durch Rückregelung des Hydrostatgetriebes von negativer Endstellung bis positiver Endstellung wird der zweite Fahrbereich durchfahren, wo am Ende des zweiten Schaltbereiches alle Glieder des Summierungsplanetengetriebes 604 sowie die Kupplungswelle 10 Gleichlauf erreicht haben.

Jetzt erfolgt die Schaltung in den dritten Fahrbereich durch Schließen der Kupplung 224, wodurch die dritte Ausgangswelle 114 die aufsummierte hydraulische und mechanische Leistung auf die Kupplungswelle 10 über ein Planetengetriebe der Planetengetriebeeinheit 206 auf die Abtriebswelle überträgt. Nach Durchregelung des Hydrostaten in die gegenliegende Endstellung hat die zweite Ausgangswelle 113 Gleichlauf mit der Abtriebswelle 2 erreicht, wodurch durch Schließen der Kupplung 225 eine direkte Verbindung dieser Welle mit der Abtriebswelle 2 zur Schaltung des vierten Fahrbereiches hergestellt wird. Nach Öffnen der Bereichskupplung 224 wird nun der Hydrostat wieder in seine Gegenrichtung durchfahren, wo am Ende des vierten Schaltbereiches alle Glieder beider Planetengetriebeeinheiten 604 und 115 Gleichlauf erreicht haben. Nun wird die Abtriebswelle 2 über ein durch die Kupplung 224 verbundenes Zwischenglied bzw. Kupplungsglied 138 mit der dritten Ausgangswelle 114 durch Schließen einer nicht dargestellten Kupplung für den fünften Fahrbereich verbunden.
nochmals über seinen gesamten Verstellbereich bis zu seiner negativen Endstellung durchfahren, um am Ende des fünften Fahrbereiches die Endübersetzung des Getriebes zu erreichen. Für den Rückwärtsfahrbetrieb sind drei Fahrbereiche schaltbar, wobei bei geschlossener Kupplung 67 im Planetengetriebe 206 die Drehrichtung der Kupplungswelle 10 innerhalb eines ersten, zweiten und dritten Schaltbereiches in Gegendrehrichtung auf die Abtriebswelle 2 übertragen werden. Der Schaltablauf sowie die Schaltfunktionen sind mit dem ersten, zweiten und dritten Vorwärtsfahrbereich identisch.

### Funktionsablauf Getriebeausführung Figur 12 und 13

Dieses Getriebe arbeitet im ersten und im Rückwärtsbereich rein-hydrostatisch, wobei bei Fahrtrichtungsvorwahl Kupplung 27 und Kupplung 31 geschlossen wird. Der Hydrostat wird nun zum Anfahren von Stellung "Null" bis auf seine negative Endstellung ausgeregelt, was dem Ende des ersten Schaltbereiches entspricht. Die erste Ausgangswelle 13 des Summierungsplanetengetriebes 104 hat in diesem Zustand Gleichlauf mit der Zwischenwelle 140 erreicht, sodaß die Kupplung 23 zum Schalten des zweiten Fahrbereiches geschlossen und die Kupplung 27 der Planetengetriebeeinheit 5 geöffnet werden kann. Innerhalb dem zweiten Bereich wird nun der Hydrostat zurückgeregelt bis zu seiner positiven Endstellung, in der nun alle Glieder des Summierungsplanetengetriebes Gleichlauf erreicht haben. In diesem Zustand hat das mit der zweiten Ausgangswelle 14 des Summierungsplanetengetriebes in Wirkverbindung stehende Hohlrad 125 des Planetengetriebes 122 Drehzahl "Null" erreicht, so daß dieses über die Kupplung 126 zum Schalten des dritten Fahrbereiches geschlossen werden kann. Der Hydrostat wird nun zurückgeregelt bis zu seiner negativen Endstellung, wobei die erste Ausgangswelle 13 des Summierungsplanetengetriebes mit der noch angekoppelten Zwischenwelle bzw. Kupplungswelle 140 Gleichlauf mit der Abtriebswelle erreicht haben. Zur Schaltung des vierten Fahrbereiches wird nun die Kupplung 19 geschlossen bzw. der Kupplung 23 zugeschaltet. Bei nun erfolgter Rückregelung des Hydrostaten bis zu seinem positiven Endpunkt wird bei Ende des vierten Schaltbereiches ebenfalls wieder Gleichlauf aller Summierungsplanetengetriebeglieder sowie der Abtriebswelle 2 erzielt. Nun erfolgt die Schaltung in den fünften Bereich durch Schließen der Kupplung 35, wodurch die Abtriebswelle mit der zweiten Ausgangswelle 14 des Summierungsplanetengetriebes triebverbunden wird. Die Endübersetzung am Ende des fünften Schaltbereiches wird nun erreicht, indem der Hydrostat wiederum bis zu seiner negativen Endstellung zurückgeregelt wird. Die Zwischenwelle bzw. Kupplungswelle 140 bleibt innerhalb der Bereiche "drei" und "fünf" lastlos über die Kupplung 23 an der ersten Ausgangswelle 13 angekoppelt.

Der Rückwärtsbereich entspricht der Schaltfunktion des ersten Vorwärtsfahrbereiches, wobei der Hydrostat lediglich in die entsprechende Gegenrichtung von "Null" bis zur positiven Endstellung ausgeregelt wird. Bei diesem Getriebe ist ein schneller Rückwärtsbereich schaltbar, ebenfalls rein-hydrostatisch, wobei das Hydrostatgetriebe 6 überbrückt wird, indem das Hohlrad 30 der Planetengetriebestufe 5 über die Kupplung 19 direkt mit der Abtriebswelle verbunden wird, wobei nur die Übersetzung einer Planetengetriebestufe 5 bei geschlossener Kupplung 27 wirksam ist.
Der Funktionsablauf der Getriebeausführung gemäß Figur 13 ist weitgehend mit der nach Figur 12 identisch. Bei geschlossener Kupplung 27 wird der Hydrostat im ersten Fahrbereich von "Null" auf seine negative Endstellung durchgeregelt, wobei über das Planetengetriebe 205 und deren Übersetzung die Abtriebswelle 2 auf eine Drehzahl angehoben wird, bei der das Hohlrad 34 des Planetengetriebes 6 Drehzahl "Null" erreicht hat, so daß dieses zum Schalten des zweiten Bereiches über die Kupplung 31 mit dem Gehäuse verbunden werden kann. Der Hydrostat wird nun im zweiten Schaltbereich zurückgeregelt auf "Null" und darüberhinaus bis zu seiner positiven Endstellung. Hier haben alle Glieder des Summierungsplanetengetriebes Gleichlauf und das Hohlrad 125 durch die entsprechende Übersetzung des Planetengetriebes 122 Drehzahlstillstand, so daß dieses über die Kupplung 126 mit dem Gehäuse kuppelbar ist zur Schaltung des dritten Schaltbereiches. Nach wiederholter Rückregelung des Hydrostaten bis zu seiner negativen Endstellung hat nun die erste Ausgangswelle 13 des Summierungsplanetengetriebes Gleichlauf mit der Abtriebswelle 2 erreicht, so daß diese über die Kupplung 19 miteinander verbindbar sind für die Schaltung des vierten Schaltbereiches. Der Hydrostat wird jetzt wieder in seine positive Endstellung zurückgeregelt, an der am Ende des vierten Schaltbereiches alle Getriebeglieder Synchronlauf haben. Jetzt wird die Kupplung 35 geschlossen für die Schaltung des fünften Fahrbereiches. Nach erfolgter Rückregelung des Hydrostaten bis zu seinem maximalen negativen Endpunkt ist die Endübersetzung des Getriebes erreicht.

Auch mit diesem Getriebe ist ein schneller Rückwärtsfahrbereich möglich durch eine zusätzliche Kupplung 127, über diese die Abtriebswelle 2 direkt mit der zweiten Hydrostateinheit B verbindbar ist.

Im Hinblick auf nahtlose Bereichsschaltungen werden Synchronlaufabweichungen bzw. - fehler, z.B. infolge lastabhängigen Drehzahlschlupfes des Hydrostaten durch entsprechende Verstellreserve in der Hydrostatik ausgeglichen. Außerdem ist nur annähernder Synchronlauf der zu schaltenden Kupplungselemente erforderlich.
Unter der Definition "Synchronlauf" bzw. "Gleichlauf" wird der Synchronlaufbereich verstanden, der vorgenannte Abweichungen enthält.
Unter der Definition "Endstellung" oder "maximale Verstellgrösse" beim Bereichswechsel wird die jeweils günstige Regelstellung der Hydrostatverstellung für die Bereichsumschaltung verstanden, die eine beliebige Zwischenstellung zwischen "Null" und Endverstellung des Hydrostaten sein kann.

Für die Bereichsschaltungen können sehr vorteilhaft form- plus kraftschlüssig schaltbare Kupplungen verwendet werden, wie aus der deutschen Patentanmeldung DE-A-39 03 010 bekannt ist.

Mit dieser Erfindung wird ein stufenloses Antriebssystem geschaffen, das nach Art des Baukastensystems eine Getriebefamilie ermöglicht, mit der mit wenig Grundbau-Einheiten - Summierungsplanetengetriebe, zweite und dritte Planetengetriebeeinheit - ein weites Anwendungsspektrum sowohl im PKW-Getriebe-Bereich, LKW-Getriebe-Bereich und im Bereich der Arbeitsmaschinen abgedeckt werden kann. Zum Beispiel ist es auf einfache Art möglich, wie in Figur 18 und 19 dargestellt, insbesondere für den Nutzkraftfahrzeugbereich oder Arbeitsmaschinenbereich aus den Grundbaueinheiten - Summierungsplanetengetriebe 104, Kupplungspakete 139, nachgeordnete Planetengetriebeeinheit 206 und weiteres Kupplungspaket 22 - durch Zwischenschaltung einer zusätzlichen Planetengetriebestufe 105 und einer weiteren Kupplung 23 aus einem Getriebe mit vier Vorwärtsbereichen und zwei Rückwärtsbereichen ein Getriebe mit fünf Vorwärtsbereichen und drei Rückwärtsbereichen zu schaffen, wobei im jeweiligen letzten Vorwärtsfahrbereich fahrzeuggerecht die Abtriebsdrehzahl ab Bereichsbeginn relativ zur Drehzahl der Antriebswelle 1 bzw. Eingangswelle 11 ansteigt.

Im PKW-Bereich ist in den unteren Leistungsklassen ein Getriebe mit zwei bzw. drei Vorwärtsfahrbereichen ausreichend. Für den höheren Leistungsbereich hingegen ist ein dritter und vierter Bereich notwendig, um auch hier mit kleinen Hydrostateinheiten auskommen zu können, die aufgrund der hohen Antriebsdrehzahlen eine gewisse Größe nicht überschreiten dürfen.
Dies trifft auch im Bereich der Arbeitsmaschinen zu, z.B. beim Schlepper, dessen Hauptgeschwindigkeitsbereich bei 6 bis 10 km/h liegt. Mit dieser Erfindung ist eine optimale Anpassung realisierbar, so daß im Hauptbetriebsbereich die hydraulischen Leistungsanteile sehr niedrig und die spezifischen Anforderungen an den Hydrostaten günstig sind. Weitere Vorteile sind, daß die Hydrostatgeräusche wesentlich abgebaut werden durch niedrigere spezifische Belastung, daß die einzelnen Bauelemente gegenüber bekannten Systemen in ihren Durchmesser-Maßen klein sind, die schneller-rotierenden Teile innenliegend und das allgemeine Drehzahlniveau der einzelnen Glieder und die Relativ-Drehzahl niedrig sind. Die einzelnen Bauteile sind einfach herstellbar und in gemeinsamen Baugruppen montagefreundlich zu kompakten Einzel-Baueinheiten montierbar.

Alle Getriebe-Systeme zeichnen sich besonders auch dadurch aus, daß die einzelnen Bereichsgrößen weitgehend den Forderungen der verschiedenen fahrzeugspezifischen Bedingungen angepaßt werden können, insbesondere im Hinblick auf guten Wirkungsrad und daß bei allen Bereichen der letzte Fahrbereich sehr vorteilhaft als gorßer Over-drive-Bereich ausnutzbar ist ohne zusätzlicher Übersetzungsanpassungsstufe zwischen dem Getriebe und der Triebachse, da die Abtriebsdrehzahl, wie erwähnt, zu Beginn des letzten Schaltbereiches über die Antriebsdrehzahl ansteigt. Die verschiedenen Ausführungsformen der Erfindung erlauben eine gezielte anwendungsbezogene Auswahl für nahezu alle Kraftfahrzeuge, insbesondere im Bereich höherer Leistungsklassen.

Die einzelnen Getriebekomponenten erlauben auch eine individuelle Anpassung hinsichtlich der Bauweise an verschiedene Fahrzeugforderungen. Zum Beispiel ist, wie in Figur 9 dargestellt, das Hydrostatgetriebe A,B achsversetzt zu den Baueinheiten - Summierungsplanetengetriebe 404 und dem zugeordneten Planetengetriebe 206 sowie den entsprechenden Kupplugen - angeordnet. Über eine ebenfalls achsversetzt angeordnete Antriebswelle 1, 78 wird die Hydrostateinheit A über eine Stirnradstufe 77 und durch eine weitere Stirnradstufe 76, die zweite Hydrostateinheit B mit der zweiten Welle 12 des Summierungsplanetengetriebes verbunden. Die Eingangswelle 1 ist über eine weitere Stirnradstufe 75 mit der ersten Welle 11 des Summierungsplanetengetriebes verbunden. Die Eingangswelle 1 kann durch das Getriebe geführt werden und mit einer entsprechenden Welle 78 auf der gegenüberliegenden Seite angeschlossen sein, die zum Beispiel als Zapfwelle bei einem Schleppergetriebe dienen kann. Die Welle 78 kann auch als Antriebswelle verwendet werden für den Fall, daß Antrieb und Abtrieb auf gleicher Getriebeseite erfolgen sollen, was sehr vorteilhaft sein kann, z.B. bei einer Motor-Getriebe-Kombination mit quer im Fahrzeug angeordnetem Antriebspaket. Hierbei besteht die weitere Möglichkeit, daß die Abtriebswelle 2 mit einem Winkelgetriebe kombiniert werden kann, so daß die rechtwinklig zur Abtriebswelle 2 liegende Getriebeausgangswelle besonders lagegünstig zum Antrieb der Triebachse plaziert ist. Diese Ausführung ist in den Zeichnungen nicht dargestellt.

Auch für den PKW ist ein Getriebeaufbau für Querbauweise sehr vorteilhaft ausführbar, indem zum Beispiel der Motor gleichachsig zur Hydrostateingangswelle 1 und den Hydrostateinheiten A und B angeordnet ist und axial versetzt dazu die übrigen Komponenten des Verzweigungsgetriebes liegen, wobei das Summierungsplanetengetriebe über zwei Stirnradstufen mit der ersten und zweiten Eingangswelle 11 und 12 verbunden sind und die Ausgangswelle 2 zweckmäßigerweise über eine weitere Stirnradstufe mit einem Achsdifferential, wie aus konventionellen Getrieben bekannt, in Triebverbindung steht. Auch diese Ausführung ist in den Zeichnungen nicht dargestellt.

Für PKWs mit längsangeordnetem Getriebe sind die Komponenten, wie in den Figuren 1 bis 7 und 10 bis 13 dargestellt, hintereinander angeordnet, wobei dem Summierungsplanetengetriebe ein zweites Planetengetriebe 5; 105; 205 nachgeordnet ist und danach ein Kupplungspaket 21; 71; 70; 139 folgt, das zwei bis vier Kupplungen zum Schalten der ersten Fahrbereiche enthält und daß dem nachfolgend ein weiteres Planetengetriebe 6; 106; 206; 306 eingebaut ist. Die zur Schaltung der höheren Schaltbereiche erforderlichen Kupplungen 19, 35, die vorzugsweise direkt mit der Abtriebswelle 2 verbindbar sind, sind in einem weiteren Kupplungspaket 22 zweckmäßigerweise dem driten bzw. weiteren Planetengetrieben 6, 106, 206, 306 räumlich nachgeordnet. Hierdurch ist eine günstige hydraulische Versorgung für das Steueröl der Kupplungen gegeben.

Da die Bereichsschaltungen bei Synchronlauf bzw. im Synchronlaufbereich der zu schaltenden Kupplungsglieder stattfinden, können sehr vorteilhaft formschlüssige oder form- plus kraftschlüssig schaltbare Kupplungen verwendet werden, wie aus der deutschen Patentanmeldung DE-A-39 03 010 bekannt ist.
Unter der Definition "verbunden" oder "direkt verbunden" wird eine meist drehzhalgleiche Verbindung mit oder ohne zwischengeschalteten Getriebegliedern verstanden; z.B. durch Blockschaltung eines Planetengetriebes, z.B. durch Verbinden eines Sonnenrades mit dem Hohlrad oder dem Steg, wie durch Kombination mit dem Planetengetriebe 306 möglich, wird eine drehzahlgleiche Verbindung bzw. Triebverbindung hergestellt.

Bei Planetengetrieben ist es funktionsgleich welches Glied innerhalb des Triebstranges über eine Kupplung verbunden wird. Die dargestellten bzw. beschriebenen Kupplungen stellen jeweils die technisch günstigere Lösung dar.

## Patentansprüche

1. Hydrostatisch-mechanisches Verzweigungsgetriebe für Kraftfahrzeuge mit mindestens vier Vorwärtsfahrbereichen mit einer ersten Hydrostateinheit (A) verstellbaren Volumens und einer zweiten Hydrostateinheit (B), vorzugsweise konstanten Volumens, mit einem mit wenigstens vier Wellen ausgebildeten Summierungsplanetengetriebe (4; 104; 204; 304; 404; 504; 604; 704) zum Aufsummieren der hydraulischen und mechanischen Leistung, wobei die erste Welle (11) des Summierungsplanetengetriebes ständig mit der Antriebswelle und einer ersten Hydrostateinheit (A) verbunden ist, die zweite Welle (12) des Summierungsplanetengetriebes ständig mit der zweiten Hydrostateinheit (B) verbunden ist und die dritte Welle (13), vierte Welle (14) und gegebenenfalls weitere Wellen des Summierungsplanetengetriebes Ausgangswellen sind und mit der Abtriebswelle (2) mittelbar oder unmittelbar wechselweise verbindbar sind und wobei eine weitere oder mehrere Getriebeeinheiten zugeordnet sind,
**dadurch gekennzeichnet,**
a) daß eine zweite, bevorzugt als Planetengetriebestufe ausgebildete Getriebeeinheit (5; 205; 305) vorgesehen ist, die mit einem Glied (Sonnenrad 29; 131) mit der zweiten Hydrostateinheit (B) und einer Welle (12; 45) des Summierungsplanetengetriebes (4; 104; 204; 304; 504) verbunden ist, durch ein zweites Glied (Steg 28; Hohlrad 132) mit dem Gehäuse (20) verbunden bzw. verbindbar ist und durch sein drittes Glied (Hohlrad 30; 135) mit einer Kupplungswelle bzw. Ausgangswelle (10; 140; 124, 2) verbunden bzw. verbindbar ist und im ersten Fahrbereich die Leistung rein hydrostatisch übertragen wird;
b) daß eine dritte Getriebeeinheit (6; 106; 206; 306; 406) zugeordnet ist, deren erstes Glied bzw. erste Welle (Sonnenrad 32) durch eine Kupplungswelle bzw. Ausgangswelle (10; 140) mit der zweiten Getriebeeinheit (5; 205; 305) verbunden bzw. verbindbar ist und über eine oder mehrere Kupplungen (23; 24) mit der dritten Welle (13) oder/und der vierten Welle (14) des Summierungsplanetengetriebes (4; 104; 204; 304; 404; 504) verbindbar ist, wobei ein Glied der dritten Getriebeeinheit mit der Abtriebswelle (2) verbunden bzw. verbindbar ist;
c) daß im vierten Fahrbereich und einem möglichen weiteren Fahrbereich wechselweise die dritte Welle (13; 50) des Summierungsplanetengetriebes und die vierte Welle (14) mit der Abtriebswelle (2) direkt oder über Zwischenglieder (Kupplungswelle 140) verbindbar sind (Figur 1; 3; 12; 13).

2. Verzweigungsgetriebe nach dem Oberbegriff des Anspruches 1
**dadurch gekennzeichnet,**
a) daß des Summierungsplanetengetriebe (104, 105; 204, 105; 304, 105) mindestens fünfwellig ausgebildet ist und zwei Eingangswellen (11, 12) und drei Ausgangswellen (60; 55, 50, 13, 15, 14) besitzt, wobei die erste, zweite und dritte Ausgangswelle (66; 55; 14) wechselweise mit einer Kupplungswelle (10) verbindbar ist;
b) daß eine weitere Getriebeeinheit (6; 106; 206; 306; 406) im ersten, zweiten und dritten Fahrbereich über eine Kupplungswelle (10) wechselweise mit einer der Ausgangswellen (60; 55; 14) des Summierungsplanetengetriebes verbindbar ist und die gesamte aufsummierte hydraulische und mechanische Leistung innerhalb der ersten drei Fahrbereiche überträgt;
c) daß im vierten und möglichen fünften Fahrbereich die zweite Ausgangswelle (15, 50) und die dritte Ausgangswelle (14) wechselweise mit der Abtriebswelle (2) direkt oder über Zwischenglieder (Kupplungsglied 137) verbindbar sind (Figur 4, 5, 6 und 7).

3. Hydrostatisch-mechanisches Verzweigungsgetriebe für Kraftfahrzeuge mit mindestens drei Vorwärtsfahrbereichen mit einer ersten Hydrostateinheit (A) verstellbaren Volumens und einer zweiten Hydrostateinheit (B), vorzugsweise konstanten Volumens, mit einem mit wenigstens vier Wellen ausgebildeten Summierungsplanetengetriebe (404; 504; 704; 804; 904) zum Aufsummieren der hydraulischen und mechanischen Leistung, wobei die erste Welle (11) des Summierungsplanetengetriebes ständig mit der Antriebswelle und einer ersten Hydrostateinheit (A) verbunden ist, die zweite Welle (12) des Summierungsplanetengetriebes ständig mit der zweiten Hydrostateinheit (B) verbunden ist und die dritte Welle (83), vierte Welle (84) und gegebenenfalls weitere Wellen des Summierungsplanetengetriebes Ausgangswellen sind und mit der Abtriebswelle (2) mittelbar oder unmittelbar wechselweise verbindbar sind und wobei dem Summierungsplanetengetriebe eine weitere Getriebeeinheit (6; 106; 206; 306; 406) zugeordnet ist
**dadurch gekennzeichnet,**
daß das Summierungsplanetengetriebe (404; 504; 101; 704; 804; 904) wenigsten fünfwellig ausgebildet ist und zwei Eingangswellen (11, 12) und drei Ausgangswellen (83, 84, 85) besitzt, wobei die erste Ausgangswelle (83) und die zweite Ausgangswelle (84) mit einer Kupplungswelle (10) und einem nachgeordneten Planetengetriebe (6; 106; 206; 306) oder Vorgelegegetriebe (406) wechselweise in einem ersten und zweiten Fahrbereich verbindbar sind und die dritte Ausgangswelle (85) des Summierungsplanetengetriebes für den dritten Fahrbereich mit der Abtriebswelle (2) direkt oder über Zwischenglieder koppelbar ist und daß für einen möglichen vierten Fahrbereich die zweite Ausgangswelle (84) mit der Abtriebswelle (2) direkt oder über Zwischenglieder koppelbar ist und daß das Summierungsplanetengetriebe (404) einen einzigen Planetenradträger (88) oder eine einzeige Stegwelle (88, 143) besitzt, auf dem bzw. auf der alle Planetenräder des Summierungsplanetengetriebes (404 bzw. 704) gelagert sind; oder daß das Summierungsplanetengetriebe (704; 504; 804; 904) einen oder mehrere Planetenradträger (88; 143, 88; 153, 160; 162, 169; 97, 107) besitzt, wobei die dritte Ausgangswelle (85) zum Schalten des dritten Fahrbereiches als innenliegende Welle ausführbar ist und zumindest eine der ersten oder zweiten Ausgangswellen (83; 84) über der dritten Ausgangswelle angeordnet ist (Fig. 9; 9a; 10; 16; 16a; 16b; 17; 18; 20)

4. Hydrostatisch-mecanisches Verzweigungsgetriebe nach dem Oberbegriff des Anspruches 3
**dadurch gekennzeichnet,** daß das
Summierungsplanetengetriebe (404; 504, 101; 704, 45, 143, 144; 804, 158, 159, 160; 904) wenigstens fünfwellig ausgebildet ist und zwei Eingangswellen (11, 12) und drei Ausgangswellen (83, 84, 85) besitzt, wobei die erste Ausgangswelle (83) und die zweite Ausgangswelle (84) mit einer Kupplungswelle (10) und einem nachgeordneten Planetengetriebe (6; 106; 206; 306) bzw. Vorgelegegetriebe (406) wechselweise in einem ersten und zweiten Fahrbereich verbindbar sind und die dritte Ausgangswelle (85) des Summierungsplanetengetriebes für den dritten Fahrbereich mit der Abtriebswelle (2) direkt oder über Zwischenglieder kuppelbar ist, daß für einen möglichen vierten Fahrbereich die zweite Ausgangswelle (84) mit der Abtriebswelle (2) direkt oder über Zwischenglieder kuppelbar ist und daß die Kupplungen (91, 92) für den ersten und zweiten Fahrbereich zwischen dem Summierungsplanetengetriebe und dem nachgeordneten Planetengetriebe (6; 106; 206; 306) bzw. Vorgelegegetriebe (406) und die Kupplungen (19, 35) für den dritten und vierten Fahrbereich nach dem nach-geordneten Planetengetriebe bzw. Vorgelegegetriebe angeordnet sind (Fig. 9; 9a; 10; 16; 16a; 16b; 17; 18; 19; 20)

5. Verzweigungsgetriebe nach dem Oberbegriff des Anspruches 1
**dadurch gekennzeichnet**,
a) daß einem ersten Summierungsplanetengetriebe (604) ein weites Summierungsplanetengetriebe (115) zugeordnet ist, wobei das erste Summierungsplanetengetriebe (604) und das zweite Summierungsplanetengetriebe (115) mit der ersten Welle (11) das Summierungsplanetengetriebes und der ersten Hydrostateinheit (A) über Zwischenglieder (Welle 11, 136) verbunden bzw. verbindbar ist;
b) daß das gemeinsame Summierungsplanetengetriebe (604, 115) mindestens drei Ausgangswellen (141, 113, 114) besitzt, wobei mindestens eine Ausgangswelle (113, 114) des ersten Summierungsplanetengetriebes (604) mit dem zweiten Summierungsplanetengetriebe (115) wechselweise verbindbar ist;
c) daß eine weitere Getriebeeinheit (6; 106; 206; 306; 406) zugeordnet ist, die wechselweise mit beiden Summierungsplanetengetrieben (604, 115) oder mit nur der ersten Summierungsplanetengetriebeeinheit (604) zusammenwirkt und im ersten, zweiten und dritten Fahrbereich die Gesamtleistung des Getriebes über eine Welle bzw. Kupplungswelle (10) überträgt;
(Figur 11)

6. Verzweigungsgetriebe nach dem Oberbegriff des Anspruches 1
**dadurch gekennzeichnet**,
a) daß das Summierungsplanetengetriebe vierwellig ausgebildet ist und diesem ein zweites Planetengetriebe (5) ein drittes Planetengetriebe (6) und ein viertes Planetengetriebe (122) zugeordnet ist, wobei das zweite Planetengetriebe (5; 205) mit einem Glied (Sonnenrad 29) mit der zweiten Hydrostateinheit (B) verbunden, das zweite Glied (Steg 28) mit dem Gehäuse verbunden oder verbindbar ist und das dritte Glied (Hohlrad 30) mit der Abtriebswelle (2) ständig verbunden oder über eine Kupplung (19) verbindbar ist;
b) daß ein drittes Planetengetriebe (6) zugeordnet ist, das mit der zweiten Welle (13) des Summierungsplanetengetriebes über eine erste Welle (Sonnenrad 32) verbunden oder über eine Kupplung (23) verbindbar ist, dessen zweite Welle (33) mit der Abtriebswelle (2) verbunden oder verbindbar ist und dessen dritte Welle (Hohlrad 34) mit dem Gehäuse (20) verbunden oder über eine Kupplung (31) verbindbar ist;
c) daß ein viertes Planetengetriebe (122) zugeordnet ist, das mit der dritten Welle (14) des Summierungsplanetengetriebes über eine Welle (Sonnenrad 123) und mit seiner zweiten Welle (Steg 124) mit der Abtriebswelle (2) und mit seiner dritten Welle (Hohlrad 125) mit dem Gehäuse verbunden oder über eine Kupplung (126) verbindbar ist;
d) daß wenigstens eine Ausgangswelle (13; 14) des Summierungsplanetengetriebes mit der Abtriebswelle (2) direkt oder über Zwischenglieder (140) über eine oder mehrere Kupplungen (23; 19; 35) verbindbar ist.
(Figur 12, 13 und 15)

7. Verzweigungsgetriebe nach einem oder mehreren der Ansprüche 1 bis 6
**dadurch gekennzeichnet**, daß das dem Summierungsplanetengetriebe (4; 104; 105; 204; 304; 404; 504; 604; 115; 704) zugeordnete Planetengetriebe (6; 106; 206; 306) dreiwellig oder vierwellig ausgebildet ist und die erste Welle (Sonnenrad 32) mit einer gemeinsamen Zwischenwelle bzw. Kupplungswelle (10), die zweite Welle (Steg 33) mit der Abtriebswelle (2), die dritte Welle (Hohlrad 34) mit dem Gehäuse (20) verbunden bzw. verbindbar ist und die gegebenenfalls vierte Welle (Hohlrad 46; Steg 68) mit dem Gehäuse (20) verbunden bzw. verbindbar ist, wobei die dritte Welle (34) über eine Kupplung (31) mit dem Gehäuse für Vorwärtsfahrt verbindbar und gegebenenfalls die vierte Welle (46; 68) für Rückwärtsfahrt über eine Kupplung (37; 67) mit dem Gehäuse (20) verbindbar ist.

8. Verzweigungsgetriebe nach einem oder mehreren der Ansprüchen 1 bis 7 **dadurch gekennzeichnet**, daß das nachgeordnete Planetengetriebe (6) dreiwellig ausgebildet ist und eine Welle (Hohlrad 34) mit dem Gehäuse über eine Kupplung bzw. Bremse (31) verbindbar ist, oder daß das nachgeordnete Planetengetriebe (106; 206) vierwellig ausgebildet ist, wobei zwei Wellen (34, 46; 68, 34) mit dem Gehäuse (20) wechselweise verbindbar sind.

9. Verzweigungsgetriebe nach einem der Ansprüche 1 bis 8 **dadurch gekennzeichnet**, daß das nachgeordnete Planetengetriebe (206) zweistufig ausgeführt ist, wobei die Sonnenräder (69 und 32) beider Planetengetriebestufen mit dem gemeinsamen Kupplungsglied (10) verbunden sind, der Steg (68) der ersten Stufe mit dem Gehäuse (20) über eine Kupplung (67) für den Rückwärtsbereich verbindbar ist, das Hohlrad (72) der ersten Planetengetriebestufe mit dem Steg (33) der zweiten Planetengetriebestufe und der Abtriebswelle ständig verbunden ist und das Hohlrad (34) der zweiten Planetengetriebestufe über eine Kupplung bzw. Bremse (31) mit dem Gehäuse (20) verbindbar ist. (Fig. 8)

10. Verzweigungsgetriebe nach Anspruch 2 und 7 **dadurch gekennzeichnet**, daß (gemäß Ausführung Figur 1 und 3) dem Summierungsplanetengetriebe (4; 104) ein zweites Planetengetriebe (5) zugeordnet ist, dessen Hohlrad (30) vorzugsweise mit einem gemeinsamen Kupplungsglied (10) zweier Kupplungen (23 und 24) verbunden ist und das Sonnenrad (32) des dritten Planetengetriebes (6) innerhalb eines ersten, zweiten und dritten Schaltbereiches antreibt, wobei der Steg (33) des dritten Planetengetriebes (6) mit der Abtriebswelle (2) verbunden ist und das Hohlrad (34) über eine Kupplung bzw. Bremse (31) mit dem Gehäuse (20) innerhalb der genannten drei Schaltbereiche verbunden ist und daß für einen dritten Schaltbereich die dritte Welle (13) über eine Kupplung (19) mit der Abtriebswelle (2) verbindbar ist und zum Schalten eines fünften Schaltbereiches (gemäß Ausführung Figur 3) die vierte Welle (14) des Summierungsplanetengetriebes (4; 104) über eine weitere Kupplung (35) mit der Abtriebswelle (2) verbindbar ist.

11. Verzweigungsgetriebe nach einem oder mehreren der Ansprüche 1 bis 10 **dadurch gekennzeichnet**, daß (gemäß Ausführung Figur 3) das nachgeordnete Planetengetriebe (106; 206) vierwellig ausgebildet ist und zum Schalten des Rückwärtsbetriebes eine Welle (Hohlrad 46 bzw. Steg 68) mit dem Gehäuse (20) verbunden ist, wobei im ersten Rückwärtsschaltbereich die Leistung rein-hydrostatisch über das erste Planetengetriebe (5), im zweiten Rückwärtsbereich die aufsummierte hydraulische und mechanische Leistung über die dritte Welle (13), die geschlossene Kupplung (23) auf das gemeinsame Kupplungsglied (10) fließt und im dritten Rückwärtsschaltbereich die aufsummierte hydraulisch-mechanische Leistung über die vierte Welle (14) des Summierungsplanetengetriebes bei geschlossener Kupplung (24) ebenfalls über das gemeinsame Kupplungsglied (10) auf das nachgeordnete Planetengetriebe (106; 206) und die Abtriebswelle (2) übertragen wird.

12. Verzweigungsgetriebe nach dem Oberbegriff des Anspruches 1 **dadurch** **gekennzeichnet**,
a) daß (bei Ausführung gemäß Figur 2) das Sonnenrad (129) eines zweiten Planetengetriebes (5) mit der dritten Welle (13) des Summierungsplanetengetriebes verbunden ist, bei geschaltetem ersten Vorwärts- oder Rückwärtsbereich der erste Übersetzungsbereich bis zu einem Übersetzungspunkt "X" durch eine Anfahreinrichtung als Reibkupplung (31; 23; 24), die gleichzeitig als Bereichskupplung dient oder durch ein, zwischen die beiden Hydrostateinheiten (A und B) geschaltetes Bypaßventil mit entsprechender Steuerung oder durch eine Kupplung zwischen Motor und Getriebe überbrückt wird;
b) daß eine dritte Getriebeeinheit (6; 106; 206;306;406) vorgesehen ist, dessen erste Welle (Sonnenrad 32) durch eine Kupplungswelle bzw. Ausgangswelle (10; 140) mit dem zweiten Planetengetriebe (5; 205; 305) verbunden bzw. verbindbar ist und über eine oder mehrere Kupplungen (23; 24) mit der dritten Welle (13) oder/und der vierten Welle (14) des Summierungsplanetengetriebes (4; 104; 204; 304; 404; 504) verbindbar ist, wobei ein oder zwei Glieder (Hohlrad 34; Steg 68) des dritten Planetengetriebes mit dem Gehäuse (20) und ein weiteres Glied (Steg 33) mit der Abtriebswelle (2) verbunden bzw. verbindbar ist.
c) daß im dritten Fahrbereich und einem möglichen weiteren Fahrbereich wechselweise die dritte Welle (13; 50) des Summierungsplanetengetriebes und die vierte Welle (14) mit der Abtriebswelle (2) direkt oder über Zwischenglieder (Kupplungswelle 140) verbindbar sind. (Figur 2)

13. Verzweigungsgetriebe nach einem oder mehreren der Ansprüche 1 bis 12 **dadurch gekennzeichnet**, daß das Summierungsplanetengetriebe (104) so ausgebildet ist, daß die dritte Welle zwei Ausgangswellen (13 und 15) besitzt, wobei eine Welle (13) mit einem gemeinsamen Kupplungsglied (10) und die zweite Welle (15) mit der Abtriebswelle (2) verbindbar ist (Figur 2; 3; 4 und 5).

14. Verzweigungsgetriebe nach einem oder mehreren der Ansprüche 1 bis 13 **dadurch gekennzeichnet**, daß der aus zwei Summierungsplanetengetrieben (104 und 105) bestehenden Summierungsplanetengetriebeeinheit ein Kupplungspaket (71) mit drei Kupplungen (57, 58, 59) nachgeordnet ist, das ein gemeinsames Kupplungsglied (10) besitzt, über welches im ersten, zweiten und dritten Schaltbereich die aufsummierte hydraulische und mechanische Leistung fließt, die bei geschalteter Kupplung (31) auf das dritte Planetengetriebe (6, 106, 206) übertragen wird und über ein Glied (33) dieses Planetengetriebes auf die Abtriebswelle (2) übertragen wird und daß in einem vierten Schaltbereich die aufsummierte hydraulische und mechanische Leistung über die dritte Welle (15) und die geschlossene Kupplung (19) auf die Abtriebswelle (2) und in einem fünften Schaltbereich die aufsummierte hydraulische und mechanische Leistung über die vierte Welle des Summierungsplanetengetriebes und die geschlossene Kupplung (35) auf die Abtriebswelle (2) übertragen wird und daß bei alternativer Anwendung eines vierwellig ausgeführten dritten Planetengetriebes (106, 206) bei geschalteter Rückwärtsbereichskupplung (37), wodurch ein Glied (46; 68) mit dem Gehäuse (20) verbunden ist innerhalb des ersten, zweiten und dritten Schaltbereiches die Abtriebsdrehrichtung umgekehrt wird für Rückwärtsfahrt (Figur 4 bis 7).

15. Verzweigungsgetriebe nach einem oder mehreren der Ansprüche 1 bis 13 **dadurch gekennzeichnet**, daß (bei Getriebeausführung nach Figur 6) die Abtriebswelle (2) direkt mit dem gemeinsamen Kupplungsglied (10) über eine Kupplung (60) verbindbar ist und daß bei Anwendung eines dritten Planetengetriebes (106 und 206) in vierwelliger Ausführung bei geschalteter Rückwärts-kupplung (37; 67) für die Rückwärtsfahrt innerhalb des ersten, zweiten und dritten Schaltbereiches die Abtriebsdrehrichtung umgekehrt wird, wobei im ersten Schaltbereich der Steg (66) des zweiten Planetengetriebes (105) mit dem gemeinsamen Kupplungsglied (10) verbunden ist und im zweiten Schaltbereich die dritte Welle (13) des Summierungsplanetengetriebes (104; 204; 304) über eine Kupplung (58) mit dem gemeinsamen Kupplungsglied (10) und im dritten Rückwärtsbereich die vierte Welle (14) über eine Kupplung (59) ebenfalls mit dem gemeinsamen Kupplungsglied (10) verbunden ist (Figur 6).

16. Verzweigungsgetriebe nach einem oder mehreren der Ansprüche 1 bis 15 **dadurch gekennzeichnet**, daß das Summierungsplanetengetriebe (404) fünfwellig ausgebildet ist und einen gemeinsamen Planetenträger (88) besitzt, auf dem ineinandergreifende erste Planetenräder (86) und zweite Planetenräder (87) angeordnet sind, wobei die erste Welle als Eingangswelle (11) mit einem Hohlrad (81) verbunden ist, das in erste Planetenräder (86) greift und die zweite mit der zweiten Hydrostateinheit (B) verbundene Welle (12) mit einem Sonnenrad (82) verbunden ist, das ebenfalls in erste Planetenräder (86) eingreift, daß die erste Ausgangswelle (83) als dritte Welle des Summierungsplanetengetriebes mit einem Hohlrad (89) verbunden ist und in zweite Planetenräder (87) eingreift und daß die zweite Ausgangswelle (84) als vierte Welle des Summierungsplanetengetriebes mit einem Sonnenrad (90) verbunden ist, das ebenfalls mit den zweiten Planetenrädern (87) kämmt und daß die dritte Ausgangswelle (85) als fünfte Welle des Summierungsplanetengetriebes mit dem Planetenträger bzw. gemeinsamen Steg (88) verbunden ist (Figur 9).

17. Verzweigungsgetriebe nach einem oder mehreren der Ansprüche 1 bis 16 **dadurch gekennzeichnet**, daß das Summierungsplanetengetriebe (Figur 10) fünfwellig ist und aus einer ersten Summierungsplanetengetriebeeinheit (504; 4; 104; 204; 304) und einer zweiten Summierungsplanetengetriebeeinheit (101) besteht und drei Ausgangswellen (83, 84 und 50) besitzt, wobei die erste Planetengetriebeeinheit und die zweite Planetengetriebeeinheit mit jeweils einem Glied (95, 102) mit der zweiten Hydrostateinheit (B) verbunden sind und daß das erste Summierungsplanetengetriebe vierwellig und das zweite dreiwellig ist, daß die erste Ausgangswelle (83) bevorzugt eine Stegwelle (107) des zweiten Planetengetriebes (101) darstellt und die zweite Ausgangswelle (84) und dritte Ausgangswelle (85) Ausgangswellen des ersten Summierungsplanetengetriebes (504; 104) sind.

18. Verzweigungsgetriebe nach einem oder mehreren der Ansprüche 1 bis 17 **dadurch gekennzeichnet**, daß das Summierungsplanetengetriebe (704, Figur 16) aus zwei Planetengetriebestufen besteht und eine gemeinsame Stegwelle (86, 143) besitzt, wobei die erste Planetengetriebestufe mit seinem Sonnenrad (45) mit der zweiten Eingangswelle (12) verbunden ist und dessen Stegwelle (143) mit der Stegwelle (88) der zweiten Planetengetriebestufe in ständiger Verbindung ist und das Hohlrad (144) der ersten Planetengetriebestufe mit dem Hohlrad (45) der zweiten Planetengetriebestufe sowie der ersten Eingangswelle (11) verbunden sind, daß die zweite Planetengetriebestufe ineinandergreifende erste Planetenräder (86) und zweite Planetenräder (87) besitzt und in erste Planetenräder (86) das Hohlrad (145) eingreift, das mit dem Hohlrad (144) der ersten Planetengetriebestufe verbunden ist und das mit den zweiten Planetenrädern (87) ein Hohlrad (89) kämmt, das gleichzeitg die erste Ausgangswelle (83) des Summierungsplanetengetriebes bildet, daß ein mit der zweiten Ausgangswelle (84) verbundenes Sonnenrad (90) ebenfalls in zweite Planetenräder (87) eingreift und die dritte Ausgangswelle (85) mit der gemeinsamen Stegwelle (88 und 143) der ersten und der zweiten Planetengetriebestufe verbunden ist (Figur 16).

19. Verzweigungsgetriebe nach einem oder mehreren der Ansprüche 1 bis 18 **dadurch gekennzeichnet**, daß im ersten Schaltbereich (gemäß Ausführung Figur 9, 9a, 10) die erste Ausgangswelle (83) des Summierungsplanetengetriebes (4, 104; 501, 101; 704) über eine Kupplung (91) mit der Kupplungswelle (10) verbunden ist, wobei die im Summierungsgetriebe aufsummierte Leistung über das nachgeordnete Planetengetriebe (6, 106) bei geschlossener Vorwärtsbereichskupplung (31) auf die Abtriebswelle (2) übertragen wird,
daß im zweiten Schaltbereich die zweite Ausgangswelle (84) über die Kupplung (92) mit der Kupplungswelle (10) verbunden ist, wobei die aufsummierte Leistung ebenfalls über das nachgeordnete Planetengetriebe (6, 106, 206) bei geschlossener Vorwärtskupplung (31) auf die Abtriebswelle (2) übertragen wird,
daß im dritten Fahrbereich die dritte Welle (85) des Summierungsplanetengetriebes über eine Kupplung (19) mit der Abtriebswelle (2) verbunden ist und
daß im vierten Fahrbereich die zweite Ausgangswelle (84) des Summierungsplanetengetriebes über eine weitere Kupplung (35) mit der Abtriebswelle gekoppelt ist,
daß bei Ausbildung mit integrierter Rückfahreinrichtung im ersten und im zweiten Rückwärtsbereich die gleichen die erste und zweite Ausgangswelle (83, 84) verbindenden Kupplungen (91; 92), wie im ersten und zweiten Vorwärtsfahrbereich schaltbar sind, wobei im nachgeordneten Planetengetriebe (106; 206) die Abtriebsdrehrichtung umgekehrt wird, indem die Kupplung (67) für den Rückfahrbereich geschlossen ist (Figur 9, 10, 16, 8).

20. Verzweigungsgetriebe nach einem oder mehreren der Ansprüche 1 bis 19 **dadurch gekennzeichnet**, daß (gemäß Ausführung Figur 11) im ersten Fahrbereich ein Glied des zweiten Summierungsplanetengetriebes (115) über eine Kupplung (119) mit dem Gehäuse (20) verbunden ist und eine Welle (113) des ersten Summierungsplanetengetriebes (604) mit einer Welle (Sonnenrad 117) des zweiten Planetengetriebes (115) über eine Kupplung (223) miteinander verbunden sind, wobei über ein weiteres Glied (Hohlrad 120) und die erste Ausgangswelle (141) die aufsummierte Leistung über eine Zwischenwelle bzw. Kupplungswelle (10) auf ein drittes Planetengetriebe (206; 106) bei geschlossener Kupplung (31) für den Vorwärtsbereich auf die Abtriebswelle (2) übertragen wird,
daß im zweiten Fahrbereich die Kupplungswelle (10) und das dritte Planetengetriebe (206; 106) mit der zweiten Ausgangswelle (113) des Summierungsplanetengetriebes (604, 101) triebverbunden sind,
daß im dritten Fahrbereich die dritte Ausganswelle (114) des Summierungsplanetengetriebes über Kupplungen (222 und 224) mit der Zwischenwelle bzw. Kupplungswelle (10) verbunden ist,
daß im vierten Fahrbereich die zweite Ausgangswelle (113) mit der Abtriebswelle (2) über eine Kupplung (225) gekoppelt ist,
daß in einem möglichen fünften Fahrbereich die dritte Ausgangswelle (114) des Summierungsplanetengetriebes mit der Abtriebswelle über Kupplungen verbunden ist,
daß im Rückwärtsfahrbetrieb drei Bereiche schaltbar sind, wobei im ersten, zweiten und dritten Rückwärtsbereich die Bereichsschaltungen mit dem ersten, zweiten und dritten Vorwärtsfahrbereich identisch sind jedoch im dritten Planetengetriebe (106, 206) die Abtriebsdrehrichtung umgekehrt wird durch Schließen der Kupplung (67) für den Rückwärtsfahrbetrieb (Figur 11).

21. Verzweigungsgetriebe nach einem oder mehreren der Ansprüche 1 bis 20 **dadurch gekennzeichnet**, daß das zweite Summierungsplanetengetriebe mit der ersten Welle (11) und der ersten Hydrostateinheit (A) verbunden ist durch eine nicht dargestellte Vorgelegewelle und nicht dargestellte Stirnradstufe zwischen der Stegwelle (110) des ersten Summierungsplanetengetriebes (604) und einem Glied (121) des zweiten Planetengetriebes (105) verbunden ist (nicht dargestellt).

22. Verzweigungsgetriebe nach einem oder mehreren der Ansprüche 1 bis 21 **dadurch gekennzeichnet**, daß (gemäß Ausführung Figur 12) im ersten Fahrbereich rein-hydrostatische Leistungsübertragung gegeben ist, indem die zweite Hydrostateinheit (B) über zwei Planetengetriebeeinheiten (5 und 6) mit der Abtriebswelle (2) verbunden ist, wobei jeweils ein Glied der beiden Planetengetriebeeinheiten (5 und 6) (Steg 28; Hohlrad 34) über jeweils eine Kupplung (27; 31) mit dem Gehäuse verbunden ist,
daß mit zweiten und weiteren Vorwärtsfahrbereichen das Getriebe mit Leistungsverzweigung arbeitet, wobei innerhalb dem zweiten Fahrbereich die aufsummierte hydraulische und mechanische Leistung über eine erste Ausgangswelle (13) des Summierungsplanetengetriebes (104, 204, 304, 404) bei geschlossener Kupplung (23) über eine Planetengetriebeeinheit (6) auf die Abtriebswelle (2) übertragen wird, und ein Glied (Hohlrad 34) des Planetengetriebes (6) mit dem Gehäuse (20) über eine Kupplung (31) verbunden ist,
daß im dritten Fahrbereich die zweite Ausgangswelle (14) des Summierungsplanetengetriebes mit einem Glied (Sonnenrad 123) eines weiteren Planetengetriebes (122) verbunden ist und die aufsummierte hydraulische und mechanische Leistung über dieses Planetengetriebe auf die Abtriebswelle (2) überträgt, indem ein Glied (Hohlrad 125) über eine Kupplung (126) mit dem Gehäuse gekoppelt wird,
daß im vierten Fahrbereich die Abtriebswelle (2) mit der ersten Ausgangswelle (13) des Summierungsplanetengetriebes über eine Zwischenwelle (140) und zweier geschlossener Kupplungen (23 und 19) verbunden ist,
daß im fünften Fahrbereich die zweite Ausgangswelle (14) des Summierungsplanetengetriebes über eine weitere Kupplung (35) mit der Abtriebswelle (2) verbunden ist,
daß ein langsamer und bedarfsweise ein schneller Rückwärtsfahrbereich schalbar ist, wobei beim langsamen Rückwärtsbereich zwei Planetengetriebeeinheiten (5 und 6) in Triebverbindung stehen und rein-hydrostatisch arbeiten wie im ersten Vorwärtsfahrbereich und bei schnellerem Rückwärtsfahrbereich nur eine Planetengetriebestufe (5) mit der Abtriebswelle triebverbunden ist, wodurch ein Glied (Steg 28) des zweiten Planetengetriebes (5) über eine Kupplung (27) mit dem Gehäuse verbunden ist und ein weiteres Glied (30) mit der Zwischenwelle (40) in Triebverbindung steht, das über eine geschlossene Kupplung (19) mit der Abtriebswelle (2) in diesem Betriebszustand verbunden wird. (Figur 12)

23. Verzweigungsgetriebe nach einem oder mehreren der Ansprüche 1 bis 22 **dadurch gekennzeichnet**, daß bei Getriebausführung nach (Figur 13) das zweite Planetengetriebe (205; 305) mit einem Glied (Hohlrad 30; 135) mit der Abtriebswelle (2) direkt verbunden ist, wobei die erforderliche hohe Getriebeübersetzung für den ersten Vorwärts- und Rückwärtsbereich das zweite Planetengetriebe (205) mit Doppelplanetenrädern ausgebildet ist, wobei zwei Planetenräder (128 und 129) miteinander verbunden sind und auf einem gemeinsamen Steg (28) lagern und das Sonnerad (29) mit der ersten Hydrostateinheit (B) und den ersten Planetenrädern (128) und das Hohlrad (30) mit der Abtriebswelle (2) verbunden ist und in die zweiten Planetenräder (129) eingreift und die gemeinsame Stegwelle (28) im ersten Vorwärtsfahrbereich und Rückwärtsbereich über eine Kupplung (27) mit dem Gehäuse verbindbar ist oder daß das zweite Planetengetriebe (305) mit zwei Planetengetriebestufen ausgebildet ist, wobei die erste Planetengetriebestufe mit seinem Sonnenrad (131) mit der zweiten Hydrostateinheit (B), das Hohlrad (132) der ersten Planetengetriebestufe mit dem Gehäuse (20) verbunden, der Steg (133) der ersten Planetengetriebestufe mit dem Sonnenrad (134) der zweiten Planetengetriebestufe und der Steg (28) der zweiten Planetengetriebestufe über eine Kupplung (27) mit dem Gehäuse verbindbar ist und das Hohlrad (135) mit der Abtriebswelle verbunden ist,
daß im ersten Vorwärtsfahrbereich die Stegwelle (28) des Planetengetriebes (205 und 305) mit dem Gehäuse über die Schaltkupplung (27) verbunden ist, wobei im ersten Vorwärts- und Rückwärtsbereich die Leistung rein-hydrostatisch zur Abtriebswelle (2) geführt wird,
daß im zweiten Fahrbereich die aufsummierte hydraulische und mechanische Leistung über die erste Welle (13) des Summierungsplanetengetriebes und ein drittes Planetengetriebe (6) auf die Abtriebswelle (2) übertragen wird, indem ein Glied (Hohlrad 34) des dritten Planetengetriebes (6) über eine Kupplung (31) mit dem Gehäuse verbunden ist,
daß im dritten Fahrbereich die aufsummierte hydraulische und mechanische Leistung über die zweite Welle (14) des Summierungsplanetengetriebes und ein weiteres Planetengetriebe (122) auf die Abtriebswelle (2) übertragen wird, indem das Hohlrad (125) dieses Planetengetriebes mit dem Gehäuse über eine Kupplung (126) verbunden ist,
daß im vierten Fahrbereich die Abtriebswelle (2) direkt mit der ersten Welle (13) des Summierungsplanetengetriebes durch Schliessen einer Kupplung (19) verbunden ist,
daß im fünften Fahrbereich die zweite Welle (14) mit der Abtriebswelle (2) direkt verbunden ist durch Schließen einer Kupplung (35),
daß bedarfsweise eine zusätzliche Kupplung (127) vorgesehen ist, über diese die Abtriebswelle (2) direkt mit der zweiten Hydrostateinheit (B) verbindbar ist für einen schnellen rein-hydrostatischen Rückwärtsfahrbereich. (Figur 13)

24. Verzweigungsgetriebe nach einem oder mehreren der Ansprüche 1 bis 23 **dadurch gekennzeichnet**, daß das Summierungsplanetengetriebe (4) mit zwei Hohlrädern (41 und 42) und einem Sonnenrad (45) ausgestattet ist, wobei der Steg (40) mit der Abtriebswelle (11) verbunden ist und auf der ineinandergreifende erste Planetenräder (43) und zweite Planetenräder (44) lagern, wobei das erste Hohlrad (42), das die vierte Welle (14) des Summierungsplanetengetriebes bildet, eingreift und das zweite mit der dritten Welle (13) verbundene Hohlrad (41) in zweite Planetenräder (44) kämmt und daß die zweite Welle (12) des Summierungsplanetengetriebes mit dem Sonnenrad (45) verbunden ist, das die ersten Planetenräder (43) antreibt.

25. Verzweigungsgetriebe nach einem oder mehreren der Ansprüche 1 bis 24 **dadurch gekennzeichnet**, daß das Summierungsplanetengetriebe (104) ein Hohlrad (52) und zwei Sonnenräder (45 und 51) besitzt und ineinandergreifende Planetenräder (53 und 54) auf einem Steg (50) angeordnet sind, wobei die erste Welle (11) des Summierungsplanetengetriebes mit dem Hohlrad (52) die zweite Welle (12) mit dem Sonnenrad (45), das in erste Planetenräder (53) eingreift, verbunden ist, die dritte Welle des Summierungsplanetengetriebes der Steg (50) bildet und das Sonnenrad (51) als vierte Welle (14) mit den zweiten Planetenrädern (54) in Triebverbindung steht.

26. Verzweigungsgetriebe nach einem oder mehreren der Ansprüche 1 bis 25 **dadurch gekennzeichnet**, daß das Summierungsplanetengetriebe (204) aus zwei Stirnradstufen besteht, wobei die erste Welle (11) des Summierungsplanetengetriebes mit dem Hohlrad (9) der ersten Planetengetriebestufe und dem Steg (7) der zweiten Planetengetriebestufe verbunden ist und die zweite Welle (12) mit den Sonnenrädern (17 und 18) beider Planetengetriebestufen in Verbindung steht, die dritte Welle der Steg (16) der ersten Planetengetriebestufe bildet und das Hohlrad (8) der zweiten Planetengetriebestufe mit der vierten Welle (14) gekoppelt ist.

27. Verzweigungsgetriebe nach einem oder mehreren der Ansprüche 1 bis 26 **dadurch gekennzeichnet**, daß das zweite Summierungsplanetengetriebe (105) (gem. Figur 4, 5, 6 und 7) zweistufig ausgebildet ist, wobei die erste Planetengetriebestufe über ein Sonnenrad (64) mit der zweiten Welle (12) des Summierungsplanetengetriebes und der zweiten Hydrostateinheit (B) verbunden ist, der Steg (61) mit dem Gehäuse und die beiden Hohlräder (62 und 63) miteinander gekoppelt sind und das Sonnenrad (65) der zweiten Planetengetriebestufe mit der dritten Welle (13) des Summierungsplanetengetriebes in Verbindung steht und der Steg (66) der zweiten Planetengetriebestufe über eine Kupplung (57) mit dem gemeinsamen Kupplungsglied (10) verbindbar ist.

28. Verzweigungsgetriebe nach einem oder mehreren der Ansprüche 1 bis 27 **dadurch gekennzeichnet**, daß das Kupplungspaket (70) als Vierfach-Kupplung ausgebildet ist, wobei jeweils zwei Kupplungen übereinander angeordnet sind und die erste Bereichskupplung (57) über der zweiten Bereichskupplung (58) liegt und eine Kupplung (60) für einen vierten Fahrbereich über einer Kupplung (59) für den dritten Fahrbereich angeordnet ist (Figur 6 und 7).

29. Verzweigungsgetriebe nach einem oder mehreren der Ansprüche 1 bis 28 **dadurch gekennzeichnet**, daß die dritte Welle des Summierungsplanetengetriebes (104) aus zwei Wellen (15 und 13) besteht, wobei eine Welle (13) mit dem ersten gemeinsamen Kupplungsglied (10) verbindbar und die andere Welle (15) mit der Abtriebswelle (2) verbindbar ist.

30. Verzweigungsgetriebe nach einem oder mehreren der Ansprüche 1 bis 29 **dadurch gekennzeichnet**, daß das Getriebe (nach Ausführung Figur 3) ein Mehrfach-Getriebe ist mit zwei verschiedenen Rückwärtsfahreigenschaften derart, daß ein großer erster hydrostatischer Rückwärtsbereich schaltbar ist über eine Kupplung (27) mittels der der Steg (28) des zweiten Planetengetriebes (5) mit dem Gehäuse verbunden wird, wobei ein Glied (34 bzw. 68) des vierwelligen dritten Planetengetriebes (106; 206) durch eine Schaltkupplung (34 bzw. 67) verbunden ist, oder
daß drei Rückwärtsschaltbereiche schaltbar sind, wobei ein anderes Glied (46 bzw. 68) des vierwelligen Planetengetriebes (106; 206) über eine Kupplung (37 bzw. 67) mit dem Gehäuse verbunden ist, wodurch innerhalb des ersten, zweiten und dritten Schaltbereiches die über das gemeinsame Kupplungsglied (10) eingeleitete Drehrichtung an der Abtriebswelle (2) umgekehrt wird.

31. Verzweigungsgetriebe nach einem oder mehreren der Ansprüche 1 bis 30 **dadurch gekennzeichnet**, daß das Getriebe ohne dem zweiten Planetengetriebe (5) (ähnlich Figur 3) ausgeführt ist, wobei eine der Bereichskupplungen (23) oder Kupplung (31) zum Abbremsen eines Gliedes (34) des dritten vierwelligen Planetengetriebes (106; 206) als Reibkupplung ausgebildet ist und für den Rückwärtsbereich ein anderes Glied (46 bzw. 68) des dritten vierwelligen Planetengetriebes (106; 206) durch eine Reibkupplung bzw. Bremse (37 bzw. 67) mit dem Gehäuse verbindbar ist.

32. Verzweigungsgetriebe nach einem oder mehreren der Ansprüche 1 bis 31 **dadurch gekennzeichnet**, daß das Summierungsplanetengetriebe (4; 104; 204), das zweite Planetengetriebe (5; 105), das Kupplungspaket (21; 71), drittes Planetengetriebe (6; 106; 206) und das zweite Kupplungspaket (19; 22) in aufgezählter Reihenfolge axial-fluchtend hintereinander angeordnet sind.

33. Verzweigungsgetriebe nach einem oder mehreren der Ansprüche 1 bis 32 **dadurch gekennzeichnet**, daß das Hydrostatgetriebe (3) axial versetzt zu den Baueinheiten Summierungsplanetengetriebe (104; 204; 304; 404), zweites Planetengetriebe (5; 105), erstes Kupplungspaket (21; 71; 139; 704), drittes Planetengetriebe (6; 106; 206; 122) angeordnet ist, wobei über Übersetzungsstufen (75; 76; 77) die erste bzw. zweite Welle (11 und 12) des Summierungsplanetengetriebes mit der ersten Hydrostateinheit (A) bzw. zweiten Hydrostateinheit (B) verbunden sind (Figur 9).

34. Verzweigungsgetriebe nach einem oder mehreren der Ansprüche 1 bis 33 **dadurch gekennzeichnet**, daß die Bereichskupplungen (23, 24; 91, 92) für den ersten und zweiten bzw. zweiten und dritten Fahrbereich und die Kupplungen (19, 35) für den höheren Fahrbereich zu jeweils einem Kupplungspaket oder die Kupplungen (57, 58, 59, 66) für den ersten, zweiten, dritten und vierten Fahrbereich zu einem gemeinsamen Kupplungspaket (70) zusammengefaßt sind.

35. Verzweigungsgetriebe nach einem oder mehreren der Ansprüche 1 bis 34 **dadurch gekennzeichnet**, daß die Kupplungen (19, 35) für den höheren Fahrbereich dem dritten Planetengetriebe nachgeordnet sind und die Druckölführung vorzugsweise über ein gemeinsames, mit der Abtreibswelle (2) verbundenes Kupplungsglied erfolgt.

36. Verzweigungsgetriebe nach einem oder mehreren der Ansprüche 1 bis 35 **dadurch gekennzeichnet**, daß das Summierungsplanetengetriebe (304) mit zwei Planetengetriebestufen ausgebildet ist, wobei die erste Welle (11) des Summierungsplanetengetriebes mit dem Steg (146) der ersten Planetengetriebestufe und dem Hohlrad (150) der zweiten Planetengetriebestufe verbunden ist, daß die zweite Welle (12) des Summierungsplanetengetriebes mit dem Sonnenrad (45) der zweiten Planetengetriebestufe, die dritte Welle (13) des Summierungsplanetengetriebes mit dem Steg l (149) der zweiten Planetengetriebestufe und dem Hohlrad (148) der ersten Planetengetriebestufe und die vierte Welle (14) des Summierungsplanetengetriebes mit dem Sonnenrad (147) der ersten Planetengetriebestufe verbunden ist (Figur 14).

37. Verzweigungsgetriebe nach einem oder mehreren der Ansprüche 1 bis 36 **dadurch gekennzeichnet**, daß das Summierungsplanetengetriebe (504) aus zwei Planetengetriebestufen besteht, wobei die erste Planetengetriebestufe ineinandergreifende erste Planetenräder (99) und zweite Planetenräder (100) besitzt und die erste Welle (11) des Summierungsplanetengetriebes mit dem Hohlrad (93) und dem Hohlrad (94) der ersten und zweiten Planetengetriebestufe verbunden ist, die zweite Welle (12) des Summierungsplanetengetriebes mit dem Sonnenrad (95) der zweiten Planetengetriebestufe, die dritte Welle (50) des Summierungsplanetengetriebes die Stegwelle (97) für beide Planetengetriebstufen bildet und die vierte Welle (84) mit dem Sonnenrad (98) der ersten Planetengetriebestufe verbunden ist (Figur 10).

38. Verzweigungsgetriebe nach einem oder mehreren der Ansprüche 1 bis 37 **dadurch gekennzeichnet**, daß das dritte Planetengetriebe (306) aus einer Planetengetriebestufe besteht und für Rückwärts- und Vorwärtsbetrieb schaltbar ist, wobei die Eingangswelle die Zwischenwelle bzw. Kupplungswelle (10) darstellt und mit dem Sonnenrad (32) verbunden ist, die Stegwelle (33) über eine Kupplung (67) mit dem Gehäuse (20) verbindbar ist oder daß die Stegwelle (33) mit einer weiteren Kupplung (152) mit der Abtriebswelle verbindbar ist, daß das Hohlrad (34) des Planetengetriebes über eine Kupplung (31) mit dem Gehäuse oder über eine weitere Kupplung (151) mit der Abtriebswelle (2) koppelbar ist.

39. Verzweigungsgetriebe nach einem oder mehreren der Ansprüche 1 bis 38 **dadurch gekennzeichnet**, daß das Summierungsplanetengetriebe (804) fünfwellig ausgebildet ist und zwei Planetengetriebeeinheiten besitzt und die erste Planetengetriebeeinheit mit ineinandergreifenden ersten Planetenrädern (155 und 154) ausgebildet ist, die auf einem Steg (135) angeordnet und mit der ersten Welle bzw. der Eingangswelle (11) verbunden sind, daß die zweite Welle bzw. Eingangswelle (12) mit einem in erste Planetenräder (155) eingreifendem Sonnenrad (170) und mit einem Hohlrad (158) der zweiten Planetengetriebestufe verbunden ist, daß die dritte Welle bzw. erste Ausgangswelle (160) mit dem Steg der zweiten Planetengetriebestufe, die vierte Welle bzw. zweite Ausgangswelle des Summierungsplanetengetriebes mit dem Sonnenrad (159) der zweiten Planetengetriebestufe und mit einem in erste Planetenräder (155) eingreifendes Hohlrad (156) verbunden ist und daß die fünfte Welle bzw. dritte Ausgangswelle (85) mit einem mit zweite Planetenräder (64) eingreifendes Hohlrad (157) verbunden ist. (Figur 16a)

40. Verzweigungsgetriebe nach einem oder mehreren der Ansprüche 1 bis 39 **dadurch gekennzeichnet**, daß das Summierungsplanetengetriebe (904) fünfwellig ist und aus einer ersten und einer zweiten Planetengetriebeeinheit besteht, wobei die zweite Planetengetriebeeinheit ineinandergreifende erste Planetenräder (166) und zweite Planetenräder (167) besitzt und die erste Welle (11) mit dem Hohlrad (163) der ersten Planetengetriebestufe, die zweite Welle (12) mit dem Sonnenrad (161) der ersten Planetengetriebestufe und einem mit den zweiten Planetenrädern (167) kämmenden Hohlrad (165) verbunden ist, daß die dritte Welle bzw. erste Ausgangswelle (83) den Steg (169) für beide ineinandergreifende Planetenräder (166 und 167) bildet, daß die vierte Welle bzw. zweite Ausgangswelle (84) mit einem in zweite Planetenräder (167) eingreifendes Sonnenrad (168) verbunden ist, daß die fünfte Welle des Summierungsplanetengetriebes bzw. dritte Ausgangswelle (85) mit dem Steg (162) der ersten Planetengetriebestufe und einem in erste Planetenräder (166) eingreifendes Hohlrad (164) in Triebverbindung steht.

41. Verzweigungsgetriebe nach dem Oberbegriff des Anspruches 1 **dadurch gekennzeichnet**, daß das Getriebe maximal zwei Planetengetriebeeinheiten besitzt, nämlich ein vierwelliges Summierungsplanetengetriebe (104; 204; 304) und ein weiteres Planetengetriebe (106; 206; 306), wobei vier Vorwärtsfahrbereiche und zwei Rückwärtsfahrbereiche schaltbar sind und im ersten Vorwärtsfahrbereich die zweite Welle (13) und im zweiten Vorwärtsfahrbereich die vierte Welle (14) über wechselweise schaltbare Kupplungen (23 und 24) mit dem nachgeordneten Planetengetriebe (106; 206) verbindbar ist, daß im dritten und vierten Vorwärtsfahrbereich die dritte Welle (50, 5, 15) und die vierte Welle (14) des Summierungsplanetengetriebes wechselweise über Kupplungen (23 und 24) direkt mit der Abtriebswelle (2) verbindbar sind, daß die beiden Rückfahrbereiche gleich wie die beiden Vorwärtsfahrbereiche über die Kupplungen (23 und 24) die dritte und vierte Welle (13, 14) des Summierungsplanetengetriebes schaltbar sind, wobei im Vorwärtsfahrbetrieb ein Glied des nachgeordneten Planetengetriebes (106; 206; 306)
über ein Kupplung (31) mit dem Gehäuse verbindbar ist und daß für den Vorwärtsfahrbetrieb ein anderes Glied des vierwelligen Planetengetriebes (206; 106) über eine weitere Kupplung (67) mit dem Gehäuse verbunden ist und daß der erste Vorwärtsfahrbereich und der erste Rückwärtsfahrbereich eine Übersetzungsspreizung besitzen (Figur 3a).

42. Verzweigungsgetriebe nach einem oder mehreren der Ansprüche 1 bis 41 **dadurch gekennzeichnet**, daß das mit der Kupplungswelle (10) in Triebverbindung stehende Planetengetriebe (306) in einem oder mehreren Schaltbereichen blockgeschaltet ist durch Verbinden zweier Planetengetriebeglieder (33, 34) durch eine oder mehrere Kupplungen (151, 152) und die Leistung über die Kupplungswelle (10) über das blockgeschaltete Planetengetriebe (306) auf die Abtriebswelle (2) übertragen wird.

43. Verzweigungsgetriebe nach einem oder mehreren der Ansprüche 1 bis 42 **dadurch gekennzeichnet**, daß eine nachgeordnete Getriebeeinheit (406) aus einer ersten Stirnradstufe (171) und einer zweiten mit einem Zwischenrad (174) versehenen Stirnradstufe (172) besteht, die wechselweise über Kupplungen (175 und 176) mit der Abtriebswelle (2) und einer Zwischenwelle bzw. Kupplungswelle (10) verbindbar sind.

## Claims

1. Hydromechanical power-split transmission, for vehicles with at least four forward speed ranges, comprising a first variable displacement hydrostatic unit (A) and a second hydrostatic unit (B), preferably of constant displacement, comprising a summation planetary gear train (4; 104; 204; 304; 404; 504; 604; 704) having at least four shafts for summing up the hydraulic and the mechanical power, wherein the first shaft (11) of the summation planetary gear train is permanently coupled to the input shaft and the first hydrostatic unit (A), the second shaft (12) of the summation planetary gear train is permanently coupled to the second hydrostatic unit (B) and the third shaft (13), the fourth shaft (14) and eventually further shafts of the summation planetary gear train are driven shafts which can be selectively connected directly or indirectly to the output shaft (2) and wherein at least one further transmission unit is connected thereto,
**characterised in that**
a) a second transmission unit (5; 205; 305) is provided which is preferably arranged as a planetary gear train, one member (sun gear 29; 131) of which being connected to the second hydrostatic unit (B) and to one shaft (12; 45) of the summation planetary gear train (4, 104; 204; 304; 504), a second member (carrier 28; ring gear 132) being connected, resp. connectable to the housing (20) and a third member (ring gear 30; 135) being connected, resp. connectable to a clutch shaft resp. driven shaft (10; 140; 124, 2) and within the first driving range the power is transmitted only through the hydrostatic path;
b) in that a third transmission unit (6; 106; 206; 306; 406) is connected thereto, the first member resp. the first shaft (sun gear 32) of which is connected resp. connectable to the second transmission unit (5; 205; 305) through a clutch shaft resp. driven shaft (10; 140) and connectable to the third shaft (13) or/and to the fourth shaft (14) of the summation planetary gear train (4; 104; 204; 304; 404; 504) by means of at least one clutch (23; 24), wherein one member of the third transmission unit is connected, resp. connectable to the output shaft (2);
c) in that within the fourth driving range and within one further optional driving range the third shaft (13; 50) of the summation planetary gear train and the fourth shaft (14) are alternatively connectable to the output shaft (2) directly or through intermediate members (clutch shaft 140) (figure 1; 3; 12; 13).

2. Power-split transmission according to the first part of claim 1, **characterised in that**
a) the summation planetary gear train (104, 105; 204, 105; 304, 105) comprises at least five shafts, of which two are drive shafts (11, 12) and three are driven shafts (60; 55, 50, 13, 15, 14), wherein the first, second and third driven shafts (66; 55; 14) are alternatively connectable to a clutch shaft (10);
b) in that a further transmission unit (6; 106; 206; 306; 406) is selectively connectable to one of the driven shafts (60; 55; 14) of the summation planetary gear train through a clutch shaft (10) within the first three driving ranges and transmits the summed up hydraulic and mechanical power;
c) in that within the fourth and optional fifth driving range the second driven shaft (15, 50) and the third driven shaft (14) are alternatively connectable to the output shaft (2) directly or through intermediate members (clutch member 137) (figure 4, 5, 6 and 7).

3. Hydromechanical power-split transmission, for vehicles with at least three forward speed ranges, comprising a first variable displacement hydrostatic unit (A) and a second hydrostatic unit (B), preferably of constant displacement, comprising a summation planetary gear train (404; 504; 704; 804; 904) having at least four shafts for summing up the hydraulic and the mechanical power, wherein the first shaft (11) of the summation planetary gear train is permanently coupled to the input shaft and the first hydrostatic unit (A), the second shaft (12) of the summation planetary gear train is permanently coupled to the second hydrostatic unit (B) and the third shaft (83), the fourth shaft (84) and eventually further shafts of the summation planetary gear train are driven shafts which can be selectively connected directly or indirectly to the output shaft (2) and wherein a further transmission unit (6; 106; 206; 306; 406) is connected to the summation planetary gear train, **characterised in that**
the summation planetary gear train (404; 504; 101; 704; 804; 904) comprises at least five shafts, of which two are drive shafts (11, 12) and three are driven shafts (83, 84, 85), wherein the first driven shaft (83) and the second driven shaft (84) are alternatively connectable to a clutch shaft (10) and to a downstream planetary gear train (6; 106; 206; 306) or to a countershaft transmission (406) within a first and a second driving range and within a third driving range the third driven shaft (85) of the summation planetary gear train is connectable to the output shaft (2) directly or through intermediate members and in that within a fourth optional driving range the second driven shaft (84) is connectable to the output shaft (2) directly or through intermediate members, and in that the summation planetary gear train (404) comprises only one planetary carrier (88) or only one carrier shaft (88, 143) whereon all planet pinions of the summation planetary gear train (404; resp. 704) are supported for rotation; or in that the summation planetary gear train (704; 504; 804; 904) comprises at least one planetary carrier (88; 143, 88; 153, 160; 162, 169; 97, 107), wherein the third driven shaft (85) can be arranged as a through-lay shaft for shifting the third driving range and at least one of the first and second driven shafts (83; 84) is arranged concentrically outwardly of the third driven shaft (fig. 9; 9a; 10; 16; 16a; 16b; 17; 18; 20).

4. Hydromechanical power-split transmission according to the first part of claim 3, **characterised in that** the summation planetary gear train (404; 504; 101; 704, 45, 143, 144 ; 804, 158, 159, 160; 904) comprises at least five shafts, of which two are drive shafts (11, 12) and three are driven shafts (83, 84, 85), wherein the first driven shaft (83) and the second driven shaft (84) are alternatively connectable to a clutch shaft (10) and to a downstream planetary gear train (6; 106; 206; 306) resp. countershaft transmission (406) within a first and a second driving range and the third driven shaft (85) of the summation planetary gear train is connectable to the output shaft (2) directly or through intermediate members within the third driving range, in that within a fourth optional driving range the second driven shaft (84) is connectable to the output shaft (2) directly or through intermediate members and in that the clutches (91, 92) for the first and the second driving range are arranged between the summation planetary gear train and the downstream planetary gear train (6; 106; 206; 306) resp. countershaft transmission (406) and the clutches (19, 35) for the third and the fourth driving range are arranged behind the downstream planetary gear train resp. countershaft transmission (fig. 9; 9a; 10; 16; 16a; 16b; 17; 18; 19; 20).

5. Power-split transmission according to the first part of claim 1, **characterised in that**
a) the first summation planetary gear train (604) is provided with a second summation planetary gear train (115), wherein the first shaft (11) of the first summation planetary gear train (604) is connected or connectable to the second summation planetary gear train (115) and to the first hydrostatic unit (A) through intermediate members (shaft 11, 136);
b) in that the combined summation planetary gear train (604, 115) comprises at least three driven shafts (141, 113, 114), wherein at least one driven shaft (113, 114) of the first summation planetary gear train (604) is selectively connectable to the second summation planetary gear train (115);
c) in that there is provided a downstream transmission unit (6; 106; 206; 306; 406), which cooperates alternatively with both summation planetary gear trains (604, 115) or only with the first summation planetary gear train (604) to transmit within the first, second and third speed range the total power of the transmission through one shaft, resp. clutch shaft (10); (figure 11).

6. Power-split transmission according to the first part of claim 1, **characterised in that**
a) the summation planetary gear train comprises at least four shafts, and is connected to a second planetary gear train (5), to a third planetary gear train (6) and to a fourth planetary gear train (122), wherein one shaft (sun gear 29) of the second planetary gear train (5; 205) is connected to the second hydrostatic unit (B), a second shaft (carrier 28) is connected or connectable to the housing and a third shaft (ring gear 30) is permanently connected or connectable to the output shaft (2) through a clutch (19);
b) in that there is provided a third planetary gear train (6), a first shaft (sun gear 32) thereof is connected to the second shaft (13) of the summation planetary gear train or connectable thereto through a clutch (23), a second shaft (33) thereof is connected or connectable to the output shaft (2) and a third shaft (ring gear 34) thereof is connected to the housing (20) or connectable thereto through a clutch (19);
c) in that there is provided a fourth planetary gear train (122), a first shaft (sun gear 123) thereof is connected to the third shaft (14) of the summation planetary gear train, a second shaft (carrier 124) thereof is connected to the output shaft (2) and a third shaft (ring gear 125) thereof is connected to the housing or connectable thereto through a clutch (126);
d) in that at least one driven shaft (13; 14) of the summation planetary gear train is selectively connectable to the output shaft (2) directly or through intermediate members (140) by means of one or several clutches (23; 19; 35). (figures 12, 13 and 15)

7. Power-split transmission according to at least one of the claims 1 to 6, **characterised in that**
the planetary gear train (6; 106; 206; 306) connected to the summation planetary gear train (4; 104; 105; 204; 304; 404; 504; 604; 115; 704) comprises three or four shafts, and the first shaft (sun gear 32) is connected to a common intermediate shaft resp. clutch shaft (10), the second shaft (carrier 33) is connected to the output shaft (2), the third shaft (ring gear 34) and eventually the fourth shaft (ring gear 46; carrier 68) are connectable to the housing (20), wherein the third shaft (34) is connectable to the housing through a clutch (31) for forward driving and eventually the fourth shaft (46; 68) is connected to the housing (20) through a clutch (37; 67) for reverse driving.

8. Power-split transmission according to at least one of the claims 1 to 7, **characterised in that**
the downstream planetary gear train (6) comprises three shafts and a first shaft (ring gear 34) thereof is connectable to the housing through a clutch resp. brake (31), or in that the downstream planetary gear train (106; 206) comprises four shafts, whereof two shafts (34, 46; 68, 34) are alternatively connectable to the housing (20).

9. Power-split transmission according to one of the claims 1 to 8, **characterised in that**
the downstream planetary gear train (206) comprises two planetary train steps, wherein the sun gears (69 and 32) of both planetary train steps are connected to the common clutch shaft (10), the carrier (68) of the first planetary train step is connectable to the housing (20) through a clutch (67) for the reverse driving range, the ring gear (72) of the first planetary train step is fixedly connected to the carrier (33) of the second planetary train step and to the output shaft and the ring gear (34) of the second planetary train step is connectable to the housing (20) through a clutch, resp. brake (31). (Figure 8)

10. Power-split transmission according to the claim 2 and 7, **characterised in that** (according to the embodiment of figure 1 and 3) a second planetary gear train (5) is connected to the summation planetary gear train (4; 104), the ring gear (30) thereof is preferably connected to a common clutch shaft (10) with two clutches (23 and 24) and drives the sun gear (32) of the third planetary gear train (6) within a first, second and third speed range, wherein the carrier (33) of the third planetary gear train (6) is connected to the output shaft (2) and the ring gear (34) is connected to the housing (20) through a clutch, resp. brake (31) within said three speed ranges and in that within a third speed range, the third shaft (13) is connectable to the output shaft (2) through a clutch (19) and to shift into a fifth speed range (according to the embodiment of figure 3) the fourth shaft (14) of the summation planetary gear train (4; 104) is connectable through a further clutch (35) to the output shaft (2).

11. Power-split transmission according to at least one of the claims 1 to 10, **characterised in that** (according to the embodiment of figure 3) the downstream planetary gear train (106; 206) comprises four shafts and to shift into reverse a first shaft (ring gear 46, resp. carrier 68) is connected to the housing (20), wherein within the first reverse speed range the power is transmitted purely hydrostatically through the first planetary gear train (5), within the second reverse speed range the summed up hydraulic and mechanical power is transmitted through the third shaft (13), the engaged clutch (23) to the common clutch shaft (10) and within the third reverse speed range the summed up hydromechanical power is transmitted through the fourth shaft (14) of the summation planetary gear train with engaged clutch (24) also through the common clutch shaft (10) to the downstream planetary gear train (106; 206) and the output shaft (2).

12. Power-split transmission according to the first part of claim 1, **characterised in that**
a) (within embodiment according to figure 2) the sun gear (129) of a second planetary gear train (5) is connected to the third shaft (13) of the summation planetary gear train, when the first forward or reverse speed range is engaged, the first reduction range is skipped over until a reduction point "X" by means of a starting device as a friction clutch (31; 23; 24), which constitutes also a range clutch or by means of a controlled bypass valve connected between both hydrostatic units (A and B) or by means of a clutch between the engine and the transmission;
b) in that a third transmission unit (6; 106; 206; 306; 406) is provided, whose first shaft (sun gear 32) is connected resp. connectable to the second planetary gear train (5; 205; 305) through a clutch shaft resp. driven shaft (10; 140) and is connectable to the third shaft (13) and/or to the fourth shaft (14) of the summation planetary gear train (4; 104; 204; 304; 404; 504) through at least one clutch (23; 24), wherein one or two members (ring gear 34; carrier 68) of the third planetary gear train are connected resp. connectable to the housing (20) and a further member (carrier 33) is connected resp. connectable to the output shaft (2);
c) in that within the third speed range and a further optional speed range the third shaft (13; 50) of the summation planetary gear train and the fourth shaft (14) are alternatively connectable to the output shaft (2) directly or through intermediate members (clutch shaft 140). (Figure 2)

13. Power-split transmission according to at least one of the claims 1 to 12, **characterised in that** the summation planetary gear train (104) is designed such that the third shaft comprises two driven shafts (13 and 15), whereof a first shaft (13) is connectable to a common clutch shaft (10) and the second shaft (15) is connectable to the output shaft (2) (Figures 2; 3; 4 and 5).

14. Power-split transmission according to at least one of the claims 1 to 13, **characterised in that,** a clutch package (71) with three clutches (57, 58, 59) is connected to the summation planetary gear transmission comprising two summation planetary gear trains (104 and 105) and comprises a common clutch shaft (10) transmitting the summed up hydraulic and mechanical power within the first, second and third speed range, which is transmitted to the third planetary gear train (6, 106, 206) when the clutch (31) is engaged and through a member (33) of said planetary gear train to the output shaft (2) and in that within a fourth speed range the summed up hydraulic and mechanical power is transmitted to the output shaft (2) through the third shaft (15) and the engaged clutch (19) and within a fifth speed range the summed up hydraulic and mechanical power is transmitted to the output shaft (2) through the fourth shaft of the summation planetary gear train and the engaged clutch (35) and in that in case of the optional four-shaft embodiment of the third planetary gear train (106, 206) the output speed direction is reversed for reverse driving operation, when the reverse clutch (37) is engaged, connecting thereby one member (46; 48) to the housing (20) within the first, second and third speed ranges (figure 4 to 7).

15. Power-split transmission according to at least one of the claims 1 to 13, **characterised in that,** (embodiment according to figure 6) the output shaft (2) is connectable directly to the common clutch shaft (10) through a clutch (60) and in that in case of a four-shaft embodiment of the third planetary gear train (106 and 206) the output speed direction is reversed for reverse driving operation, when the reverse clutch (37; 67) is engaged, within the first, second and third speed ranges, wherein the carrier (66) of the second planetary gear train (105) is connected to the common clutch shaft (10) within the first speed range and the third shaft (13) of the summation planetary gear transmission (104; 204; 304) is connected to the common clutch shaft (10) through a clutch (58) within the second speed range and the fourth shaft (14) is also connected to the common clutch shaft (10) through a clutch (59) within the third reverse speed range (figure 6).

16. Power-split transmission according to at least one of the claims 1 to 15,
**characterised in that** the summation planetary gear train (404) comprises five shafts and a common planetary carrier (88), carrying intermeshing first planet gears (86) and second planet gears (87), wherein the first shaft, used as drive shaft (11), is connected to a ring gear (81) meshing with the first planet gears and the second shaft (12) connected to the second hydrostatic unit (B) is connected to a sun gear (82), also meshing with the first planet gears (86), in that the first driven shaft (83) representing the third shaft of the summation planetary gear train is connected to a ring gear (89) meshing with the second planet gears (87) and in that the second driven shaft (84) representing the fourth shaft of the summation planetary gear train is connected to a sun gear (90) meshing also with the second planet gears (87) and in that the third driven shaft (85) representing the fifth shaft of the summation planetary gear train is connected to the planetary carrier resp. the common carrier (88) (figure 9).

17. Power-split transmission according to at least one of the claims 1 to 16,
**characterised in that** the summation planetary gear transmission (figure 10) has five shafts and comprises a first summation planetary gear train (504; 4; 104; 204, 304) and a second summation planetary gear train (101) and has three driven shafts (83, 84 and 50), wherein the first planetary gear train and the second planetary gear train are connected to the second hydrostatic unit (B) through a respective shaft (95, 102) and in that the first summation planetary gear train has four shafts and the second has three shafts, in that the first driven shaft representing preferably a carrier shaft (107) of the second planetary gear train (101), the second driven shaft (84) and the third driven shaft (85) are driven shafts of the first summation planetary gear train (504; 104).

18. Power-split transmission according to at least one of the claims 1 to 17, **characterised in that** the summation planetary gear transmission (704, figure 16) comprises two planetary gear train steps and a common carrier shaft (88, 143), wherein the sun gear (45) of the first planetary gear train step is connected to the second drive shaft (12), the carrier (143) thereof is permanently fixed to the carrier shaft (88) of the second planetary gear train step and the ring gear (144) of the first planetary gear train step is connected to the ring gear (145) of the second planetary gear train step and to the first drive shaft (11), in that the second planetary gear train step comprises intermeshing first planet gears (86) and second planet gears (87) and the ring gear (145) connected to the ring gear (144) of the first planetary gear train step meshes with the first planet gears (86) and in that a ring gear (89) representing the first driven shaft (83) of the summation planetary gear train meshes with the second planet gears (87), in that a sun gear (90) connected to the second driven shaft (84) meshes also with the second planet gears (87) and the third driven shaft (85) is connected to the common carrier shaft (88 and 143) of first and second planetary gear train steps (figure 16).

19. Power-split transmission according to at least one of the claims 1 to 18,
**characterised in that** within the first speed range (embodiment of figure 9, 9a, 10) the first driven shaft (83) of the summation planetary gear transmission (4, 104; 504, 101; 704) is connected to the clutch shaft (10) through a clutch (91), wherein the power summed up in the summation planetary gear transmission is transmitted to the output shaft (2) through the downstream planetary gear train (6, 106) when the forward drive range clutch (31) is engaged,
in that within the second speed range the second driven shaft (84) is connected to the clutch shaft (10) through the clutch (92), wherein the summed up power is also transmitted to the output shaft (2) through the downstream planetary gear train (6, 106, 206) when the forward drive range clutch (31) is engaged,
in that within the third speed range the third shaft (85) of the summation planetary gear transmission is connected to the output shaft (2) through a clutch (19) and in that within the fourth speed range the second driven shaft (84) of the summation planetary gear transmission is coupled to the output shaft through a further clutch (35),
in that when the arrangement comprises an integral reverse driving device within the first and the second reverse speed range, the same clutches (91; 92) connecting the first and the second driven shaft (83, 84) are shiftable, wherein the output speed direction is reversed within the downstream planetary gear transmission (106; 206), when the clutch (67) for reverse range operation is engaged (figure 9, 10, 16, 8).

20. Power-split transmission according to at least one of the claims 1 to 19,
**characterised in that** (embodiment of figure 11) within the first speed range a shaft of the second summation planetary gear transmission (115) is connected to the housing (20) through a clutch (119) and a shaft (113) of the first summation planetary gear transmission (604) is connected to a shaft (sun gear 117) of the second planetary gear transmission (115) through a clutch (223), wherein the summed up power is transmitted from a further member (ring gear 120) and the first driven shaft (141) through an intermediate shaft resp. clutch shaft (10) to the third planetary gear train (206; 106) and if the clutch (31) for the forward drive range is engaged to the output shaft (2),
in that within the second speed range the clutch shaft (10) and the third planetary gear transmission (206; 106) are drivingly connected to the second driven shaft (113) of the summation planetary gear transmission (604, 101),
in that within the third speed range the third driven shaft (114) of the summation planetary gear transmission is connected to the intermediate shaft resp. clutch shaft (10) through clutches (222 and 224),
in that within the fourth speed range the second driven shaft (113) is coupled to the output shaft (2) through a clutch (225),
in that within a fifth optional speed range the third driven shaft (114) of the summation planetary gear transmission is connected to the output shaft through clutches,
in that within the reverse drive operation three ranges are shiftable, wherein the range shifts of the first, second and third reverse speed ranges are identical with those of the first, second and third forward speed ranges but the output speed direction is reversed in the third planetary gear train (106, 206) by engaging the clutch (67) for reverse driving operation (figure 11).

21. Power-split transmission according to at least one of the claims 1 to 20,
**characterised in that** the second summation planetary gear transmission is connected to the first shaft (11) and to the first hydrostatic unit (A) through a not shown countershaft and a not shown spur gear train connecting the carrier shaft (110) of the first summation planetary gear train (604) to a member (121) of the second planetary gear train (105) (not shown).

22. Power-split transmission according to at least one of the claims 1 to 21,
**characterised in that** (embodiment of figure 12) within the first speed range a purely hydrostatic power transmission occurs, the second hydrostatic unit (B) being connected to the output shaft (2) through two planetary gear train units (5 and 6), wherein one respective member (carrier 28; ring gear 34) of both planetary gear train unit (5 and 6) is connected through a respective clutch (27; 31) to the housing,
in that within the second and further forward speed ranges a split power transmission occurs, wherein within the second speed range the summed up hydraulic and mechanical power is transmitted to the output shaft (2) through a first driven shaft (13) of the summation planetary gear train (104, 204, 304, 404) the clutch (23) being engaged and through a planetary gear train unit (6), and a member (ring gear 34) of the planetary gear train (6) is connected to the housing (20) through a clutch (31),
in that within the third speed range the second driven shaft (14) of the summation planetary gear train is connected to a member (sun gear 123) of a downstream planetary gear train (122) and the summed up hydraulic and mechanical power is transmitted to the output shaft (2) through said planetary gear train, a member (ring gear 125) being connected to the housing through a clutch (126),
in that within the fourth speed range the output shaft (2) is connected to the first driven shaft (13) of the summation planetary gear train through an intermediate shaft (140) and two engaged clutches (23 and 19), in that within the fifth speed range the second driven shaft (14) of the summation planetary gear train is connected to the output shaft (2) through a further clutch (35),
in that a slow and eventually a fast reverse speed range are shiftable, wherein within the slow reverse speed range two planetary gear train units (5 and 6) are drivingly connected and transmit the power purely hydrostatically as within the first forward speed range and within the fast reverse speed range only one planetary gear train step (5) is drivingly connected to the output shaft, one member (carrier 28) of the second planetary gear train (5) being connected to the housing through a clutch (27) and a further member (30) being drivingly connected to the intermediate shaft (40) and to the output shaft (2) through an engaged clutch (19) in this configuration. (Figure 12)

23. Power-split transmission according to at least one of the claims 1 to 22,
**characterised in that** within transmission embodiment of (figure 13) the second planetary gear train (205; 305) is directly connected to the output shaft (2) through one member (ring gear 30; 135), wherein to ensure a high reduction ratio necessary for the first forward and reverse speed range the second planetary gear train (205) is provided with stepped planet pinions, two planet pinions (128 and 129) being connected to each other and supported on a common carrier (28) and the sun gear (29) connected to the second hydrostatic unit (B) meshes with the first planet pinions (128) and the ring gear (30) connected to the output shaft (2) meshes with the second planet pinions (129) and the common carrier (28) is connectable to the housing through a clutch (27) within the first forward and reverse speed range, or in that the second planetary gear train (305) comprises two planetary gear train steps, wherein the sun gear (131) of the first planetary gear train step is connected to the second hydrostatic unit (B), the ring gear (132) of the first planetary gear train step is connected to the housing (20), the carrier (133) of the first planetary gear train step is connected to the sun gear (134) of the second planetary gear train step and the carrier (28) of the second planetary gear train step is connectable to the housing by means of a clutch (27) and the ring gear (135) is connected to the output shaft,
in that within the first forward speed range the carrier shaft (28) of the planetary gear train (205 and 305) is connected to the housing through the shift clutch (27), wherein within the first forward and reverse speed range the power is transmitted to the output shaft (2) in a purely hydrostatic power path,
in that within the second speed range the summed up hydraulic and mechanical power is transmitted to the output shaft (2) through the first driven shaft (13) of the summation planetary gear train and through a third planetary gear train (6), a member (ring gear 34) of the third planetary gear train (6) being connected to the housing through a clutch (31),
in that within the third speed range the summed up hydraulic and mechanical power is transmitted to the output shaft (2) through the second driven shaft (14) of the summation planetary gear train and through a further planetary gear train (122), the ring gear (125) of said planetary gear train being connected to the housing through a clutch (126),
in that within the fourth speed range the output shaft (2) is connected directly to the first shaft (13) of the summation planetary gear train through an engaged clutch (19),
in that within the fifth speed range the second shaft (14) is connected directly to the output shaft (2) through an engaged clutch (35),
in that, if necessary a further clutch (127) is provided, for connecting directly the output shaft (2) to the second hydrostatic unit (B) to provide a purely hydrostatic fast reverse speed range. (Figure 13)

24. Power-split transmission according to at least one of the claims 1 to 23,
**characterised in that** the summation planetary gear transmission (4) comprises two ring gears (41 and 42) and one sun gear (45), wherein the carrier (40) is connected to the driven shaft (11) and supports for rotation intermeshing first planet pinions (43) and second planet pinions (44), wherein the first ring gear (42) representing the fourth shaft (14) of the summation planetary gear train meshes with the first planet pinions (43) and the second ring gear (41) connected to the third shaft (13) meshes with the second planet pinions (44) and in that the second shaft (12) of the summation planetary gear train is connected to the sun gear (45), which drives the first planet pinions (43).

25. Power-split transmission according to at least one of the claims 1 to 24,
**characterised in that** the summation planetary gear transmission (104) comprises one ring gear (52) and two sun gears (45 and 51) and a carrier (50) supports for rotation intermeshing planet pinions (53 and 54), wherein the first shaft (11) of the summation planetary gear train is connected to the ring gear (52), the second shaft (12) to the sun gear (45), meshing with the first planet pinions (53), the third shaft of the summation planetary gear train represents the carrier (50) and the sun gear (51) representing the fourth shaft (14) is drivingly connected to the second planet pinions (54).

26. Power-split transmission according to at least one of the claims 1 to 25,
**characterised in that** the summation planetary gear transmission (204) comprises two spur gear steps, wherein the first shaft (11) of the summation planetary gear train is connected to the ring gear (9) of the first planetary gear train step and to the carrier (7) of the second planetary gear train step and the second shaft (12) is connected to the sun gears (17 and 18) of both planetary gear train steps, the third shaft represents the carrier (16) of the first planetary gear train step and the ring gear (8) of the second planetary gear train step is coupled to the fourth shaft (14).

27. Power-split transmission according to at least one of the claims 1 to 26,
**characterised in that** the second summation planetary gear train (105) (according to figures 4, 5, 6 and 7) comprises two steps, wherein the first planetary gear step is connected to the second shaft (12) of the summation planetary gear train through a sun gear (64) and to the second hydrostatic unit (B), the carrier (61) is connected to the housing and both ring gears (62 and 63) are coupled together and the sun gear (65) of the second planetary gear step is connected to the third shaft (13) of the summation planetary gear train and the carrier (66) of the second planetary gear step is connectable to the common clutch shaft (10) through a clutch (57).

28. Power-split transmission according to at least one of the claims 1 to 27,
**characterised in that** the clutch package (70) is arranged as a quadruple clutch, wherein two clutches are arranged concentrically respectively to each other and the first range clutch (57) is arranged externally respectively to the second range clutch (58) and the clutch (60) for the fourth speed range is arranged externally to the clutch (59) for the third speed range (figure 6 and 7).

29. Power-split transmission according to at least one of the claims 1 to 28,
**characterised in that** the third shaft of the summation planetary gear train (104) comprises two shafts (15 and 13), wherein one shaft (13) is connectable to the common clutch shaft (10) and the other shaft (15) is connectable to the output shaft (2).

30. Power-split transmission according to at least one of the claims 1 to 29,
**characterised in that** the transmission (according to the embodiment of figure 3) is a multiple transmission comprising two different reverse driving characteristics arranged to shift a large first hydrostatic reverse speed range through a clutch (27) connecting the carrier (28) of the second planetary gear train (5) to the housing, a member (34, resp. 68) of the four-shaft third planetary gear train (106; 206) being grounded through a shifting clutch (34 resp. 67), or to shift three reverse speed ranges, another member (46, resp. 68) of the four-shaft planetary gear train (106; 206) being connected to the housing through a clutch (37, resp. 67), reversing thereby the input rotation speed of the common clutch shaft (10) onto the output shaft (2) within the first, second and third speed ranges.

31. Power-split transmission according to at least one of the claims 1 to 30,
**characterised in that** the transmission is arranged without the second planetary gear train (5) (similar to figure 3), wherein one of the range clutches (23) or clutch (31) is arranged as a friction clutch to brake a member (34) of the four-shaft third planetary gear train (106; 206) and to provide the reverse range another member (46, resp. 68) of the four-shaft third planetary gear train (106; 206) is connectable to the housing through a friction clutch resp. brake (37 resp. 67).

32. Power-split transmission according to at least one of the claims 1 to 31,
**characterised in that** the summation planetary gear transmission (4; 104; 204), the second planetary gear train (5; 105), the clutch package (21; 71), the third planetary gear train (6; 106; 206) and the second clutch package (19; 22) are arranged in this order coaxially one behind the other.

33. Power-split transmission according to at least one of the claims 1 to 32,
**characterised in that** the hydrostatic transmission (3) is arranged axially offset to the assemblies of summation planetary gear train (104; 204; 304; 404), second planetary gear train (5; 105), first clutch package (21; 71; 139; 704), third planetary gear train (6; 106, 206; 122), wherein the first and the second shaft (11 and 12) are respectively connected to the first hydrostatic unit (A) and to the second hydrostatic unit (B) through reduction gear steps (75; 76; 77) (figure 9).

34. Power-split transmission according to at least one of the claims 1 to 33,
**characterised in that** the range clutches (23, 24; 91, 92) for the first and second, resp. second and third speed ranges and the clutches (19, 35) for the higher speed range are assembled respectively in a common clutch package or the clutches (57, 58, 59, 66) for the first, second, third and fourth speed range are assembled in a common clutch package (70).

35. Power-split transmission according to at least one of the claims 1 to 34,
**characterised in that** the clutches (19, 35) for the higher speed range are arranged downstream of the third planetary gear train and the pressurised oil supply passages are preferably provided in a clutch shaft connected to the output shaft (2).

36. Power-split transmission according to at least one of the claims 1 to 35,
**characterised in that** the summation planetary gear transmission (304) comprises two planetary gear steps, wherein the first shaft (11) of the summation planetary gear train is connected to the carrier (146) of the first planetary gear train step and to the ring gear (150) of the second planetary gear train step, in that the second shaft (12) of the summation planetary gear train is connected to the sun gear (45) of the second planetary gear train step, the third shaft (13) of the summation planetary gear train is connected to the carrier (149) of the second planetary gear train step and to the ring gear (148) of the first planetary gear train step and the fourth shaft (14) of the summation planetary gear train is connected to the sun gear (147) of the first planetary gear train step (figure 14).

37. Power-split transmission according to at least one of the claims 1 to 36,
**characterised in that** the summation planetary gear transmission (504) comprises two planetary gear steps, wherein the first planetary gear step comprises intermeshing first planet pinions (99) and second planet pinions (100) and the first shaft (11) of the summation planetary gear train is connected to the ring gear (93) of the first planetary gear train step and to the ring gear (94) of the second planetary gear train step and the second shaft (12) of the summation planetary gear train is connected to the sun gear (95) of the second planetary gear train step, the third shaft (50) of the summation planetary gear train forms the carrier shaft (97) of both planetary gear train steps and the fourth shaft (84) is connected to the sun gear (98) of the first planetary gear train step (figure 10).

38. Power-split transmission according to at least one of the claims 1 to 37,
**characterised in that** the third planetary gear transmission (306) comprises one planetary gear train step and is shiftable to provide forward and reverse driving, wherein the drive shaft represents the intermediate shaft resp. the clutch shaft (10) and is connected to the sun gear (32), the carrier shaft (33) is connectable to the housing (20) through a clutch (67), or in that the carrier shaft (33) is connectable to the output shaft through a further clutch (152), in that the ring gear (34) of the planetary gear train is connectable to the housing through a clutch (31) or to the output shaft (2) through a further clutch (151).

39. Power-split transmission according to at least one of the claims 1 to 38,
**characterised in that** the summation planetary gear train (804) comprises five shafts and two planetary gear train units and the first planetary gear step comprises intermeshing first and second planet pinions (155 and 154) rotatably supported on a carrier (153) connected to the first shaft resp. drive shaft (11), in that the second shaft resp. drive shaft (12) is connected to the sun gear (170) meshing with the first planet pinions (155) and to a ring gear (158) of the second planetary gear train step, in that the third shaft resp. first driven shaft (160) is connected to the carrier of the second planetary gear train step, the fourth shaft resp. second driven shaft of the summation planetary gear train is connected to the sun gear (159) of the second planetary gear train step and to a ring gear (156) meshing with the first planet pinions (155) and in that the fifth shaft resp. third driven shaft (85) is connected to a ring gear (157) meshing with the second planet pinions (154) (figure 16a).

40. Power-split transmission according to at least one of the claims 1 to 39,
**characterised in that** the summation planetary gear train (904) comprises five shafts and a first and a second planetary gear train unit, wherein the second planetary gear unit comprises intermeshing first planet pinions (166) and second planet pinions (167) and the first shaft (11) is connected to the ring gear (163) of the first planetary gear train step, the second shaft (12) is connected to the sun gear (161) of the first planetary gear train step and to a ring gear (165) meshing with the second planet pinions (167), in that the third shaft resp. first driven shaft (83) forms the carrier (169) for both intermeshing planet pinions (166 and 167), in that the fourth shaft resp. second driven shaft (84) is connected to a sun gear (168) meshing with the second planet pinions (167), in that the fifth shaft of the summation planetary gear train resp. third driven shaft (85) is drivingly connected to the carrier (162) of the first planetary gear train step and to a ring gear (164) meshing with the first planet pinions (166).

41. Power-split transmission according to the first part of claim 1,
**characterised in that** the transmission comprises at maximum two planetary gear train units, namely a four-shaft summation planetary gear train (104; 204; 304) and a downstream planetary gear train (106; 206; 306), wherein four forward and two reverse driving ranges are shiftable and within the first and the second forward driving range the second shaft (13) and the fourth shaft (14) respectively are alternatively connectable to the downstream planetary gear (106; 206) through shift clutches (23 and 24), in that within the third and fourth speed range, the third shaft (50, 5, 15) and the fourth shaft (14) of the summation planetary gear are alternatively connectable directly to the output shaft through clutches (23 and 24), in that both reverse driving ranges are shiftable similarly to both forward driving ranges through the clutches (23 and 24), the third and the fourth shaft (13, 14) of the summation planetary gear, wherein a member of the downstream planetary gear train (106; 206; 306) is connectable to the housing through a clutch (31) within forward driving operation and in that another member of the four-shaft planetary gear train (206; 106) is connectable to the housing through a further clutch (67) within reverse driving operation and in that the first forward and the first reverse driving range include a reduction ratio (figure 3a).

42. Power-split transmission according to at least one of the claims 1 to 41,
**characterised in that** the planetary gear (306) drivingly connected to the clutch shaft (10) is shifted to form a unit by interconnecting two shafts (33, 34) of the planetary gear train through at least one clutch (151, 152) within at least one speed range and the power is transmitted through the clutch shaft (10) and the fixed planetary gear train (306) onto the output shaft (2).

43. Power-split transmission according to at least one of the claims 1 to 42,
**characterised in that** a downstream planetary gear unit (406) comprises a first spur gear step (171) and a second spur gear step (172) having an idler gear (174), which are alternatively connectable to the output shaft (2) and an intermediate shaft resp. clutch shaft (10) through clutches (175 and 176).

## Revendications

1. Transmission hydro-mécanique à division de puissance, pour véhicules automobiles, comportant au moins quatre gammes de marche avant, comprenant une première unité hydrostatique à capacité variable (A) et une seconde unité hydrostatique (B), ayant de préférence une capacité constante, un train planétaire sommateur (4; 104; 204; 304; 404; 504; 604; 704) avec au moins quatre arbres pour additionner la puissance hydraulique et la puissance mécanique, où le premier arbre (11) du train planétaire sommateur est accouplé de façon permanente avec l'arbre d'entrée et la première unité hydrostatique (A), le deuxième arbre (12) du train planétaire sommateur est accouplé de façon permanente avec la deuxième unité hydrostatique (B) et le troisième arbre (13), le quatrième arbre (14) et le cas échéant d'autres arbres du train planétaire sommateur sont des arbres menés et peuvent être reliés directement ou indirectement avec l'arbre de sortie (2) en alternance et où une ou plusieurs unités de transmissions y sont rattachées,
**caractérisée en ce que**
a) une seconde unité de transmission (5; 205; 305) est prévue, qui est de préférence à trains planétaires, dont un élément (pignon solaire 29; 131) est relié à la seconde unité hydrostatique (B) et à un arbre (12; 45) du train planétaire sommateur (4; 104; 204; 304; 504), dont un deuxième élément (porte-satellites 28; couronne 132) est relié ou peut être relié au carter (20) et dont un troisième élément (couronne 30; 135) est relié ou peut être relié à un arbre porte-embrayages, respectivement un arbre mené (10; 140; 124, 2) et dans le premier domaine de vitesses la puissance est transmise de façon purement hydrostatique;
b) en ce qu'une troisième unité de transmission (6; 106; 206; 306 406) y est rattachée, dont un premier élément respectivement premier arbre (pignon solaire 32) est relié ou peut être relié à la seconde unité de transmission (5; 205; 305) par un arbre porte-embrayages respectivement arbre mené (10; 140) et peut être relié au troisième arbre (13) ou/et au quatrième arbre (14) du train planétaire sommateur (4; 104; 204; 304; 404; 504) par un ou plusieurs embrayages (23; 24), où un élément de la troisième unité de transmission est relié ou peut être relié à l'arbre de sortie (2);
c) en ce que dans le quatrième domaine de vitesses et dans un domaine en option supplémentaire le troisième arbre (13; 50) du train planétaire sommateur et le quatrième arbre (14) peuvent être reliés alternativement à l'arbre de sortie (2) directement ou par des éléments intermédiaires (arbre à embrayages 140) (figure 1; 3; 12, 13).

2. Transmission à division de puissance selon le préambule de la revendication 1, **caractérisé en ce que**
a) la transmission à trains planétaires sommateurs (104, 105; 204, 105; 304, 105) comprend au moins cinq éléments dont deux arbres menants (11, 12) et trois arbres menés (60; 55, 50, 13, 15, 14), où le premier, le second et le troisième arbre mené peuvent être reliés alternativement à un arbre porte-embrayages (10);
b) en ce qu'une unité de transmission suivante (6; 106, 206, 306, 406) peut être reliée sélectivement à un des arbres menés (60; 55; 14) du train planétaire sommateur par un arbre porte-embrayages (10) dans le premier, second et troisième domaine de vitesses et transmet la puissance totale hydraulique et mécanique dans les trois premiers domaines de vitesses;
c) en ce que dans le quatrième et en option dans le cinquième domaine de vitesses le second arbre mené (15, 50) et le troisième arbre mené (14) peuvent être reliés alternativement à l'arbre de sortie (2) directement ou par des éléments intermédiaires (porte-embrayages 137) (figure 4, 5, 6 et 7).

3. Transmission hydro-mécanique à division de puissance, pour véhicules automobiles, comportant au moins trois gammes de marche avant, comprenant une première unité hydrostatique à capacité variable (A) et une seconde unité hydrostatique (B), ayant de préférence une capacité constante, un train planétaire sommateur (404; 504; 604; 704; 804; 904) avec au moins quatre arbres pour additionner la puissance hydraulique et la puissance mécanique, où le premier arbre (11) du train planétaire sommateur est accouplé de façon permanente avec l'arbre d'entrée et la première unité hydrostatique (A), le deuxième arbre (12) du train planétaire sommateur est accouplé de façon permanente avec la deuxième unité hydrostatique (B) et le troisième arbre (83), le quatrième arbre (84) et le cas échéant d'autres arbres du train planétaire sommateur sont des arbres menés et peuvent être reliés directement ou indirectement avec l'arbre de sortie (2) en alternance et où une autre unité de transmission (6; 106; 206; 306; 406) est rattachée au train planétaire sommateur,
**caractérisée en ce que**
le train planétaire sommateur (404; 504; 101; 704; 804; 904) comprend au moins cinq arbres, dont deux sont menants (11, 12) et trois sont menés (83, 84, 85), où le premier arbre mené (83) et le second arbre mené (84) peuvent être reliés alternativement à un arbre porte-embrayages (10) et à un train planétaire aval (6; 106; 206; 306) ou à une transmission à arbres parallèles (406) dans un premier et un second domaine de vitesses et dans un troisième domaine de vitesses le troisième arbre mené (85) du train planétaire sommateur peut être relié à l'arbre de sortie (2) directement ou par des éléments intermédiaires,
et en ce que dans un quatrième domaine de vitesses en option le second arbre mené (84) peut être relié à l'arbre de sortie (2) directement ou par des éléments intermédiaires,
et en ce que le train planétaire sommateur (404) comprend un seul porte-satellites (88) ou un seul arbre porte-satellites (88, 143) qui porte à rotation tous les satellites du train planétaire sommateur (404; respectivement 704); ou en ce que le train planétaire sommateur (704; 504; 804; 904) comprend un ou plusieurs porte-satellites (88; 143, 88; 153, 160; 162, 169; 97, 107), où le troisième arbre mené (85) pour sélectionner le troisième domaine de vitesses peut être agencé en arbre interne et au moins le premier ou le second arbre mené (83; 84) est agencé concentriquement extérieurement au troisième arbre mené (fig. 9; 9a; 10; 16; 16a; 16b; 17; 18; 20).

4. Transmission hydrostatique à division de puissance selon le préambule de la revendication 3,
**caractérisée en ce que** le train planétaire sommateur (404; 504; 101; 704, 45, 143, 144; 804, 158, 159, 160; 904) comprend au moins cinq arbres, dont deux sont menants (11, 12) et trois sont menés (83, 84, 85), où le premier (83) et le second (84) arbre menés sont alternativement reliés à un arbre porte-embrayages (10) et à un train planétaire aval (6; 106; 206; 306) respectivement à une transmission à arbres parallèles (406) dans un premier et un second domaine de vitesses et le troisième arbre mené (85) du train planétaire sommateur peut être relié sélectivement à l'arbre de sortie (2) directement ou par des éléments intermédiaires dans le troisième domaine de vitesses, en ce que dans un quatrième domaine de vitesses en option le second arbre mené (84) peut être relié à l'arbre de sortie (2) directement ou par des éléments intermédiaires et en ce que les embrayages (91, 92) pour le premier et le second domaine de vitesses sont agencés entre le train planétaire sommateur et le train planétaire aval (6; 106; 206; 306) respectivement la transmission à arbres parallèles (406) et en ce que les embrayages (19, 35) pour le troisième et le quatrième domaine de vitesses sont agencés derrière le train planétaire aval respectivement la transmission à arbres parallèles (figures 9; 9a; 10; 16; 16a; 16b; 17; 18; 19; 20).

5. Transmission à division de puissance selon le préambule de la revendication 1, **caractérisée en ce que**
a) le premier train planétaire (604) précède un second train planétaire (115), où le premier arbre (11) du premier train planétaire (604) est relié ou peut être relié par éléments intermédiaires (arbre 11, 136) au second train planétaire (115) et à la première unité hydrostatique (A);
b) en ce que ledit train planétaire combiné (604, 115) comprend au moins trois arbres menés (141, 113, 114), où au moins un arbre mené (113, 114) du premier train planétaire sommateur (604) peut être relié sélectivement au second train planétaire sommateur (115);
c) en ce qu'une unité de transmission aval (6; 106; 206; 306; 406), qui coopère alternativement avec les deux trains planétaires sommateurs (604, 115) ou seulement avec le premier train planétaire sommateur (604) pour transmettre dans le premier, second et troisième domaine de vitesses la totalité de la puissance de la transmission par un arbre, respectivement arbre porte-embrayages (10); (figure 11).

6. Transmission à division de puissance selon le préambule de la revendication 1, **caractérisée en ce que**
a) le train planétaire sommateur comprend au moins quatre arbres, et est relié à un second train planétaire (5), à un troisième train planétaire (6) et à un quatrième train planétaire (122), où un élément (pignon solaire 29) du second train planétaire (5; 205) est relié à la seconde unité hydrostatique (B), un second élément (porte-satellites 28) est relié ou peut être relié au carter et un troisième élément (couronne 30) est constamment relié ou peut être relié par un embrayage (19) à l'arbre de sortie (2);
b) en ce qu'un troisième train planétaire (6) y est rattaché, dont un premier élément (pignon solaire 32) est relié au second arbre (13) du train planétaire sommateur ou peut y être relié par un embrayage (23), dont un second élément (33) est relié ou peut être relié à l'arbre de sortie (2) et dont un troisième élément (couronne 34) est relié ou peut être relié par un embrayage (19) au carter (20);
c) en ce qu'un quatrième train planétaire (122) y est rattaché, dont un premier élément (pignon solaire 123) est relié au troisième arbre (14) du train planétaire sommateur, dont un second élément (porte-satellites 124) est relié à l'arbre de sortie (2) et dont un troisième élément (couronne 125) est relié ou peut être relié par un embrayage (126) au carter;
d) en ce qu'au moins un arbre mené (13; 14) du train planétaire sommateur peut être relié à l'arbre de sortie (2) directement ou par des éléments intermédiaires (140) au moyen d'un ou plusieurs embrayages (23; 19; 35).
(figures 12, 13 et 15)

7. Transmission à division de puissance selon l'une ou plusieurs des revendications 1 à 6,
**caractérisée en ce que** le train planétaire (6; 106; 206; 306) relié au train planétaire sommateur (4; 104; 105; 204; 304; 404; 504; 604; 115; 704) comprend trois ou quatre arbres, et le premier arbre (pignon solaire 32) est relié à un arbre intermédiaire commun, respectivement arbre porte-embrayages (10), le second arbre (porte-satellites 33) est relié à l'arbre de sortie (2), le troisième arbre (couronne 34) et éventuellement le quatrième arbre (couronne 46; porte-satellites 68) peuvent être reliés au carter (20), où le troisième arbre (34) est relié au carter par un embrayage (31) pour la marche avant et éventuellement le quatrième arbre (36; 68) est relié au carter (20) par un embrayage (37; 67) pour la marche arrière.

8. Transmission à division de puissance selon l'une ou plusieurs des revendications 1 à 7,
**caractérisée en ce que** le train planétaire aval sommateur (6) comprend trois arbres, dont un premier arbre (couronne 34) peut être relié au carter par un embrayage, resp. frein (31) ou en ce que le train planétaire aval (106; 206) comprend quatre arbres, dont deux arbres (34, 46; 68, 34) sont alternativement reliés au carter (20).

9. Transmission à division de puissance selon l'une ou plusieurs des revendications 1 à 8,
**caractérisée en ce que** le train planétaire aval (206) comprend deux étages, où les pignons solaires (69 et 32) des deux étages de trains planétaires sont reliés à l'élément commun d'embrayages (10), le porte-satellites (68) du premier étage peut être relié au carter (20) par un embrayage (67) pour le domaine de marche arrière, la couronne (72) du premier étage de train planétaire est reliée constamment au porte-satellites (33) du second étage de train planétaire et à l'arbre de sortie et la couronne (34) du second étage de train planétaire peut être reliée au carter (20) par un embrayage, resp. frein (31). (Figure 8)

10. Transmission à division de puissance selon les revendications 2 et 7,
**caractérisée en ce que** (selon le mode de réalisation des figures 1 et 3) un second train planétaire (5) est relié au train planétaire sommateur (4; 104), dont la couronne (30) est reliée de préférence à un élément commun porte-embrayages (10) avec deux embrayages (23 et 24) et entraîne en rotation le pignon solaire (32) du troisième train planétaire (6) dans un premier, second et troisième domaine de vitesses, où le porte-satellites (33) du troisième train planétaire (6) est relié à l'arbre de sortie (2) et la couronne (34) est reliée au carter (20) par un embrayage, respectivement frein (31) dans lesdits trois domaines de vitesses et en ce que dans un troisième domaine de vitesses, le troisième arbre (13) peut être relié à l'arbre de sortie par un embrayage (19) et pour enclencher un cinquième domaine de vitesses (selon le mode de réalisation de la figure 3) le quatrième arbre (14) du train planétaire sommateur (4; 104) peut être relié par un autre embrayage (35) à l'arbre de sortie (2).

11. Transmission à division de puissance selon l'une ou plusieurs des revendications 1 à 10,
**caractérisée en ce que** (selon le mode de réalisation de la figure 3) le train planétaire aval (106; 206) comprend quatre arbres et pour passer en marche arrière un premier arbre (couronne 46, resp. porte-satellites 68) est relié au carter (20), où dans le premier domaine de marche arrière la puissance est transmise de manière purement hydrostatique par le premier train planétaire (5), dans le second domaine de marche arrière la somme des puissances hydraulique et mécanique est transmise par le troisième arbre (13), par l'embrayage (23) appliqué à l'élément commun porte-embrayages (10) et dans le troisième domaine de marche arrière la somme des puissances hydro-mécanique est transmise par le quatrième arbre (14) du train planétaire sommateur avec l'embrayage (24) appliqué et aussi par l'élément commun porte-embrayages (10) sur le train planétaire aval (106; 206) et l'arbre de sortie (2).

12. Transmission à division de puissance selon le préambule de la revendication 1, **caractérisée en ce que**
a) (dans le mode de réalisation selon la figure 2) le pignon solaire (129) d'un second train planétaire sommateur (5) est relié au troisième arbre (13) du train planétaire sommateur, lorsque le premier domaine de vitesses avant ou arrière est enclenché, le premier domaine de vitesses est sauté jusqu'à un rapport de réduction "X" au moyen d'un dispositif de démarrage tel qu'un embrayage à friction (31; 23; 24), qui constitue en même temps un embrayage de gamme ou au moyen d'une soupape de court-circuit connectée entre les deux unités hydrostatiques (A et B) ou au moyen d'un embrayage entre le moteur et la transmission;
b) en ce qu'une troisième unité de transmission (6; 106; 206; 306; 406) est prévue, dont le premier arbre (pignon solaire 32) est relié ou peut être relié au second train planétaire (5; 205; 305) par un arbre porte-embrayages, respectivement arbre mené (10; 140) et peut être relié au troisième arbre (13) et/ou au quatrième arbre (14) du train planétaire sommateur (4; 104; 204; 304; 404; 504) par au moins un embrayage (23; 24), où un ou deux éléments (couronne 34; porte-satellites 68) du troisième train planétaire est relié ou peut être relié avec le carter (20) et un autre élément (porte-satellites 33) est ou peut être relié à l'arbre de sortie (2);
c) en ce que dans le troisième domaine de vitesses et dans un autre domaine de vitesses optionnel le troisième arbre (13; 50) du train planétaire sommateur et le quatrième arbre (14) peuvent être alternativement reliés à l'arbre de sortie (2) directement ou par des éléments intermédiaires (arbre porte-embrayages 140). (Figure 2)

13. Transmission à division de puissance selon l'une ou plusieurs des revendications 1 à 10,
**caractérisée en ce que** le train planétaire sommateur (104) est agencé de manière à ce que le troisième arbre comprend deux arbres menés (13 et 15), dont le premier arbre (13) peut être relié à un élément porte-embrayages (10) et le second arbre (15) peut être relié à l'arbre de sortie (2) (Figures 2; 3; 4 et 5).

14. Transmission à division de puissance selon l'une ou plusieurs des revendications 1 à 13,
**caractérisée en ce qu'**un paquet d'embrayages (71) avec trois embrayages (57, 58, 59) est relié à la transmission à trains planétaires sommateurs comprenant deux trains planétaires sommateurs (104 et 105) et comprend un élément commun d'embrayages (10) pour transmettre la somme des puissances hydrauliques et mécaniques dans le premier, second et troisième domaine de vitesses, qui est transmise au troisième train planétaire (6, 106, 206), l'embrayage (31) étant en prise, par un élément (33) dudit train planétaire à l'arbre de sortie (2) et en ce que dans un quatrième domaine de vitesses la somme des puissances hydrauliques et mécaniques est transmise à l'arbre de sortie (2) par le troisième arbre (15) et l'embrayage (19) en prise et dans un cinquième domaine de vitesses la somme des puissances hydrauliques et mécaniques est transmise à l'arbre de sortie (2) par le quatrième arbre du train planétaire sommateur et l'embrayage (35) en prise et en ce que, dans le cas du mode de réalisation du troisième train planétaire (106, 206) avec quatre arbres, la direction de rotation de la sortie est inversée pour la marche arrière, l'embrayage (37) de marche arrière étant en prise, reliant ainsi un élément (46;48) au carter (20) dans le premier, second et troisième domaine de vitesses (figures 4 à 7).

15. Transmission à division de puissance selon l'une ou plusieurs des revendications 1 à 13,
**caractérisée en ce que** (selon la figure 6) l'arbre de sortie (2) peut être relié directement à l'élément commun d'embrayages (10) par un embrayage (60) et en ce que dans le cas du mode de réalisation du troisième train planétaire (106 et 206) avec quatre arbres, la direction de rotation de la sortie est inversée pour la marche arrière, l'embrayage (37; 67) de marche arrière étant en prise, dans le premier, second et troisième domaine de vitesses, où le porte-satellites (66) du second train planétaire (105) est relié à l'élément commun d'embrayages (10) dans le premier domaine de vitesses et le troisième arbre (13) du train planétaire sommateur (104; 204; 304) est relié à l'élément commun d'embrayages (10) par un embrayage (58) dans le second domaine de vitesses et le quatrième arbre (14) est aussi relié à l'élément commun d'embrayages (10) par un embrayage (59) dans le troisième domaine de marche arrière (figure 6).

16. Transmission à division de puissance selon l'une ou plusieurs des revendications 1 à 15,
**caractérisée en ce que** le train planétaire sommateur (404) comprend cinq arbres et un porte-satellites (88) commun, portant des premiers satellites (86) engrènés avec des seconds satellites (87), où le premier arbre, représentant un arbre menant (11), est relié à la couronne (81) engrènant avec les premiers satellites et le second arbre (12) relié à la seconde unité hydrostatique (B) est relié au pignon solaire (82), engrènant aussi avec les premiers satellites (86), en ce que le premier arbre mené (83) représentant le troisième arbre du train planétaire sommateur est relié à la couronne (89) engrènant avec les seconds satellites (87), en ce que le second arbre mené (84) représentant le quatrième arbre du train planétaire sommateur est relié à un pignon solaire (90) engrènant aussi avec les seconds satellites (87) et en ce que le troisième arbre mené (85) représentant le cinquième arbre du train planétaire sommateur est relié au porte-satellites, respectivement au porte-satellites commun (88) (figure 9).

17. Transmission à division de puissance selon l'une ou plusieurs des revendications 1 à 16,
**caractérisée en ce que** le train planétaire sommateur (figure 10) avec cinq arbres comprend un premier train planétaire sommateur (504; 4; 104; 204; 304) et un second train planétaire sommateur (101) et trois arbres menés (83, 84 et 50), où le premier train planétaire sommateur et le second train planétaire sommateur sont reliés à la seconde unité hydrostatique (B) par un élément respectif (95, 102), en ce que le premier train planétaire sommateur comprend quatre arbres et le second trois arbres et en ce que le premier arbre mené, de préférence un arbre porte-satellites (107) du second train planétaire (101), le second arbre mené (84) et le troisième arbre mené (85) sont des arbres menés du premier train planétaire sommateur (504; 104).

18. Transmission à division de puissance selon l'une ou plusieurs des revendications 1 à 17,
**caractérisée en ce que** le train planétaire sommateur (704, figure 16) comprend deux étages de trains planétaires et un arbre porte-satellites commun (88, 143), où le pignon solaire (45) du premier étage de train planétaire est relié au second arbre menant (12), le porte-satellites (143) duquel est fixé au porte-satellites (88) du second étage de train planétaire et la couronne (144) du premier étage de train planétaire est relié à la couronne (145) du second étage de train planétaire et au premier arbre menant (11), en ce que le second étage de train planétaire comprend des premiers satellites (86) engrènés avec des seconds satellites (87), et la couronne (145) reliée à la couronne (144) du premier étage de train planétaire engrène avec les premiers satellites (86), en ce qu'une couronne (89) représentant le premier arbre mené (83) du train planétaire sommateur engrène avec les seconds satellites (87) et en ce qu'un pignon solaire (90) relié au second arbre mené (84) engrène également avec les seconds satellites (87) et le troisième arbre mené (85) est relié au porte-satellites commun (88 et 143) du premier et du second étage de trains planétaires sommateurs (figure 16).

19. Transmission à division de puissance selon l'une ou plusieurs des revendications 1 à 18,
**caractérisée en ce que** dans le premier domaine de vitesses (mode de réalisation des figures 9, 9a, 10) le premier arbre mené (83) du train planétaire sommateur (4, 104; 504, 101; 704) est relié à l'arbre porte-embrayages (10) par un embrayage (91), où la puissance sommée dans le train planétaire sommateur est transmise à l'arbre de sortie (2) par le train planétaire aval (6, 106), l'embrayage (31) pour la marche avant étant en prise,
en ce que dans le second domaine de vitesses le second arbre mené (84) est relié à l'arbre porte-embrayages (10) par l'embrayage (92), où la puissance sommée est aussi transmise à l'arbre de sortie (2) par le train planétaire aval (6, 106, 206), l'embrayage (31) de marche avant étant en prise,
en ce que dans le troisième domaine de vitesses le troisième arbre (85) du train planétaire sommateur est relié à l'arbre de sortie (2) par un embrayage (19),
en ce que dans le quatrième domaine de vitesses le second arbre mené (84) du train planétaire sommateur est accouplé à l'arbre de sortie (2) par un autre embrayage (35)
et en ce que dans le mode de réalisation comprenant un dispositif intégré de marche arrière dans le premier et le second domaine de vitesses arrières les mêmes embrayages (91; 92) reliant le premier et le second arbre mené (83, 84) peuvent être enclenchés, où la direction de la sortie est inversée dans le train planétaire aval (106; 206), lorsque l'embrayage (67) pour la marche arrière est en prise (figure 9, 10, 16, 8).

20. Transmission à division de puissance selon l'une ou plusieurs des revendications 1 à 19,
**caractérisée en ce** que (mode de réalisation de la figure 11) dans le premier domaine de vitesses un élément du second train planétaire sommateur (115) est relié au carter (20) par un embrayage (119) et un arbre (113) du premier train planétaire sommateur (604) est relié à un arbre (pignon solaire 117) du second train planétaire (115) par un embrayage (223), où la puissance sommée est transmise par un autre élément (couronne 120) et le premier arbre mené (141), par un arbre intermédiaire respectivement arbre porte-embrayages (10) au troisième train planétaire (206; 106), et, l'embrayage (31) pour le domaine de marche avant étant en prise, à l'arbre de sortie (2),
en ce que dans le second domaine de vitesses l'arbre porte-embrayages (10) et le troisième train planétaire (206; 106) sont cinématiquement reliés au second arbre mené (113) du train planétaire sommateur (604, 101),
en ce que dans le troisième domaine de vitesses le troisième arbre mené (114) du train planétaire sommateur est relié à l'arbre intermédiaire respectivement arbre porte-embrayages (10) par des embrayages (222 et 224), en ce que dans le quatrième domaine de vitesses le second arbre mené (113) est accouplé à l'arbre de sortie (2) par un embrayage (225),
en ce que dans un cinquième domaine optionnel de vitesses le troisième arbre mené (114) du train planétaire sommateur est relié à l'arbre de sortie par des embrayages et
en ce qu'en marche arrière trois domaines peuvent être enclenchés, où les passages dans le premier, second et troisième domaine de marche arrière sont identiques avec ceux du premier, second et troisième domaine de marche avant, sauf que la direction de la sortie est inversée dans le troisième train planétaire (106, 206), l'embrayage (67) pour la marche arrière étant en prise (figure 11).

21. Transmission à division de puissance selon l'une ou plusieurs des revendications 1 à 20,
**caractérisée en ce que** le second train planétaire sommateur est relié au premier arbre (11) et à la première unité hydrostatique (A) par un arbre de renvoi non représenté et par un étage d'engrenages droits non représenté reliant l'arbre porte-satellites (110) du premier train planétaire sommateur (604) à un élément (121) du second train planétaire (105) (non représenté).

22. Transmission à division de puissance selon l'une ou plusieurs des revendications 1 à 21,
**caractérisée en ce que** (mode de réalisation de la figure 12) dans le premier domaine de vitesses la transmission de puissance est purement hydrostatique, la seconde unité hydrostatique (B) étant reliée à l'arbre de sortie (2) par deux unités de trains planétaires (5 et 6), où un élément respectif (porte-satellites 28; couronne 34) de chaque train planétaire (5 et 6) est relié par un embrayage respectif (27; 31) au carter,
en ce que dans le second et les autres domaines de vitesses la transmission de puissance est divisée, où dans le second domaine de vitesses la somme des puissances hydraulique et mécanique est transmise à l'arbre de sortie (2) par un premier arbre mené (13) du train planétaire sommateur (104, 204, 304, 404), l'embrayage (23) étant en prise, et par une première unité de train planétaire (6), un élément (couronne 34) du train planétaire (6) étant relié au carter (20) par un embrayage (31),
en ce que dans le troisième domaine de vitesses le second arbre mené (14) du train planétaire sommateur est relié à un élément (pignon solaire 123) d'un autre train planétaire (122) et la somme des puissances hydraulique et mécanique est transmise à l'arbre de sortie (2) par ledit train planétaire, un élément (couronne 125) étant relié au carter par un embrayage (126),
en ce que dans le quatrième domaine de vitesses l'arbre de sortie (2) est relié au premier arbre mené (13) du train planétaire sommateur par un arbre intermédiaire (140) et deux embrayages (23 et 19) en prise,
en ce que dans le cinquième domaine de vitesses le second arbre mené (14) du train planétaire sommateur est relié à l'arbre de sortie (2) par un autre embrayage (35),
en ce qu'un domaine de marche arrière lent et un rapide facultatif peuvent être enclenchés, où dans le domaine de marche arrière lent deux unités de trains planétaires (5 et 6) sont reliées cinématiquement et transmettent la puissance de manière purement hydrostatique comme dans le premier domaine de marche avant et dans le domaine de marche arrière rapide seulement un étage de train planétaire (5) est relié cinématiquement à l'arbre de sortie, un élément (porte-satellites 28) du second train planétaire (5) étant relié au carter par un embrayage (27) et un autre élément (30) étant relié cinématiquement à l'arbre intermédiaire (40) et à l'arbre de sortie (2) par un embrayage (19) en prise dans cette configuration. (Figure 2)

23. Transmission à division de puissance selon l'une ou plusieurs des revendications 1 à 22,
**caractérisée en ce que** dans la transmission d'après la figure 13, le second train planétaire (205; 305) est directement relié à l'arbre de sortie (2) par un élément (couronne 30; 135), où, pour assurer une grande réduction de vitesses nécessaire pour le premier domaine de vitesses avant et arrière le second train planétaire (205) comprend des satellites étagés, deux pignons de satellite (128 et 129) étant fixés l'un à l'autre et supportés en rotation sur un porte-satellites (28) commun et le pignon solaire (29) relié à la seconde unité hydrostatique (B) engrène avec les premiers pignons des satellites (128) et la couronne (30) reliée à l'arbre de sortie (2) engrène avec les seconds pignons des satellites (129) et le porte-satellites (28) commun peut être relié au carter par un embrayage (27) dans le premier domaine de vitesses avant et arrière ou en ce que le second train planétaire (305) comprend deux étages de trains planétaires, où le pignon solaire (131) du premier train planétaire est relié à la seconde unité hydrostatique (B), la couronne (132) du premier planétaire est reliée au carter (20), le porte-satellites (133) du premier train planétaire est relié au pignon solaire (134) du second train planétaire et le porte-satellites (28) du second train planétaire peut être relié au carter par un embrayage (27) et la couronne (135) est reliée à l'arbre de sortie,
en ce que dans le premier domaine de vitesses avant le porte-satellites (28) du train planétaire (205 et 305) est relié au carter par un embrayage (27) de passage, où dans le premier domaine de vitesses avant et arrière la puissance est transmise à l'arbre de sortie (2) dans un mode purement hydrostatique,
en ce que dans le second domaine de vitesses la somme des puissances hydraulique et mécanique est transmise à l'arbre de sortie (2) par le premier arbre mené (13) du train planétaire sommateur et par un troisième train planétaire (6), un élément (couronne 34) du troisième train planétaire (6) étant relié au carter par un embrayage (31),
en ce que dans le troisième domaine de vitesses la somme des puissances hydraulique et mécanique est transmise à l'arbre de sortie (2) par le second arbre mené (14) du train planétaire sommateur et par un autre train planétaire (122), la couronne (125) dudit train planétaire étant reliée au carter par un embrayage (126),
en ce que dans le quatrième domaine de vitesses l'arbre de sortie (2) est relié directement au premier arbre (13) du train planétaire sommateur par un embrayage (19) en prise,
en ce que dans le cinquième domaine de vitesses le second arbre (14) est relié directement à l'arbre de sortie (2) par un embrayage (35) en prise,
en ce qu'en option un autre embrayage (127) est prévu, pour relier directement l'arbre de sortie (2) à la seconde unité hydrostatique (B) pour établir un domaine de vitesses rapides arrière purement hydrostatique. (Figure 13)

24. Transmission à division de puissance selon l'une ou plusieurs des revendications 1 à 23,
**caractérisée en ce que** le train planétaire sommateur (4) comprend deux couronnes (41 et 42) et un pignon solaire (45), où le porte-satellites (40) est relié à l'arbre mené (11) et supporte des premiers satellites (43) et des seconds satellites (44) engrènés, où la première couronne (42), représentant le quatrième arbre (14) du train planétaire sommateur engrène avec les premiers satellites (43) et la seconde couronne (41), reliée au troisième arbre (13) engrène avec les seconds satellites (44) et en ce que le second arbre (12) du train planétaire sommateur est relié au pignon solaire (45), qui entraîne les premiers satellites (43).

25. Transmission à division de puissance selon l'une ou plusieurs des revendications 1 à 24,
**caractérisée en ce que** le train planétaire sommateur (104) comprend une couronne (52) et deux pignons solaires (45 et 51) et un porte-satellites (50) supporte des satellites (53 et 54) engrènés, où le premier arbre (11) du train planétaire sommateur est relié à la couronne (52), le second arbre (12) au pignon solaire (45), engrènant avec les premiers satellites (53), le troisième arbre du train planétaire sommateur représente le porte-satellites (50) et le pignon solaire (51), le quatrième arbre (14) est cinématiquement relié aux seconds satellites (54).

26. Transmission à division de puissance selon l'une ou plusieurs des revendications 1 à 25,
**caractérisée en ce que** le train planétaire sommateur (204) comprend deux étages d'engrenages droits, où le premier arbre (11) du train planétaire sommateur est relié à la couronne (9) du premier étage de train planétaire et le porte-satellites (7) du second étage de train planétaire et le second arbre (12) est relié au pignons solaires (17 et 18) des deux trains planétaires, le troisième arbre est formé par le porte-satellites (16) du premier étage de train planétaire et la couronne (8) du second étage de train planétaire est accouplée au quatrième arbre (14).

27. Transmission à division de puissance selon l'une ou plusieurs des revendications 1 à 26,
**caractérisée en ce que** le second train planétaire sommateur (105) (selon les figures 4, 5, 6 et 7) comprend deux étages, où le premier étage de train planétaire est relié au second arbre (12) du train planétaire sommateur par un pignon solaire (64) et à la seconde unité hydrostatique (B), le porte-satellites (61) est relié au carter et les deux couronnes (62 et 63) sont fixées ensemble et le pignon solaire (65) du second étage de train planétaire est relié au troisième arbre (13) du train planétaire sommateur et le porte-satellites (66) du second étage de train planétaire peut être relié à l'élément commun d'embrayages (10) par un embrayage (57).

28. Transmission à division de puissance selon l'une ou plusieurs des revendications 1 à 27,
**caractérisée en ce que** le paquet d'embrayages (70) est agencé en un embrayage quadruple, où respectivement deux embrayages sont agencés concentriquement et l'embrayage (57) du premier domaine est agencé à l'extérieur de l'embrayage (58) du second domaine et l'embrayage (60) pour le quatrième domaine de vitesses est agencé à l'extérieur de l'embrayage (59) pour le troisième domaine de vitesses (figure 6 et 7).

29. Transmission à division de puissance selon l'une ou plusieurs des revendications 1 à 28,
**caractérisée en ce que** le troisième arbre du train planétaire sommateur (104) comprend deux arbres (15 et 13), où un arbre (13) peut être relié à l'élément commun d'embrayages (10) et l'autre arbre (15) peut être relié à l'arbre de sortie (2).

30. Transmission à division de puissance selon l'une ou plusieurs des revendications 1 à 29,
**caractérisée en ce que** la transmission (selon le mode de réalisation de la figure 3) est une transmission multiple comprenant deux caractéristiques différentes de marche arrière de manière à enclencher un premier domaine de vitesses arrière hydrostatique par un embrayage (27) reliant le porte-satellites (28) du second train planétaire (5) au carter, un élément (34, resp. 68) du troisième train planétaire à quatre arbres (106; 206) étant lié par un embrayage de passage (34, 67), ou de manière à enclencher trois domaines de marche arrière, un autre élément (46, resp. 68) du train planétaire à quatre arbres (106; 206) étant relié au carter par un embrayage (37, resp. 67), ce qui inverse la direction de rotation d'entrée de l'élément commun d'embrayages (10) vers l'arbre de sortie (2) dans le premier, second et troisième domaine de vitesses.

31. Transmission à division de puissance selon l'une ou plusieurs des revendications 1 à 30,
**caractérisée en ce que** la transmission est agencée sans le second train planétaire (5) (semblable à la figure 3), où un des embrayages (23) de gamme ou l'embrayage (31) est agencé en embrayage à friction pour freiner un élément (34) du troisième train planétaire à quatre arbres (106; 206) et pour le domaine de marche arrière un autre élément (46, resp. 68) du troisième train planétaire à quatre arbres (106; 206) peut être relié au carter par un embrayage à friction ou frein (37 resp. 67).

32. Transmission à division de puissance selon l'une ou plusieurs des revendications 1 à 31,
**caractérisée en ce que** le train planétaire sommateur (4; 104; 204), le second train planétaire (5; 105), le paquet d'embrayages (21; 71), le troisième train planétaire (6; 106, 206) et le second paquet d'embrayages (19; 22) sont agencés dans cet ordre coaxialement un derrière l'autre.

33. Transmission à division de puissance selon l'une ou plusieurs des revendications 1 à 32,
**caractérisée en ce que** la transmission hydrostatique (3) est agencée avec un décalage axial par rapport aux sous-ensembles, train planétaire sommateur (104; 204; 304; 404), second train planétaire (5; 105), premier paquet d'embrayages (21; 71; 139; 704), troisième train planétaire (6; 106, 206; 122), où le premier et le second arbre (11 et 12) sont respectivement reliés à la première unité hydrostatique (A) et à la seconde unité hydrostatique (B) par un étage réducteur (75; 76; 77) (figure 9).

34. Transmission à division de puissance selon l'une ou plusieurs des revendications 1 à 33,
**caractérisée en ce que** les embrayages de gamme (23, 24; 91, 92) pour le premier et second, resp. second et troisième domaine de vitesses et les embrayages (19, 35) pour les domaines de vitesses plus élevés sont rassemblés respectivement dans un paquet d'embrayages ou les embrayages (57, 58, 59, 66) pour le premier, second, troisième et quatrième domaine de vitesses sont rassemblés en un paquet commun d'embrayages (70).

35. Transmission à division de puissance selon l'une ou plusieurs des revendications 1 à 28,
**caractérisée en ce que** les embrayages (19, 35) pour le domaine de vitesses plus élevé sont agencés en aval du troisième train planétaire et l'alimentation en huile sous pression traverse de préférence un élément commun d'embrayages relié à l'arbre de sortie (2).

36. Transmission à division de puissance selon l'une ou plusieurs des revendications 1 à 35,
**caractérisée en ce que** le train planétaire sommateur (304) comprend deux étages de trains planétaires, où le premier arbre (11) du train planétaire sommateur est relié au porte-satellites (146) du premier étage de train planétaire et à la couronne (150) du second étage de train planétaire, en ce que le second arbre (12) du train planétaire sommateur est relié au pignon solaire (45) du second train planétaire, le troisième arbre (13) du train planétaire sommateur est relié au porte-satellites (149) du second train planétaire et à la couronne (148) du premier train planétaire et le quatrième arbre (14) du train planétaire sommateur est relié au pignon solaire (147) du premier train planétaire (figure 14).

37. Transmission à division de puissance selon l'une ou plusieurs des revendications 1 à 36,
**caractérisée en ce que** le train planétaire sommateur (504) comprend deux étages de trains planétaires, où le premier étage de train planétaire comporte des premiers satellites (99) et des seconds satellites (100) engrènés et le premier arbre (11) du train planétaire sommateur est relié à la couronne (93) du premier train planétaire et à la couronne (94) du second train planétaire et le second arbre (12) du train planétaire sommateur est relié au pignon solaire (95) du second train planétaire, le troisième arbre (50) du train planétaire sommateur constitue l'arbre porte-satellites (97) des deux trains planétaires et le quatrième arbre (84) est relié au pignon solaire (98) du premier train planétaire (figure 10).

38. Transmission à division de puissance selon l'une ou plusieurs des revendications 1 à 37,
**caractérisée en ce que** le troisième train planétaire (306) comprend un seul étage de train planétaire et est commutable pour passer en marche arrière et en marche avant, où l'arbre menant représente l'arbre intermédiaire ou l'arbre porte-embrayages (10) et est relié au pignon solaire (32), l'arbre porte-satellites (33) peut être relié au carter (20) par un embrayage (67) ou en ce que l'arbre porte-satellites (33) peut être relié à l'arbre de sortie par un autre embrayage (152), en ce que la couronne (34) du train planétaire peut être reliée au carter par un embrayage (31) ou à l'arbre de sortie (2) par un autre embrayage (151).

39. Transmission à division de puissance selon l'une ou plusieurs des revendications 1 à 38,
**caractérisée en ce que** le train planétaire sommateur (804) comprend cinq arbres et deux unités de trains planétaires et la première unité de train planétaire comprend des premiers et des seconds satellites (155 et 154) engrènés supportés sur un porte-satellites (153) relié au premier arbre ou arbre menant (11), en ce que le second arbre ou arbre menant (12) est relié au pignon solaire (170) engrènant avec les premiers satellites (155) et à une couronne (158) du second train planétaire, en ce que le troisième arbre ou premier arbre mené (160) est relié au porte-satellites du second train planétaire, le quatrième arbre ou second arbre mené du train planétaire sommateur est relié au pignon solaire (159) du second train planétaire et à une couronne (156) engrènant avec les premiers satellites (155) et en ce que le cinquième arbre ou troisième arbre mené (85) est relié à une couronne (157) engrènant avec les seconds satellites (154) (figure 16a).

40. Transmission à division de puissance selon l'une ou plusieurs des revendications 1 à 39,
**caractérisée en ce que** le train planétaire sommateur (904) comprend cinq arbres et une première et une seconde unité de train planétaire, où la seconde unité de train planétaire comprend des premiers satellites (166) et des seconds satellites (167) engrènés et le premier arbre (11) est relié à la couronne (163) du premier train planétaire, le second arbre (12) est relié au pignon solaire (161) du premier train planétaire et à une couronne (165) engrènant avec les seconds satellites (167), en ce que le troisième arbre ou premier arbre mené (83) représente le porte-satellites (169) pour les paires de satellites engrènés (166 et 167), en ce que le quatrième arbre ou second arbre mené (84) est relié à un pignon solaire (168) engrènant avec les seconds satellites (167), en ce que le cinquième arbre du train planétaire sommateur ou troisième arbre mené (85) est cinématiquement relié au porte-satellites (162) du premier train planétaire et à une couronne (164) engrènant avec les premiers satellites (166).

41. Transmission à division de puissance selon le préambule de la revendication 1,
**caractérisée en ce que**
la transmission comprend au maximum deux unités de trains planétaires, notamment un train planétaire (104; 204; 304) à quatre arbres et un autre train planétaire (106; 206; 306), où quatre domaines de marche avant et deux domaines de marche arrière peuvent être enclenchés et dans le premier et le second domaine de marche avant le second arbre (13) et le quatrième arbre (14) ou peuvent être alternativement reliés au train planétaire aval (106; 206) par des embrayages (23 et 24) de passage, en ce que dans le troisième et le quatrième domaine de vitesses, le troisième arbre (50, 5, 15) et le quatrième arbre (14) du train planétaire sommateur peuvent être alternativement reliés directement à l'arbre de sortie par des embrayages (23 et 24), en ce que les deux domaines de marche arrière peuvent être enclenchés de la même manière que les deux domaines de marche avant par les embrayages (23 et 24), par le troisième et par le quatrième arbre (13, 14) du train planétaire sommateur, où un élément du train planétaire aval (106; 206; 306) peut être relié au carter par un embrayage (31) en marche avant et en ce qu'un autre élément du train planétaire (206; 106) à quatre arbres peut être relié au carter par un autre embrayage (67) en marche arrière et en ce que le premier domaine de marche avant et le premier domaine de marche arrière comportent un écart de réduction (figure 3a).

42. Transmission à division de puissance selon l'une ou plusieurs des revendications 1 à 41,
**caractérisée en ce que** le train planétaire (306) cinématiquement relié à l'arbre porte-embrayages (10) est commutable en bloc en reliant ensemble deux éléments (33, 34) du train planétaire par au moins un embrayage (151, 152) dans au moins un domaine de vitesses et la puissance est transmise par l'arbre porte-embrayages (10) et le train planétaire (306) formant un bloc à l'arbre de sortie (2).

43. Transmission à division de puissance selon l'une ou plusieurs des revendications 1 à 42,
**caractérisée en ce qu'**une unité de train planétaire (406) comprend un premier étage d'engrenages droits (171) et un second étage d'engrenages droits (172) avec un pignon inverseur (174), qui peuvent être reliés alternativement à l'arbre de sortie (2) et à un arbre intermédiaire ou arbre porte-embrayages (10) par des embrayages (175 et 176).
